# EUROPEAN PATENT APPLICATION

(11) **EP 4 478 321 A1**
(43) Date of publication of application: **18.12.2024**
(21) Application number: 24181694.1
(22) Date of filing: 12.06.2024
(51) Int. Cl.: G08G 1/00

(54) **METHOD TO DETECT AND MANAGE SITUATIONS WHERE A LARGE VEHICLE MAY HIT A VEHICLE WHEN TURNING**

(30) Priority: 15.06.2023 US 202318335318
(71) Applicant: Volvo Car Corporation, 405 31 Göteborg (SE)
(72) Inventor: PEREZ BARRERA, Oswaldo, 40531 Göteborg (SE)
(74) Representative: Maiwald GmbH

(57) **Abstract**

An embodiment related to a system (440), wherein the system (440) is operable to: detect an intersection and a target vehicle near the intersection (402); determine a current location of a host vehicle and the target vehicle (404); detect a target turn lane (406); estimate parameters of the target vehicle, wherein the parameters of the target vehicle comprise a vehicle type, a vehicle model, a steering angle, and a turn radius (408); predict a trajectory of motion of the target vehicle (410); establish a boundary for an impact zone by the host vehicle (412); and determine a collision avoidance action for the host vehicle to avoid the impact zone (414).

## Description

### FIELD OF THE INVENTION

The present disclosure relates generally to the vehicle safety field. More specifically, the present disclosure pertains to techniques and approaches for identifying the presence of large automobiles in the vicinity and managing the circumstances where there may be a risk of collision when such large vehicles make a turn near intersections.

### BACKGROUND

There are several problems that may arise when large vehicles, such as trucks, buses, semitrailers etc., need to make a turn. Some of the issues include limited maneuverability, blind spots, traffic disruption, infrastructure damage, and safety concerns. Large vehicles hitting other vehicles when turning is not new; however, there is a need for the Autonomous Vehicle (AV) to prevent such incidents.

Therefore, there is a need for a system and method that will detect and monitor large vehicles in real-time and provide suggestions to the vehicles and/or to the driver of the vehicle, when there is a collision risk.

### SUMMARY

The following presents a summary to provide a basic understanding of one or more embodiments described herein. This summary is not intended to identify key or critical elements or delineate any scope of the different embodiments and/or any scope of the claims. The sole purpose of the summary is to present some concepts in a simplified form as a prelude to the more detailed description presented herein.

According to an embodiment, it is system, comprising, a processor, a computer vision module, and a control module; wherein the system is operable to detect, by the processor, an intersection, and a target vehicle near the intersection; determine, by the processor, a current location of a host vehicle and a current location of the target vehicle; detect, by the computer vision module, a target turn lane; estimate, by the processor via the computer vision module, parameters of the target vehicle, wherein the parameters of the target vehicle comprise a vehicle type, a vehicle model, a steering angle, and a turn radius; predict, by the processor, a trajectory of motion of the target vehicle; determine, by the processor, a boundary for an impact zone by the host vehicle; and determine, by the processor, a collision avoidance action to avoid the impact zone.

According to an embodiment, it is a method comprising, detecting, by a processor of a host vehicle, an intersection, and a target vehicle near the intersection; determining, by the processor, a current location of the host vehicle and the current location of the target vehicle; detecting, by a computer vision module, a target turn lane; estimating, by the processor, parameters of the target vehicle, wherein the parameters of the target vehicle comprise a vehicle type, a vehicle model, a steering angle, and a turn radius; predicting, by the processor, a trajectory of motion of the target vehicle; determining, by the processor, a boundary for an impact zone to avoid; and determining, by the processor, a collision avoidance action to avoid the impact zone.

According to an embodiment, it is a non-transitory computer-readable medium having stored thereon instructions executable by a computer system to perform operations comprising: detecting, by a processor of a host vehicle, an intersection, and a target vehicle near the intersection; determining, by the processor, a current location of the host vehicle and the current location of the target vehicle; detecting, by a computer vision module, a target turn lane; estimating, by the processor, parameters of the target vehicle, wherein the parameters of the target vehicle comprise a vehicle type, a vehicle model, a steering angle, and a turn radius; predicting, by the processor, a trajectory of motion of the target vehicle; determining, by the processor, a boundary for an impact zone to avoid; and determining, by the processor, a collision avoidance action to avoid the impact zone.

According to an embodiment, it is a system, comprising: a processor, a computer vision module, a control module, and a communication module; wherein the system is operable to detect, by the processor, a target vehicle nearing an intersection; detect, by a computer vision system, a target turn lane; establish, by the processor, a communication via the communication module with the target vehicle; receive, by the processor, parameters of the target vehicle, wherein the parameters of the target vehicle comprise a vehicle type, a vehicle model, a steering angle, and a turn radius; determine, by the processor, a current location of a host vehicle and the current location of the target vehicle; predict, by the processor, a trajectory of motion of the target vehicle; determine, by the processor, a boundary for an impact zone to avoid by the host vehicle; and determine, by the processor, a collision avoidance action for the host vehicle to avoid the impact zone.

According to an embodiment, it is a method comprising: detecting, by a processor, a target vehicle nearing an intersection; detecting, by a computer vision module, a target turn lane; establishing, by the processor, a communication via a communication module with the target vehicle; receiving, by the processor, parameters of the target vehicle, wherein the parameters of the target vehicle comprise a vehicle type, a vehicle model, a steering angle, and a turn radius; determining, by the processor, a current location of a host vehicle and the current location of the target vehicle; predicting a trajectory of motion of the target vehicle, by the processor; determining, by the processor, a boundary for an impact zone by the host vehicle; and determining, by the processor, a collision avoidance action for the host vehicle to avoid the impact zone.

According to an embodiment, it is a method comprising detecting, by a processor of an autonomous vehicle, a large vehicle nearing an intersection; establishing, by the processor of the autonomous vehicle, a communication with the large vehicle; receiving, by the processor of the autonomous vehicle, a model number, a vehicle type, and a turning radius of the large vehicle in real-time; computing, by the processor of the autonomous vehicle, using a computer vision algorithm and based on the turning radius, an impact zone of the large vehicle while navigating a turn; determining, by the processor of the autonomous vehicle, a current location of the autonomous vehicle; mapping, by the processor of the autonomous vehicle, the current location of the autonomous vehicle and the impact zone to determine a probability of collision; and performing an action, by the processor of the autonomous vehicle, wherein the action comprises at least one of: generating an alert in the autonomous vehicle; initiating a first reverse movement by the autonomous vehicle; initiating a first lane change by the autonomous vehicle; maintaining the current location of the autonomous vehicle; alerting the large vehicle, the impact zone, the current location of the autonomous vehicle and the probability of collision; and broadcasting, a message to a neighboring vehicle, wherein the message comprises the impact zone, the probability of collision, and an instruction for the neighboring vehicle to at least one of a second lane change, maintaining lane, and a second reverse movement to clear the impact zone for a collective and coordinated action; and wherein the method is operable for predicting the impact zone for the large vehicle taking the turn and performing the action for avoiding a collision.

### BRIEF DESCRIPTION OF THE FIGURES

These and other aspects of the present invention will now be described in more detail, with reference to the appended drawings showing exemplary embodiments of the present invention, in which:
FIG. 1 is an illustration of an example autonomous vehicle with various sensors, actuators, and systems according to an embodiment.
FIG. 2 shows a block diagram of electronic components of a vehicle according to an embodiment.
FIG. 3A shows large vehicles carrying load and trying to maneuver according to an embodiment.
FIG. 3B shows a vehicle at an intersection getting hit when a large vehicle is taking a turn according to an embodiment.
FIG. 4A shows a block diagram of a method to detect an effect of large vehicles turning into a lane according to an embodiment.
FIG. 4B shows a block diagram of a system to detect an effect of large vehicles turning into a lane according to an embodiment.
FIG. 4C shows a block diagram of a non-transitory computer-readable medium to perform operations so as to detect an effect of large vehicles turning into a lane according to an embodiment.
FIG. 5A is a process flow diagram of a method for identifying and classifying one or more objects according to an embodiment of the invention.
FIG. 5B shows an illustrated example of an image of a vehicle with bounding boxes around various regions of interest of identified objects, according to an embodiment.
FIG. 5C shows an illustrated example of an image of a vehicle with a 3D bounding box around various regions of interest of identified objects, according to an embodiment.
FIG. 5D shows an illustrated example of the surrounding environment of a vehicle that includes bounding boxes, according to an embodiment.
FIG. 5E shows an illustrated example of a vehicle including bounding boxes around the region of interest in combination with edge detection according to an embodiment.
FIG. 5F illustrates a block diagram of a lane detection system according to an embodiment.
FIG. 5G illustrates an example method for real-time image-based turn signal detection, according to an embodiment.
FIG. 5H shows a method to estimate the future heading of a vehicle based on estimated steering angle.
FIG. 5I shows a method to estimate the turn trajectory and computing the impact zone, according to an embodiment.
FIG. 5J shows a method to estimate the turn trajectory of a vehicle with a pivot joint and computing the impact zone according to an embodiment.
FIG. 5K shows a trajectory of a semitrailer impacting a stationary vehicle in the path of rear trailer axle according to an embodiment.
FIG. 5L shows a trajectory of a semitrailer, impact zone and safe zone according to an embodiment.
FIG. 6A shows a method for detecting a large vehicle taking a turn will impact the vehicle and taking an action by the autonomous vehicle.
FIG. 6B shows the large vehicle broadcasting a message to the vehicles that may get impacted during turn.
FIG. 7A shows a block diagram of a method to detect an effect of large vehicles turning into a lane according to an embodiment.
FIG. 7B shows a block diagram of a system to detect an effect of large vehicles turning into a lane according to an embodiment.
FIG. 8A shows example messages in Dedicated Short-Range Communications (DSRC) message format.
FIG. 8B shows an example message from the host vehicle to neighboring vehicles according to an embodiment.
FIG. 8C shows an example message from the host vehicle to the target vehicle according to an embodiment.
FIG. 8D shows an example message from the target vehicle to host vehicles according to an embodiment.
FIG. 8E shows an example alert message displayed in the host vehicle according to an embodiment.
FIG. 9A shows a structure of the neural network / machine learning model with a feedback loop according to an embodiment.
FIG. 9B shows a structure of the neural network / machine learning model with reinforcement learning according to an embodiment.
FIG. 9C shows an example block diagram for detecting a collision event using a machine learning model according to an embodiment.
FIG. 10 shows an example flow chart for detecting a collision event using a machine learning model according to an embodiment.
FIG. 11A shows a block diagram of the cyber security module in view of the system and server according to an embodiment.
FIG. 11B shows an embodiment of the cyber security module according to an embodiment of the system.
FIG. 11C shows another embodiment of the cyber security module according to an embodiment of the system.
FIG. 12A shows an autonomous vehicle stopping at an intersection and detecting whether an autonomous vehicle is the closest to intersection according to an embodiment.
FIG. 12B shows an autonomous vehicle stopping at an intersection and detecting whether vehicles in other lanes are incorporated in the opposite direction to the lane in which an autonomous vehicle is present according to an embodiment.
FIG. 12C shows an autonomous vehicle stopping at an intersection and detecting whether vehicles in other lanes are incorporated in the opposite direction to the lane in which an autonomous vehicle is present according to an embodiment.
FIG. 12D shows an autonomous vehicle stopping at an intersection and detecting the vehicle's license board in other lanes present according to an embodiment.
FIG. 12E shows an autonomous vehicle stopping at an intersection and detecting the vehicle's license board in other lanes present according to an embodiment.
FIG. 12F shows an autonomous vehicle stopping at an intersection and detecting the vehicle's signal lights in other lanes present according to an embodiment.
FIG. 12G shows an autonomous vehicle stopping at an intersection and performing face detection to predict a turning direction according to an embodiment.
FIG. 12H shows an autonomous vehicle stopping at an intersection and performing face detection to predict a turning direction according to an embodiment.
FIG. 12I shows an autonomous vehicle stopping at an intersection and establishing communication with the large vehicle to predict a turning direction according to an embodiment.
FIG. 12J shows an autonomous vehicle computing a turning direction according to an embodiment.
FIG. 12K shows an autonomous vehicle using a bounding box method to extract a lower edge of the large vehicle to predict a turning direction according to an embodiment.
FIG. 12L shows an autonomous vehicle, extracting a point along the lower edge of the large vehicle to map a turn radius according to an embodiment.
FIG. 12M shows an imaginary turn radius mapped a turn radius according to an embodiment.
FIG. 12N shows turn radius variations according to the steering angle of the large vehicle according to an embodiment.
FIG. 12O shows mapping current location of the autonomous vehicle along with the turn radius according to the steering angle of the large vehicle to detect safe areas according to an embodiment.
FIG. 12P shows the autonomous vehicle moving inside the safe area according to an embodiment.
FIG. 12Q shows the autonomous vehicle moving inside the safe area according to an embodiment.
FIG. 12R shows the autonomous vehicle communicating with the large vehicle about the impending collision due to the turning radius of the large vehicle according to an embodiment.
FIG. 13 shows computation of turn radius of a trailer truck according to an embodiment.
FIG. 14A shows the safe area for the autonomous vehicle while the large vehicle is taking a turn according to an embodiment.
FIG. 14B shows the safe area for the autonomous vehicle for zero steering angle while the large vehicle is taking a turn according to an embodiment.
FIG. 14C shows the safe area for the autonomous vehicle for a steering angle while the large vehicle is taking a turn according to an embodiment.
FIG. 14D shows the safe area for the autonomous vehicle for a steering angle while the large vehicle is taking a turn according to an embodiment.
FIG. 14E shows the safe area for the autonomous vehicle for maximum steering angle while the large vehicle is taking a turn according to an embodiment.
FIG. 14F shows the autonomous vehicle moving to the safe area according to an embodiment.
FIG. 14G shows the safe area for the autonomous vehicle for maximum steering angle while the large vehicle is taking a turn according to an embodiment.
FIG. 14H shows the safe area for the autonomous vehicle for maximum steering angle while the large vehicle is taking a turn according to an embodiment.
FIG. 14I shows the safe area for the autonomous vehicle for decreasing steering angle while the large vehicle while incorporating into the lane according to an embodiment.

### DETAILED DESCRIPTION

For simplicity and clarity of illustration, the figures illustrate the general manner of construction. The description and figures may omit the descriptions and details of well-known features and techniques to avoid unnecessarily obscuring the present disclosure. The figures exaggerate the dimensions of some of the elements relative to other elements to help improve understanding of embodiments of the present disclosure. The same reference numeral in different figures denotes the same element.

Although herein the detailed description contains many specifics for the purpose of illustration, a person of ordinary skill in the art will appreciate that many variations and alterations to the details are considered to be included herein.

Accordingly, the embodiments herein are without any loss of generality to, and without imposing limitations upon, any claims set forth. The terminology used herein is for the purpose of describing particular embodiments only and is not limiting. Unless defined otherwise, all technical and scientific terms used herein have the same meaning as commonly understood by one with ordinary skill in the art to which this disclosure belongs.

As used herein, the articles "a" and "an" used herein refer to one or to more than one (i.e., to at least one) of the grammatical object of the article. By way of example, "an element" means one element or more than one element. Moreover, usage of articles "a" and "an" in the subject specification and annexed drawings construe to mean "one or more" unless specified otherwise or clear from context to mean a singular form.

As used herein, the terms "example" and/or "exemplary" mean serving as an example, instance, or illustration. For the avoidance of doubt, such examples do not limit the herein described subject matter. In addition, any aspect or design described herein as an "example" and/or "exemplary" is not necessarily preferred or advantageous over other aspects or designs, nor does it preclude equivalent exemplary structures and techniques known to those of ordinary skill in the art.

As used herein, the terms "first," "second," "third," and the like in the description and in the claims, if any, distinguish between similar elements and do not necessarily describe a particular sequence or chronological order. The terms are interchangeable under appropriate circumstances such that the embodiments herein are, for example, capable of operation in sequences other than those illustrated or otherwise described herein. Furthermore, the terms "include," "have," and any variations thereof, cover a non-exclusive inclusion such that a process, method, system, article, device, or apparatus that comprises a list of elements is not necessarily limiting to those elements, but may include other elements not expressly listed or inherent to such process, method, system, article, device, or apparatus.

As used herein, the terms "left," "right," "front," "back," "top," "bottom," "over," "under" and the like in the description and in the claims, if any, are for descriptive purposes and not necessarily for describing permanent relative positions. The terms so used are interchangeable under appropriate circumstances such that the embodiments of the apparatus, methods, and/or articles of manufacture described herein are, for example, capable of operation in other orientations than those illustrated or otherwise described herein.

No element act, or instruction used herein is critical or essential unless explicitly described as such. Furthermore, the term "set" includes items (e.g., related items, unrelated items, a combination of related items and unrelated items, etc.) and may be interchangeable with "one or more". Where only one item is intended, the term "one" or similar language is used. Also, the terms "has," "have," "having," or the like are open-ended terms. Further, the phrase "based on" means "based, at least in part, on" unless explicitly stated otherwise.

As used herein, the terms "system," "device," "unit," and/or "module" refer to a different component, component portion, or component of the various levels of the order. However, other expressions that achieve the same purpose may replace the terms.

As used herein, the terms "couple," "coupled," "couples," "coupling," and the like refer to connecting two or more elements mechanically, electrically, and/or otherwise. Two or more electrical elements may be electrically coupled together, but not mechanically or otherwise coupled together. Coupling may be for any length of time, e.g., permanent, or semi-permanent or only for an instant. "Electrical coupling" includes electrical coupling of all types. The absence of the word "removably," "removable," and the like, near the word "coupled" and the like does not mean that the coupling, etc. in question is or is not removable.

As used herein, the term "or" means an inclusive "or" rather than an exclusive "or." That is, unless specified otherwise, or clear from context, "X employs A or B" means any of the natural inclusive permutations. That is, if X employs A; X employs B; or X employs both A and B, then "X employs A or B" is satisfied under any of the foregoing instances.

As used herein, two or more elements or modules are "integral" or "integrated" if they operate functionally together. Two or more elements are "non-integral" if each element can operate functionally independently.

As used herein, the term "real-time" refers to operations conducted as soon as practically possible upon occurrence of a triggering event. A triggering event can include receipt of data necessary to execute a task or to otherwise process information. Because of delays inherent in transmission and/or in computing speeds, the term "real-time" encompasses operations that occur in "near" real-time or somewhat delayed from a triggering event. In a number of embodiments, "real-time" can mean real-time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As used herein, the term "approximately" can mean within a specified or unspecified range of the specified or unspecified stated value. In some embodiments, "approximately" can mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.

Other specific forms may embody the present invention without departing from its spirit or characteristics. The described embodiments are in all respects illustrative and not restrictive. Therefore, the appended claims rather than the description herein indicate the scope of the invention. All variations which come within the meaning and range of equivalency of the claims are within their scope.

As used herein, the term "component" broadly construes hardware, firmware, and/or a combination of hardware, firmware, and software.

Digital electronic circuitry, or in computer software, firmware, or hardware, including the structures disclosed in this specification and their structural equivalents, or in combinations of one or more of them may realize the implementations and all of the functional operations described in this specification. Implementations may be as one or more computer program products i.e., one or more modules of computer program instructions encoded on a computer-readable medium for execution by, or to control the operation of, data processing apparatus. The computer-readable medium may be a machine-readable storage device, a machine-readable storage substrate, a memory device, a composition of matter affecting a machine-readable propagated signal, or a combination of one or more of them. The term "computing system" encompasses all apparatus, devices, and machines for processing data, including by way of example, a programmable processor, a computer, or multiple processors or computers. The apparatus may include, in addition to hardware, code that creates an execution environment for the computer program in question, e.g., code that constitutes processor firmware, a protocol stack, a database management system, an operating system, or a combination of one or more of them. A propagated signal is an artificially generated signal (e.g., a machine-generated electrical, optical, or electromagnetic signal) that encodes information for transmission to a suitable receiver apparatus.

The actual specialized control hardware or software code used to implement these systems and/or methods is not limiting to the implementations. Thus, any software and any hardware can implement the systems and/or methods based on the description herein without reference to specific software code.

A computer program (also known as a program, software, software application, script, or code) is written in any appropriate form of programming language, including compiled or interpreted languages. Any appropriate form, including a standalone program or a module, component, subroutine, or other unit suitable for use in a computing environment may deploy it. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may execute on one computer or on multiple computers that are located at one site or distributed across multiple sites and interconnected by a communication network.

One or more programmable processors, executing one or more computer programs to perform functions by operating on input data and generating output, perform the processes and logic flows described in this specification. The processes and logic flows may also be performed by, and apparatus may also be implemented as, special purpose logic circuitry, for example, without limitation, a Field Programmable Gate Array (FPGA), an Application Specific Integrated Circuit (ASIC), Application Specific Standard Products (ASSPs), System-On-a-Chip (SOC) systems, Complex Programmable Logic Devices (CPLDs), etc.

Processors suitable for the execution of a computer program include, by way of example, both general and special purpose microprocessors, and any one or more processors of any appropriate kind of a digital computer. A processor will receive instructions and data from a read-only memory or a random-access memory or both. Elements of a computer can include a processor for performing instructions and one or more memory devices for storing instructions and data. A computer will also include, or is operatively coupled to receive data, transfer data or both, to/from one or more mass storage devices for storing data e.g., magnetic disks, magneto optical disks, optical disks, or solid-state disks. However, a computer need not have such devices. Moreover, another device, e.g., a mobile telephone, a personal digital assistant (PDA), a mobile audio player, a Global Positioning System (GPS) receiver, etc. may embed a computer. Computer-readable media suitable for storing computer program instructions and data include all forms of non-volatile memory, media and memory devices, including, by way of example, semiconductor memory devices (e.g., Erasable Programmable Read-Only Memory (EPROM), Electronically Erasable Programmable Read-Only Memory (EEPROM), and flash memory devices), magnetic disks (e.g., internal hard disks or removable disks), magneto optical disks (e.g. Compact Disc Read-Only Memory (CD ROM) disks, Digital Versatile Disk-Read-Only Memory (DVD-ROM) disks) and solid-state disks. Special purpose logic circuitry may supplement or incorporate the processor and the memory.

To provide for interaction with a user, a computer may have a display device, e.g., a Cathode Ray Tube (CRT) or Liquid Crystal Display (LCD) monitor, for displaying information to the user, and a keyboard and a pointing device, e.g., a mouse or a trackball, by which the user may provide input to the computer. Other kinds of devices provide for interaction with a user as well. For example, feedback to the user may be any appropriate form of sensory feedback, e.g., visual feedback, auditory feedback, or tactile feedback; and a computer may receive input from the user in any appropriate form, including acoustic, speech, or tactile input.

A computing system that includes a back-end component, e.g., a data server, or that includes a middleware component, e.g., an application server, or that includes a front-end component, e.g., a client computer having a graphical user interface or a Web browser through which a user may interact with an implementation, or any appropriate combination of one or more such back-end, middleware, or front-end components, may realize implementations described herein. Any appropriate form or medium of digital data communication, e.g., a communication network may interconnect the components of the system. Examples of communication networks include a Local Area Network (LAN) and a Wide Area Network (WAN), e.g., Intranet and Internet.

The computing system may include clients and servers. A client and server are remote from each other and typically interact through a communication network. The relationship of the client and server arises by virtue of computer programs running on the respective computers and having a client-server relationship with each other.

Embodiments of the present invention may comprise or utilize a special purpose or general purpose computer including computer hardware. Embodiments within the scope of the present invention may also include physical and other computer-readable media for carrying or storing computer-executable instructions and/or data structures. Such computer-readable media can be any media accessible by a general purpose or special purpose computer system. Computer-readable media that store computer-executable instructions are physical storage media. Computer-readable media that carry computer-executable instructions are transmission media. Thus, by way of example and not limitation, embodiments of the invention can comprise at least two distinct kinds of computer-readable media: physical computer-readable storage media and transmission computer-readable media.

Although the present embodiments described herein are with reference to specific example embodiments it will be evident that various modifications and changes may be made to these embodiments without departing from the broader spirit and scope of the various embodiments. For example, hardware circuitry (e.g., Complementary Metal Oxide Semiconductor (CMOS) based logic circuitry), firmware, software (e.g., embodied in a non-transitory machine-readable medium), or any combination of hardware, firmware, and software may enable and operate the various devices, units, and modules described herein. For example, transistors, logic gates, and electrical circuits (e.g., Application Specific Integrated Circuit (ASIC) and/or Digital Signal Processor (DSP) circuit) may embody the various electrical structures and methods.

In addition, a non-transitory machine-readable medium and/or a system may embody the various operations, processes, and methods disclosed herein. Accordingly, the specification and drawings are illustrative rather than restrictive.

Physical computer-readable storage media includes RAM, ROM, EEPROM, CD-ROM or other optical disk storage (such as CDs, DVDs, etc.), magnetic disk storage or other magnetic storage devices, solid-state disks or any other medium. They store desired program code in the form of computer-executable instructions or data structures which can be accessed by a general purpose or special purpose computer.

Further, upon reaching various computer system components, program code in the form of computer-executable instructions or data structures can be transferred automatically from transmission computer-readable media to physical computer-readable storage media (or vice versa). For example, computer-executable instructions or data structures received over a network or data link can be buffered in RAM within a Network Interface Module (NIC), and then eventually transferred to computer system RAM and/or to less volatile computer-readable physical storage media at a computer system. Thus, computer system components that also (or even primarily) utilize transmission media may include computer-readable physical storage media.

Computer-executable instructions comprise, for example, instructions and data which cause a general purpose computer, special purpose computer, or special purpose processing device to perform a certain function or group of functions. The computer-executable instructions may be, for example, binary, intermediate format instructions such as assembly language, or even source code. Although the subject matter herein described is in a language specific to structural features and/or methodological acts, the described features or acts described do not limit the subject matter defined in the claims. Rather, the herein described features and acts are example forms of implementing the claims.

While this specification contains many specifics, these do not construe as limitations on the scope of the disclosure or of the claims, but as descriptions of features specific to particular implementations. A single implementation may implement certain features described in this specification in the context of separate implementations. Conversely, multiple implementations separately or in any suitable sub-combination may implement various features described herein in the context of a single implementation. Moreover, although features described herein as acting in certain combinations and even initially claimed as such, one or more features from a claimed combination may in some cases be excised from the combination, and the claimed combination may be directed to a sub-combination or variation of a sub-combination.

Similarly, while operations depicted herein in the drawings in a particular order to achieve desired results, this should not be understood as requiring that such operations be performed in the particular order shown or in sequential order or that all illustrated operations be performed, to achieve desirable results. In certain circumstances, multitasking and parallel processing may be advantageous. Moreover, the separation of various system components in the implementations should not be understood as requiring such separation in all implementations, and it should be understood that the described program components and systems may be integrated together in a single software product or packaged into multiple software products.

Even though particular combinations of features are recited in the claims and/or disclosed in the specification, these combinations are not intended to limit the disclosure of possible implementations. Other implementations are within the scope of the claims. For example, the actions recited in the claims may be performed in a different order and still achieve desirable results. In fact, many of these features may be combined in ways not specifically recited in the claims and/or disclosed in the specification. Although each dependent claim may directly depend on only one claim, the disclosure of possible implementations includes each dependent claim in combination with every other claim in the claim set.

Further, a computer system including one or more processors and computer-readable media such as computer memory may practice the methods. In particular, one or more processors execute computer-executable instructions, stored in the computer memory, to perform various functions such as the acts recited in the embodiments.

Those skilled in the art will appreciate that the invention may be practiced in network computing environments with many types of computer system configurations including personal computers, desktop computers, laptop computers, message processors, hand-held devices, multiprocessor systems, microprocessor-based or programmable consumer electronics, network PCs, minicomputers, mainframe computers, mobile telephones, PDAs, pagers, routers, switches, etc. Distributed system environments where local and remote computer systems, which are linked (either by hardwired data links, wireless data links, or by a combination of hardwired and wireless data links) through a network, both perform tasks may also practice the invention. In a distributed system environment, program modules may be located in both local and remote memory storage devices.

The following terms and phrases, unless otherwise indicated, shall be understood to have the following meanings.

As used herein, the term "Cryptographic protocol" is also known as security protocol or encryption protocol. It is an abstract or concrete protocol that performs a security-related function and applies cryptographic methods often as sequences of cryptographic primitives. A protocol describes usage of algorithms. A sufficiently detailed protocol includes details about data structures and representations, to implement multiple, interoperable versions of a program.

Secure application-level data transport widely uses cryptographic protocols. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation.

Networking switches use cryptographic protocols, like Secure Socket Layer (SSL) and Transport Layer Security (TLS), the successor to SSL, to secure data communications over a wireless network.

As used herein, the term "Unauthorized access" is when someone gains access to a website, program, server, service, or other system using someone else's account or other methods. For example, if someone kept guessing a password or username for an account that was not theirs until they gained access, it is considered unauthorized access.

As used herein, the term "IoT" stands for Internet of Things which describes the network of physical objects "things" or objects embedded with sensors, software, and other technologies for the purpose of connecting and exchanging data with other devices and systems over the internet.

As used herein "Machine learning " refers to algorithms that give a computer the ability to learn without explicit programming, including algorithms that learn from and make predictions about data. Machine learning techniques include, but are not limited to, support vector machine, artificial neural network (ANN) (also referred to herein as a "neural net"), deep learning neural network, logistic regression, discriminant analysis, random forest, linear regression, rules-based machine learning, Naive Bayes, nearest neighbor, decision tree, decision tree learning, and hidden Markov, etc. For the purposes of clarity, part of a machine learning process can use algorithms such as linear regression or logistic regression. However, using linear regression or another algorithm as part of a machine learning process is distinct from performing a statistical analysis such as regression with a spreadsheet program. The machine learning process can continually learn and adjust the classifier as new data becomes available and does not rely on explicit or rules-based programming. The ANN may be featured with a feedback loop to adjust the system output dynamically as it learns from the new data as it becomes available. In machine learning, backpropagation and feedback loops are used to train the Artificial Intelligence/ Machine Learning (AI/ML) model improving the model's accuracy and performance over time.

Statistical modeling relies on finding relationships between variables (e.g., mathematical equations) to predict an outcome.

As used herein, the term "Data mining" is a process used to turn raw data into useful information.

As used herein, the term "Data acquisition" is the process of sampling signals that measure real world physical conditions and converting the resulting samples into digital numeric values that a computer manipulates. Data acquisition systems typically convert analog waveforms into digital values for processing. The components of data acquisition systems include sensors to convert physical parameters to electrical signals, signal conditioning circuitry to convert sensor signals into a form that can be converted to digital values, and analog-to-digital converters to convert conditioned sensor signals to digital values. Stand-alone data acquisition systems are often called data loggers.

As used herein, the term "Dashboard" is a type of interface that visualizes particular Key Performance Indicators (KPIs) for a specific goal or process. It is based on data visualization and infographics.

As used herein, a "Database" is a collection of organized information so that it can be easily accessed, managed, and updated. Computer databases typically contain aggregations of data records or files.

As used herein, the term "Data set" (or "Dataset") is a collection of data. In the case of tabular data, a data set corresponds to one or more database tables, where every column of a table represents a particular variable, and each row corresponds to a given record of the data set in question. The data set lists values for each of the variables, such as height and weight of an object, for each member of the data set. Each value is known as a datum. Data sets can also consist of a collection of documents or files.

As used herein, a "Sensor" is a device that measures physical input from its environment and converts it into data that is interpretable by either a human or a machine. Most sensors are electronic, which presents electronic data, but some are simpler, such as a glass thermometer, which presents visual data.

The term "infotainment system" or "in-vehicle infotainment system" (IVI) as used herein refers to a combination of vehicle systems which are used to deliver entertainment and information. In an example, the information may be delivered to the driver and the passengers of a vehicle/occupants through audio/ video interfaces, control elements like touch screen displays, button panel, voice commands, and more. Some of the main components of an in-vehicle infotainment systems are integrated head-unit, heads-up display, high-end Digital Signal Processors (DSPs), and Graphics Processing Units (GPUs) to support multiple displays, operating systems, Controller Area Network (CAN), Low-Voltage Differential Signaling (LVDS), and other network protocol support (as per the requirement), connectivity modules, automotive sensors integration, digital instrument cluster, etc.

The term "environment" or "surrounding" as used herein refers to surroundings and the space in which a vehicle is navigating. It refers to dynamic surroundings in which a vehicle is navigating which includes other vehicles, obstacles, pedestrians, lane boundaries, traffic signs and signals, speed limits, potholes, snow, water logging etc.

The term "autonomous mode" as used herein refers to an operating mode which is independent and unsupervised.

The term "vehicle" as used herein refers to a thing used for transporting people or goods. Automobiles, cars, trucks, buses etc. are examples of vehicles.

The term "autonomous vehicle" also referred to as self-driving vehicle, driverless vehicle, robotic vehicle as used herein refers to a vehicle incorporating vehicular automation, that is, a ground vehicle that can sense its environment and move safely with little or no human input. Self-driving vehicles combine a variety of sensors to perceive their surroundings, such as thermographic cameras, Radio Detection and Ranging (RADAR), Light Detection and Ranging (LIDAR), Sound Navigation and Ranging (SONAR), Global Positioning System (GPS), odometry and inertial measurement unit. Control systems, designed for the purpose, interpret sensor information to identify appropriate navigation paths, as well as obstacles and relevant signage.

The term "communication module" or "communication system" as used herein refers to a system which enables the information exchange between two points. The process of transmission and reception of information is called communication. The elements of communication include but are not limited to a transmitter of information, channel or medium of communication and a receiver of information.

The term "autonomous communication" as used herein comprises communication over a period with minimal supervision under different scenarios and is not solely or completely based on pre-coded scenarios or pre-coded rules or a predefined protocol. Autonomous communication, in general, happens in an independent and an unsupervised manner. In an embodiment, a communication module is enabled for autonomous communication.

The term "connection" as used herein refers to a communication link. It refers to a communication channel that connects two or more devices for the purpose of data transmission. It may refer to a physical transmission medium such as a wire, or to a logical connection over a multiplexed medium such as a radio channel in telecommunications and computer networks. A channel is used for the information transfer of, for example, a digital bit stream, from one or several senders to one or several receivers. A channel has a certain capacity for transmitting information, often measured by its bandwidth in Hertz (Hz) or its data rate in bits per second. For example, a Vehicle-to-Vehicle (V2V) communication may wirelessly exchange information about the speed, location and heading of surrounding vehicles.

The term "communication" as used herein refers to the transmission of information and/or data from one point to another. Communication may be by means of electromagnetic waves. Communication is also a flow of information from one point, known as the source, to another, the receiver. Communication comprises one of the following: transmitting data, instructions, information or a combination of data, instructions, and information. Communication happens between any two communication systems or communicating units. The term communication, herein, includes systems that combine other more specific types of communication, such as: V2I (Vehicle-to-Infrastructure), V2N (Vehicle-to-Network), V2V (Vehicle-to-Vehicle), V2P (Vehicle-to-Pedestrian), V2D (Vehicle-to-Device), V2G (Vehicle-to-Grid), and Vehicle-to-Everything (V2X) communication.

Further, the communication apparatus is configured on a computer with the communication function and is connected for bidirectional communication with the on-vehicle emergency report apparatus by a communication line through a radio station and a communication network such as a public telephone network or by satellite communication through a communication satellite. The communication apparatus is adapted to communicate, through the communication network, with communication terminals.

The term "Vehicle-to-Vehicle (V2V) communication" refers to the technology that allows vehicles to broadcast and receive messages. The messages may be omni-directional messages, creating a 360-degree "awareness" of other vehicles in proximity. Vehicles may be equipped with appropriate software (or safety applications) that can use the messages from surrounding vehicles to determine potential crash threats as they develop.

The term "V2X communication" as used herein refers to transmission of information from a vehicle to any entity that may affect the vehicle, and vice versa. Depending on the underlying technology employed, there are two types of V2X communication technologies: cellular networks and other technologies that support direct device-to-device communication (such as Dedicated Short-Range Communication (DSRC), Port Community System (PCS), Bluetooth^{®}, Wi-Fi^{®}, etc.).

The term "protocol" as used herein refers to a procedure required to initiate and maintain communication; a formal set of conventions governing the format and relative timing of message exchange between two communications terminals; a set of conventions that govern the interactions of processes, devices, and other components within a system; a set of signaling rules used to convey information or commands between boards connected to the bus; a set of signaling rules used to convey information between agents; a set of semantic and syntactic rules that determine the behavior of entities that interact; a set of rules and formats (semantic and syntactic) that determines the communication behavior of simulation applications; a set of conventions or rules that govern the interactions of processes or applications between communications terminals; a formal set of conventions governing the format and relative timing of message exchange between communications terminals; a set of semantic and syntactic rules that determine the behavior of functional units in achieving meaningful communication; a set of semantic and syntactic rules for exchanging information.

The term "communication protocol" as used herein refers to standardized communication between any two systems. An example communication protocol is a DSRC protocol. The DSRC protocol uses a specific frequency band (e.g., 5.9 GHz (GigaHertz)) and specific message formats (such as the Basic Safety Message, Signal Phase and Timing, and Roadside Alert ) to enable communications between vehicles and infrastructure components, such as traffic signals and roadside sensors. DSRC is a standardized protocol, and its specifications are maintained by various organizations, including the Institute of Electrical and Electronics Engineers (IEEE) and the Society of Automotive Engineers (SAE) International.

The term "bidirectional communication" as used herein refers to an exchange of data between two components. In an example, the first component can be a vehicle and the second component can be an infrastructure that is enabled by a system of hardware, software, and firmware.

The term "alert" or "alert signal" refers to a communication to attract attention. An alert may include visual, tactile, audible alert, and a combination of these alerts to warn drivers or occupants. These alerts allow receivers, such as drivers or occupants, the ability to react and respond quickly.

The term "in communication with" as used herein, refers to any coupling, connection, or interaction using signals to exchange information, message, instruction, command, and/or data, using any system, hardware, software, protocol, or format regardless of whether the exchange occurs wirelessly or over a wired connection.

As used herein, the term "network" refers to one or more data links that enable the transport of electronic data between computer systems and/or modules and/or other electronic devices. When a network or another communications connection (either hardwired, wireless, or a combination of hardwired or wireless) transfers or provides information to a computer, the computer properly views the connection as a transmission medium. A general purpose or special purpose computer access transmission media that can include a network and / or data links which carry desired program code in the form of computer-executable instructions or data structures. The scope of computer-readable media includes combinations of the above, that enable the transport of electronic data between computer systems and/or modules and/or other electronic devices. The network may include one or more networks or communication systems, such as the Internet, the telephone system, satellite networks, cable television networks, and various other private and public networks. In addition, the connections may include wired connections (such as wires, cables, fiber optic lines, etc.), wireless connections, or combinations thereof. Furthermore, although not shown, other computers, systems, devices, and networks may also be connected to the network. Network refers to any set of devices or subsystems connected by links joining (directly or indirectly) a set of terminal nodes sharing resources located on or provided by network nodes. The computers use common communication protocols over digital interconnections to communicate with each other. For example, subsystems may comprise the cloud. Cloud refers to servers that are accessed over the Internet, and the software and databases that run on those servers.

The term "electronic control unit" (ECU), also known as an "electronic control module" (ECM), is usually a module that controls one or more subsystems. Herein, an ECU may be installed in a car or other motor vehicle. It may refer to many ECUs, and can include but not limited to, Engine Control Module (ECM), Powertrain Control Module (PCM), Transmission Control Module (TCM), Brake Control Module (BCM) or Electronic Brake Control Module (EBCM), Central Control Module (CCM), Central Timing Module (CTM), General Electronic Module (GEM), Body Control Module (BCM), and Suspension Control Module (SCM). ECUs together are sometimes referred to collectively as the vehicles' computer or vehicles' central computer and may include separate computers. In an example, the electronic control unit can be an embedded system in automotive electronics. In another example, the electronic control unit is wirelessly coupled with automotive electronics.

The terms "non-transitory computer-readable medium" and "computer-readable medium" include a single medium or multiple media such as a centralized or distributed database, and/or associated caches and servers that store one or more sets of instructions. Further, the terms "non-transitory computer-readable medium" and "computer-readable medium" include any tangible medium that is capable of storing, encoding, or carrying a set of instructions for execution by a processor that, for example, when executed, cause a system to perform any one or more of the methods or operations disclosed herein. As used herein, the term "computer readable medium" is expressly defined to include any type of computer readable storage device and/or storage disk and to exclude propagating signals.

The term "Vehicle Data bus" as used herein represents the interface to the vehicle data bus (e.g., Controller Area Network (CAN), Local Interconnect Network (LIN), Ethernet/IP, FlexRay, and Media Oriented Systems Transport (MOST)) that may enable communication between the Vehicle on-board equipment (OBE) and other vehicle systems to support connected vehicle applications.

The term, "handshaking" refers to an exchange of predetermined signals between agents connected by a communications channel to assure each that it is connected to the other (and not to an imposter). This may also include the use of passwords and codes by an operator. Handshaking signals are transmitted back and forth over a communications network to establish a valid connection between two stations. A hardware handshake uses dedicated wires such as the request-to-send (RTS) and clear-to-send (CTS) lines in a Recommended Standard 232 (RS-232) serial transmission. A software handshake sends codes such as "synchronize" (SYN) and "acknowledge" (ACK) in a Transmission Control Protocol/Internet Protocol (TCP/IP) transmission.

The term "large vehicle" typically refers to a motorized vehicle that is bigger and heavier than a standard passenger vehicle. Examples of large vehicles include trucks, buses, Recreational Vehicles (RVs), trailers, semitrailers, and heavy construction equipment. It may also refer to a regular vehicle carrying additional attachments such as a towing car, towing boat or any other attachment causing its length and weight to vary.

The term "steering angle" refers to the amount of rotation of the front wheels of a vehicle when the steering wheel is turned. It is measured in degrees and indicates the direction in which the vehicle will turn. The steering angle is usually determined by sensors that detect the position of the steering wheel and the rotation of the front wheels. In some vehicles, the steering angle can be adjusted dynamically to improve stability and control, especially in high-speed or slippery conditions. The steering angle controls the direction of the vehicle and is essential for safe and effective driving.

The term "turn radius" is a measure of the minimum radius of a circle or arc that a vehicle follows when making a turn at a given speed and steering angle. The turn radius is determined by several factors including, but not limited to, the vehicle's wheelbase, track width, turning ability, as well as external factors such as the road surface condition and the slope of the road. The turn radius is an important parameter for determining the maneuverability and handling characteristics of a vehicle, and it is commonly used in the design and evaluation of vehicles, as well as in traffic engineering and urban planning. The turn radius is often expressed in meters or feet, and it can be calculated or measured using various methods, such as simulation, test tracks, or field observations.

The term "expected turn radius" refers to the turn radius that is anticipated based on previous experience or knowledge of the vehicle or similar vehicles. "Targeted turn radius" refers to the desired turn radius that a driver/vehicle intends to achieve while maneuvering a vehicle. "Predicted turn radius" refers to the estimated turn radius based on mathematical calculations or computer simulations, considering factors such as vehicle specifications, speed, road conditions, and other variables. Expected turn radius could be predicted turn radius in some embodiments. Expected turn radius may be based on predicted turn radii from the previous encounters of such vehicle type and model. Though the words "expected," "targeted" and "predicted" are defined using turn radius as a base, these are equally applicable for defining other vehicle parameters such as velocity, steering angle, etc.

The term "impact zone" or "impact area" refers to the area where a collision between two or more vehicles or between a vehicle and a stationary object is likely to occur in the event of an accident. The impact zone is typically determined by factors such as the speed and direction of the vehicles involved, the shape and size of the objects in the vicinity, and the road conditions and environmental factors. It is also influenced by driving behavior. The impact zone can vary depending on the type of accident, such as a rear-end collision, a head-on collision, or a side-impact collision, and it can also depend on the type and size of the vehicles involved. The impact zone is an important consideration for traffic safety and accident prevention, and it can be used to inform road design, traffic management, and vehicle safety standards. Measures such as reducing speed limits, adding safety barriers, and improving visibility can help to minimize the impact zone and reduce the severity of accidents.

The term "safe or safety zone," or "safe or safety area," refers to the area where a collision between two or more vehicles or between a vehicle and a stationary object is least likely or will not occur in the event of an accident. The safety zone is typically determined by factors such as the speed and direction of the vehicles involved, the shape and size of the objects in the vicinity, and the road conditions and environmental factors. It is also influenced by driving behavior.

The term "turn lane," or "turning lane," is a specific lane on a roadway designated for vehicles to turn onto another road. It may also refer to a lane into which a vehicle is trying to make a turn. Turning lanes are typically marked with arrows on the pavement indicating the direction of the turn and may also have additional signage indicating which turns are permitted from that lane.

As used herein, the term "driver" refers to such an occupant, even when that occupant is not actually driving the vehicle but is situated in the vehicle so as to be able to take over control and function as the driver of the vehicle when the vehicle control system hands over control to the occupant or driver or when the vehicle control system is not operating in an autonomous or semi-autonomous mode.

The term "host vehicle" as used herein refers to a vehicle that is observing the environment in order to decide based on observations.

The term "target vehicle" as used herein refers to a vehicle on which the host vehicle has a focus. The target vehicle may or may not be an autonomous vehicle. It may or may not have been enabled for V2V communication.

The term "nearby vehicle" or "neighboring vehicle" or "surrounding vehicle" as used herein refers to a vehicle anywhere near to the host vehicle within a communication range of the host vehicle. It may or may not be an autonomous vehicle. It may or may not have been enabled for V2V communication. In some embodiments, a neighboring vehicle may more specifically refer to a vehicle that is immediately in the next lane or behind the host vehicle.

The term "computer vision module" or "computer vision system" allows the vehicle to "see" and interpret the world around it. This system uses a combination of cameras, sensors, and other technologies such as Radio Detection and Ranging (RADAR), Light Detection and Ranging (LIDAR), Sound Navigation and Ranging (SONAR), Global Positioning System (GPS), and Machine learning algorithms, etc. to collect visual data about the vehicle's surroundings and to analyze that data in real-time. The computer vision system is designed to perform a range of tasks, including object detection, lane detection, and pedestrian recognition. It uses deep learning algorithms and other machine learning techniques to analyze the visual data and make decisions about how to control the vehicle. For example, the computer vision system may use object detection algorithms to identify other vehicles, pedestrians, and obstacles in the vehicle's path. It can then use this information to calculate the vehicle's speed and direction, adjust its trajectory to avoid collisions, and apply the brakes or accelerate as needed. It allows the vehicle to navigate safely and efficiently in a variety of driving conditions.

The term "deterministic motion model" is a mathematical description of the movement of an object or system that is fully determined by its initial state and inputs. This means that given the starting position, velocity, and other relevant parameters of a system, and the inputs it receives (such as forces or torques), the model can accurately predict its future position, velocity, and other states at any point in time. A deterministic motion model can be used to simulate the behavior of a mechanical system, such as a vehicle, to understand, plan, and optimize its movements, or to control its motion in real-time. Such models are typically based on physical principles such as Newton's laws of motion and may also consider environmental factors such as friction, gravity, surface conditions, or wind resistance. In general, the goal of a deterministic motion model is to provide a reliable and accurate way to predict the behavior of a system.

The term "cyber security" as used herein refers to application of technologies, processes, and controls to protect systems, networks, programs, devices, and data from cyber-attacks.

The term "cyber security module" as used herein refers to a module comprising application of technologies, processes, and controls to protect systems, networks, programs, devices and data from cyber-attacks and threats. It aims to reduce the risk of cyber-attacks and protect against the unauthorized exploitation of systems, networks, and technologies. It includes, but is not limited to, critical infrastructure security, application security, network security, cloud security, Internet of Things (IoT) security.

The term "encrypt" used herein refers to securing digital data using one or more mathematical techniques, along with a password or "key" used to decrypt the information. It refers to converting information or data into a code, especially to prevent unauthorized access. It may also refer to concealing information or data by converting it into a code. It may also be referred to as cipher, code, encipher, encode. A simple example is representing alphabets with numbers - say, 'A' is '01', 'B' is '02', and so on. For example, a message like "HELLO" will be encrypted as "0805121215," and this value will be transmitted over the network to the recipient(s).

The term "decrypt" used herein refers to the process of converting an encrypted message back to its original format. It is generally a reverse process of encryption. It decodes the encrypted information so that only an authorized user can decrypt the data because decryption requires a secret key or password. This term could be used to describe a method of unencrypting the data manually or unencrypting the data using the proper codes or keys.

The term "cyber security threat" used herein refers to any possible malicious attack that seeks to unlawfully access data, disrupt digital operations, or damage information. A malicious act includes but is not limited to damaging data, stealing data, or disrupting digital life in general. Cyber threats include, but are not limited to, malware, spyware, phishing attacks, ransomware, zero-day exploits, trojans, advanced persistent threats, wiper attacks, data manipulation, data destruction, rogue software, malvertising, unpatched software, computer viruses, man-in-the-middle attacks, data breaches, Denial of Service (DoS) attacks, and other attack vectors.

The term "hash value" used herein can be thought of as fingerprints for files. The contents of a file are processed through a cryptographic algorithm, and a unique numerical value, the hash value, is produced that identifies the contents of the file. If the contents are modified in any way, the value of the hash will also change significantly. Example algorithms used to produce hash values: the Message Digest-5 (MD5) algorithm and Secure Hash Algorithm-1 (SHA1).

The term "integrity check" as used herein refers to the checking for accuracy and consistency of system related files, data, etc. It may be performed using checking tools that can detect whether any critical system files have been changed, thus enabling the system administrator to look for unauthorized alteration of the system. For example, data integrity corresponds to the quality of data in the databases and to the level by which users examine data quality, integrity, and reliability. Data integrity checks verify that the data in the database is accurate, and functions as expected within a given application.

The term "alarm" as used herein refers to a trigger when a component in a system or the system fails or does not perform as expected. The system may enter an alarm state when a certain event occurs. An alarm indication signal is a visual signal to indicate the alarm state. For example, when a cyber security threat is detected, a system administrator may be alerted via sound alarm, a message, a glowing LED, a pop-up window, etc. Alarm indication signal may be reported downstream from a detecting device, to prevent adverse situations or cascading effects.

As used herein, the term "cryptographic protocol" is also known as security protocol or encryption protocol. It is an abstract or concrete protocol that performs a security-related function and applies cryptographic methods often as sequences of cryptographic primitives. A protocol describes how the algorithms should be used. A sufficiently detailed protocol includes details about data structures and representations, at which point it can be used to implement multiple, interoperable versions of a program. Cryptographic protocols are widely used for secure application-level data transport. A cryptographic protocol usually incorporates at least some of these aspects: key agreement or establishment, entity authentication, symmetric encryption, and message authentication material construction, secured application-level data transport, non-repudiation methods, secret sharing methods, and secure multi-party computation. Hashing algorithms may be used to verify the integrity of data. Secure Socket Layer (SSL) and Transport Layer Security (TLS), the successor to SSL, are cryptographic protocols that may be used by networking switches to secure data communications over a network.

The embodiments described herein can be directed to one or more of a system, a method, an apparatus, and/or a computer program product at any possible technical detail level of integration. The computer program product can include a computer readable storage medium (or media) having computer readable program instructions thereon for causing a processor to carry out aspects of the one or more embodiments described herein. The computer readable storage medium can be a tangible device that can retain and store instructions for use by an instruction execution device. For example, the computer readable storage medium can be, but is not limited to, an electronic storage device, a magnetic storage device, an optical storage device, an electromagnetic storage device, a superconducting storage device, and/or any suitable combination of the foregoing. A non-exhaustive list of more specific examples of the computer readable storage medium can also include the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon and/or any suitable combination of the foregoing. A computer readable storage medium, as used herein, does not construe transitory signals per se, such as radio waves and/or other freely propagating electromagnetic waves, electromagnetic waves propagating through a waveguide and/or other transmission media (e.g., light pulses passing through a fiber-optic cable), and/or electrical signals transmitted through a wire.

Computer readable program instructions described herein are downloadable to respective computing/processing devices from a computer readable storage medium and/or to an external computer or external storage device via a network, for example, the Internet, a local area network, a wide area network and/or a wireless network. The network can comprise copper transmission cables, optical transmission fibers, wireless transmission, routers, firewalls, switches, gateway computers, and/or edge servers. A network adapter card or network interface in each computing/processing device receives computer readable program instructions from the network and forwards the computer readable program instructions for storage in a computer readable storage medium within the respective computing/processing device. Computer readable program instructions for carrying out operations of the one or more embodiments described herein can be assembler instructions, instruction-set-architecture (ISA) instructions, machine instructions, machine dependent instructions, microcode, firmware instructions, state-setting data, configuration data for integrated circuitry, and/or source code and/or object code written in any combination of one or more programming languages, including an object oriented programming language such as Smalltalk, C++ or the like, and/or procedural programming languages, such as the "C" programming language and/or similar programming languages. The computer readable program instructions can execute entirely on a computer, partly on a computer, as a stand-alone software package, partly on a computer and/or partly on a remote computer or entirely on the remote computer and/or server. In the latter scenario, the remote computer can be connected to a computer through any type of network, including a local area network (LAN) and/or a wide area network (WAN), and/or the connection can be made to an external computer (for example, through the Internet using an Internet Service Provider). In one or more embodiments, electronic circuitry including, for example, programmable logic circuitry, field-programmable gate arrays (FPGA), and/or programmable logic arrays (PLA) can execute the computer readable program instructions by utilizing state information of the computer readable program instructions to personalize the electronic circuitry, in order to perform aspects of the one or more embodiments described herein.

Aspects of the one or more embodiments described herein are described with reference to flowchart illustrations and/or block diagrams of methods, apparatus (systems), and computer program products according to one or more embodiments described herein. Each block of the flowchart illustrations and/or block diagrams, and combinations of blocks in the flowchart illustrations and/or block diagrams, can be implemented by computer readable program instructions. These computer readable program instructions can be provided to a processor of a general purpose computer, special purpose computer and/or other programmable data processing apparatus to produce a machine, such that the instructions, which execute via the processor of the computer or other programmable data processing apparatus, can create means for implementing the functions/acts specified in the flowchart and/or block diagram block or blocks. These computer readable program instructions can also be stored in a computer readable storage medium that can direct a computer, a programmable data processing apparatus and/or other devices to function in a particular manner, such that the computer readable storage medium having instructions stored therein can comprise an article of manufacture including instructions which can implement aspects of the function/act specified in the flowchart and/or block diagram block or blocks. The computer readable program instructions can also be loaded onto a computer, other programmable data processing apparatus and/or other device to cause a series of operational acts to be performed on the computer, other programmable apparatus and/or other device to produce a computer implemented process, such that the instructions which execute on the computer, other programmable apparatus and/or other device implement the functions/acts specified in the flowchart and/or block diagram block or blocks.

The flowcharts and block diagrams in the figures illustrate the architecture, functionality and/or operation of possible implementations of systems, computer-implementable methods and/or computer program products according to one or more embodiments described herein. In this regard, each block in the flowchart or block diagrams can represent a module, segment and/or portion of instructions, which comprises one or more executable instructions for implementing the specified logical function(s). In one or more alternative implementations, the functions noted in the blocks can occur out of the order noted in the Figures. For example, two blocks shown in succession can be executed substantially concurrently, and/or the blocks can sometimes be executed in the reverse order, depending upon the functionality involved. It will also be noted that each block of the block diagrams and/or flowchart illustration, and/or combinations of blocks in the block diagrams and/or flowchart illustration, can be implemented by special purpose hardware-based systems that can perform the specified functions and/or acts and/or carry out one or more combinations of special purpose hardware and/or computer instructions.

While the subject matter described herein is in the general context of computer-executable instructions of a computer program product that runs on a computer and/or computers, those skilled in the art will recognize that the one or more embodiments herein also can be implemented in combination with one or more other program modules. Program modules include routines, programs, components, data structures, and/or the like that perform particular tasks and/or implement particular abstract data types. Moreover, other computer system configurations, including single-processor and/or multiprocessor computer systems, mini-computing devices, mainframe computers, as well as computers, hand-held computing devices (e.g., PDA, phone), microprocessor-based or programmable consumer and/or industrial electronics and/or the like can practice the herein described computer-implemented methods. Distributed computing environments, in which remote processing devices linked through a communications network perform tasks, can also practice the illustrated aspects. However, stand-alone computers can practice one or more, if not all aspects of the one or more embodiments described herein. In a distributed computing environment, program modules can be located in both local and remote memory storage devices.

As used in this application, the terms "component," "system," "platform," "interface," and/or the like, can refer to and/or can include a computer-related entity or an entity related to an operational machine with one or more specific functionalities. The entities described herein can be either hardware, a combination of hardware and software, software, or software in execution. For example, a component can be, but is not limited to being, a process running on a processor, a processor, an object, an executable, a thread of execution, a program and/or a computer. By way of illustration, both an application running on a server and the server can be a component. One or more components can reside within a process and/or thread of execution and a component can be localized on one computer and/or distributed between two or more computers. In another example, respective components can execute from various computer readable media having various data structures stored thereon. The components can communicate via local and/or remote processes such as in accordance with a signal having one or more data packets (e.g., data from one component interacting with another component in a local system, distributed system and/or across a network such as the Internet with other systems via the signal). As another example, a component can be an apparatus with specific functionality provided by mechanical parts operated by electric or electronic circuitry, which is operated by a software and/or firmware application executed by a processor. In such a case, the processor can be internal and/or external to the apparatus and can execute at least a part of the software and/or firmware application. As yet another example, a component can be an apparatus that provides specific functionality through electronic components without mechanical parts, where the electronic components can include a processor and/or other means to execute software and/or firmware that confers at least in part the functionality of the electronic components. In an aspect, a component can emulate an electronic component via a virtual machine, e.g., within a cloud computing system.

As it is employed in the subject specification, the term "processor" can refer to any computing processing unit and/or device comprising, but not limited to, single-core processors; single-processors with software multithread execution capability; multi-core processors; multi-core processors with software multithread execution capability; multi-core processors with hardware multithread technology; parallel platforms; and/or parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, and/or any combination thereof designed to perform the functions described herein. Further, processors can exploit nano-scale architectures such as, but not limited to, molecular based transistors, switches and/or gates, in order to optimize space usage and/or to enhance performance of related equipment. A combination of computing processing units can implement a processor.

Herein, terms such as "store," "storage," "data store," data storage," "database," and any other information storage component relevant to operation and functionality of a component refer to "memory components," entities embodied in a "memory," or components comprising a memory. Memory and/or memory components described herein can be either volatile memory or nonvolatile memory or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), flash memory, and/or nonvolatile random access memory (RAM) (e.g., ferroelectric RAM (FeRAM). Volatile memory can include RAM, which can function as external cache memory, for example. By way of illustration and not limitation, RAM can be available in many forms such as synchronous RAM (SRAM), dynamic RAM (DRAM), synchronous DRAM (SDRAM), double data rate SDRAM (DDR SDRAM), enhanced SDRAM (ESDRAM), Synch link DRAM (SLDRAM), direct Rambus RAM (DRRAM), direct Rambus dynamic RAM (DRDRAM) and/or Rambus dynamic RAM (RDRAM). Additionally, the described memory components of systems and/or computer-implemented methods herein include, without being limited to including, these and/or any other suitable types of memory.

The embodiments described herein include mere examples of systems and computer-implemented methods. It is, of course, not possible to describe every conceivable combination of components and/or computer-implemented methods for purposes of describing the one or more embodiments, but one of ordinary skill in the art can recognize that many further combinations and/or permutations of the one or more embodiments are possible. Furthermore, to the extent that the terms "includes," "has," "possesses," and the like are used in the detailed description, claims, appendices and/or drawings such terms are intended to be inclusive in a manner similar to the term "comprising" is interpreted when employed as a transitional word in a claim.

Autonomous vehicles navigate without human intervention through the use of a combination of sensors, mapping technology, and artificial intelligence algorithms. Sensors gather information about the vehicle's environment, high-definition mapping technology is used to create a detailed 3D map of the roads and surroundings. This map is then used by the vehicle's software to navigate the vehicle. The use of advanced artificial intelligence algorithms to process the data from the sensors and mapping technology enable the vehicle to make decisions about how to navigate the road, such as when to accelerate, brake, or turn. Control systems then manipulate the vehicle's steering, acceleration, and braking. All these systems are integrated with the vehicle's Artificial Intelligence (AI) algorithms and work together to navigate the vehicle in real-time. The control unit or control module may be referring to an electronic control unit or a sub-system of the ECU and may be referring to a functional unit in an electronic control unit or a sub-system that controls one or more units of the vehicle's equipment.

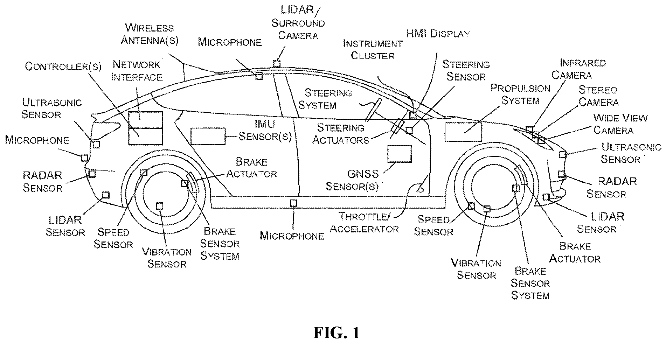

FIG. 1 is an illustration of an example autonomous vehicle with various sensors, actuators, and systems according to an embodiment. The Autonomous system comprises various sensors, such as ultrasonic sensor, lidar sensors (lidars), radar sensors, etc., actuators such as brake actuator, steering actuators, etc., and various subsystems such as propulsion system, steering system, brake sensor system, communication system, etc. FIG. 1 is depicted as an example system; neither is it limiting by the systems depicted nor is it an exhaustive list of the sensors, actuators, and systems/sub-systems, and/or features of the autonomous vehicle. Further, the vehicle shown should not be construed as limiting in terms of the arrangement of any of the sensors, actuators, and systems/sub-systems depicted. These sensors, actuators, and systems/sub-systems can be arranged as suited for a purpose to be performed by the autonomous vehicle. Autonomous vehicles, also known as self-driving vehicles or driverless vehicles, are vehicles that can navigate and operate without human intervention. Sensors, for example, including cameras, lidars, radars, and ultrasonic sensors, enable autonomous vehicles to detect and recognize objects, obstacles, and pedestrians on the road. Autonomous vehicles use advanced control systems to make real-time decisions based on sensor data and pre-programmed rules or intelligence-based decision systems. These systems control, for example, acceleration, braking, steering, and communication of the vehicle. Navigation systems such as GPS, maps, and other location-based technologies help autonomous vehicles navigate and plan the optimal route to a destination. Communication systems of autonomous vehicles help them communicate with other vehicles and infrastructure, such as traffic lights and road signs, to exchange information and optimize traffic flow. Autonomous vehicles have several safety features, including collision avoidance systems, emergency braking, and backup systems in case of system failures. Autonomous vehicles are assisted by artificial intelligence and machine learning algorithms to analyze data, recognize patterns, and improve performance over time.

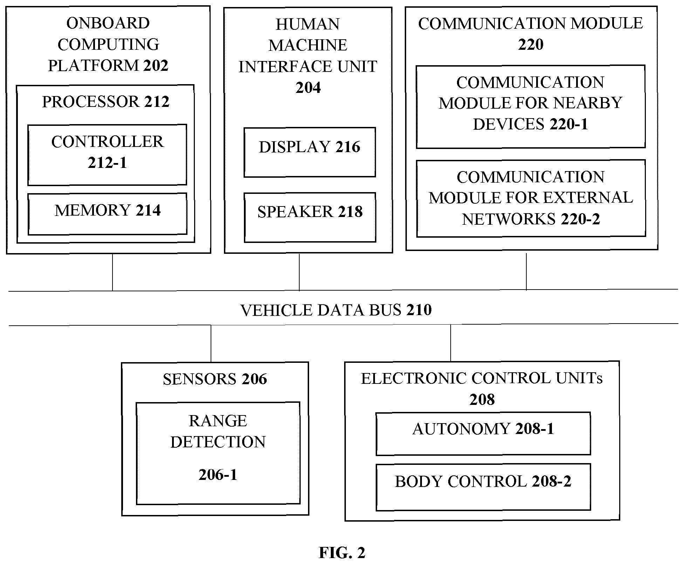

FIG. 2 shows a block diagram of electronic components of a vehicle according to an embodiment. In the illustrated example, the electronic components include an onboard computing platform 202, a human-machine interface (HMI) unit 204, the communication module 220, sensors 206, electronic control units (ECUs) 208, and a vehicle data bus 210. FIG. 2 illustrates an example architecture of some of the electronic components as displayed in FIG. 1

The onboard computing platform 202 includes a processor 212 (also referred to as a microcontroller unit or a controller) and memory 214. In the illustrated example, processor 212 of the onboard computing platform 202 is structured to include the controller 212-1. In other examples, the controller 212-1 is incorporated into another ECU with its own processor and memory. The processor 212 may be any suitable processing device or set of processing devices such as, but not limited to, a microprocessor, a microcontroller-based platform, an integrated circuit, one or more field programmable gate arrays (FPGAs), and/or one or more application-specific integrated circuits (ASICs). The memory 214 may be volatile memory (e.g., RAM including non-volatile RAM, magnetic RAM, ferroelectric RAM, etc.), non-volatile memory (e.g., disk memory, FLASH memory, EPROMs, EEPROMs, memristor-based non-volatile solid-state memory, etc.), unalterable memory (e.g., EPROMs), read-only memory, and/or high-capacity storage devices (e.g., hard drives, solid state drives, etc.). In some examples, memory 214 includes multiple kinds of memory, particularly volatile memory, and non-volatile memory. Memory 214 is computer readable media on which one or more sets of instructions, such as the software for operating the methods of the present disclosure, can be embedded. The instructions may embody one or more of the methods or logic as described herein. For example, the instructions reside completely, or at least partially, within any one or more of memory 214, the computer readable medium, and/or within the processor 212 during execution of the instructions.

The HMI unit 204 provides an interface between the vehicle and a user. The HMI unit 204 includes digital and/or analog interfaces (e.g., input devices and output devices) to receive input from, and display information for, the user(s). The input devices include, for example, a control knob, an instrument panel, a digital camera for image capture and/or visual command recognition, a touch screen, an audio input device (e.g., cabin microphone), buttons, or a touchpad. The output devices may include instrument cluster outputs (e.g., dials, lighting devices), haptic devices, actuators, a display 216 (e.g., a heads-up display, a center console display such as a liquid crystal display (LCD), an organic light emitting diode (OLED) display, a flat panel display, a solid state display, etc.), and/or a speaker 218. For example, the display 216, the speaker 218, and/or other output device(s) of the HMI unit 204 are configured to emit an alert, such as an alert to request manual takeover, to an operator (e.g., a driver) of the vehicle. Further, the HMI unit 204 of the illustrated example includes hardware (e.g., a processor or controller, memory, storage, etc.) and software (e.g., an operating system, etc.) for an infotainment system that is presented via display 216.

Sensors 206 are arranged in and/or around the vehicle to monitor properties of the vehicle and/or an environment in which the vehicle is located. One or more of the sensors 206 may be mounted to measure properties around an exterior of the vehicle. Additionally, or alternatively, one or more of sensors 206 may be mounted inside a cabin of the vehicle or in a body of the vehicle (e.g., an engine compartment, wheel wells, etc.) to measure properties of the vehicle and/or interior of the vehicle. For example, the sensors 206 include accelerometers, odometers, tachometers, pitch and yaw sensors, wheel speed sensors, microphones, tire pressure sensors, biometric sensors, ultrasonic sensors, infrared sensors, Light Detection and Ranging (lidar), Radio Detection and Ranging System (radar), Global Positioning System (GPS), cameras and/or sensors of any other suitable type. In the illustrated example, sensors 206 include the range-detection sensors that are configured to monitor object(s) located within a surrounding area of the vehicle.

The ECUs 208 monitor and control the subsystems of the vehicle. For example, the ECUs 208 are discrete sets of electronics that include their own circuit(s) (e.g., integrated circuits, microprocessors, memory, storage, etc.) and firmware, sensors, actuators, and/or mounting hardware. The ECUs 208 communicate and exchange information via a vehicle data bus (e.g., the vehicle data bus 210). Additionally, the ECUs 208 may communicate properties (e.g., status of the ECUs, sensor readings, control state, error, and diagnostic codes, etc.) and/or receive requests from each other. For example, the vehicle may have dozens of the ECUs that are positioned in various locations around the vehicle and are communicatively coupled by the vehicle data bus 210.

In the illustrated example, the ECUs 208 include the autonomy unit 208-1 and a body control module 208-2. For example, the autonomy unit 208-1 is configured to perform autonomous and/or semi-autonomous driving maneuvers (e.g., defensive driving maneuvers) of the vehicle based upon, at least in part, instructions received from the controller 212-1 and/or data collected by the sensors 206 (e.g., range-detection sensors). Further, the body control module 208-2 controls one or more subsystems throughout the vehicle, such as power windows, power locks, an immobilizer system, power mirrors, etc. For example, the body control module 208-2 includes circuits that drive one or more relays (e.g., to control wiper fluid, etc.), brushed direct current (DC) motors (e.g., to control power seats, power locks, power windows, wipers, etc.), stepper motors, LEDs, safety systems (e.g., seatbelt pretensioner, airbags, etc.), etc.

The vehicle data bus 210 communicatively couples the communication module 220, the onboard computing platform 202, the HMI unit 204, the sensors 206, and the ECUs 208. In some examples, the vehicle data bus 210 includes one or more data buses. The vehicle data bus 210 may be implemented in accordance with a controller area network (CAN) bus protocol as defined by International Standards Organization (ISO) 11898-1, a Media Oriented Systems Transport (MOST) bus protocol, a CAN flexible data (CAN-FD) bus protocol (ISO 11898-7) and/a K-line bus protocol (ISO 9141 and ISO 14230-1), and/or an Ethernet^{™} bus protocol IEEE 802.3 (2002 onwards), etc.

The communication module 220-1 is configured to communicate with other nearby communication devices. In the illustrated example, communication module 220 includes a dedicated short-range communication (DSRC) module. A DSRC module includes antenna(s), radio(s) and software to communicate with nearby vehicle(s) via vehicle-to-vehicle (V2V) communication, infrastructure-based module(s) via vehicle-to-infrastructure (V2I) communication, and/or, more generally, nearby communication device(s) (e.g., a mobile device-based module) via vehicle-to-everything (V2X) communication.

V2V communication allows vehicles to share information such as speed, position, direction, and other relevant data, enabling them to cooperate and coordinate their actions to improve safety, efficiency, and mobility on the road. V2V communication can be used to support a variety of applications, such as collision avoidance, lane change assistance, platooning, and traffic management. It may rely on dedicated short-range communication (DSRC) and other wireless protocols that enable fast and reliable data transmission between vehicles. V2V communication, which is a form of wireless communication between vehicles that allows vehicles to exchange information and coordinate with other vehicles on the road. V2V communication enables vehicles to share data about their location, speed, direction, acceleration, and braking with other nearby vehicles, which can help improve safety, reduce congestion, and enhance the efficiency of transportation systems.

V2V communication is typically based on wireless communication protocols such as Dedicated Short-Range Communications (DSRC) or Cellular Vehicle-to-Everything (C-V2X) technology. With V2V communication, vehicles can receive information about potential hazards, such as accidents or road closures, and adjust their behavior accordingly. V2V communication can also be used to support advanced driver assistance systems (ADAS) and automated driving technologies, such as platooning, where a group of vehicles travel closely together using V2V communication to coordinate their movements.

More information on the DSRC network and how the network may communicate with vehicle hardware and software is available in the U.S. Department of Transportation's Core June 2011 System Requirements Specification (SyRS) report (available at http://wwwits.dot.gov/meetings/pdf/CoreSystemSESyRSRevA%20(2011-06-13).pdf). DSRC systems may be installed on vehicles and along roadsides on infrastructure. DSRC systems incorporating infrastructure information is known as a "roadside" system. DSRC may be combined with other technologies, such as Global Position System (GPS), Visual Light Communications (VLC), Cellular Communications, and short range radar, facilitating the vehicles communicating their position, speed, heading, relative position to other objects and to exchange information with other vehicles or external computer systems. DSRC systems can be integrated with other systems such as mobile phones.

Currently, the DSRC network is identified under the DSRC abbreviation or name. However, other names are sometimes used, usually related to a Connected Vehicle program or the like. Most of these systems are either pure DSRC or a variation of the IEEE 802.11 wireless standard. However, besides the pure DSRC system it is also meant to cover dedicated wireless communication systems between vehicles and roadside infrastructure systems, which are integrated with GPS and are based on an IEEE 802.11 protocol for wireless local area networks (such as 802. 11p, etc.).

Additionally, or alternatively, the communication module 220-2 includes a cellular vehicle-to-everything (C-V2X) module. A C-V2X module includes hardware and software to communicate with other vehicle(s) via V2V communication, infrastructure-based module(s) via V2I communication, and/or, more generally, nearby communication devices (e.g., mobile device-based modules) via V2X communication. For example, a C-V2X module is configured to communicate with nearby devices (e.g., vehicles, roadside units, mobile devices, etc.) directly and/or via cellular networks. Currently, standards related to C-V2X communication are being developed by the 3rd Generation Partnership Project.

Further, the communication module 220-2 is configured to communicate with external networks. For example, the communication module 220-2 includes hardware (e.g., processors, memory, storage, antenna, etc.) and software to control wired or wireless network interfaces. In the illustrated example, the communication module 220-2 includes one or more communication controllers for cellular networks (e.g., Global System for Mobile Communications (GSM), Universal Mobile Telecommunications System (UMTS), Long Term Evolution (LTE), Code Division Multiple Access (CDMA)), Near Field Communication (NFC) and/or other standards-based networks (e.g., WiMAX (IEEE 802.16m), local area wireless network (including IEEE 802.11 a/b/g/n/ac or others), Wireless Gigabit (IEEE 802.11ad), etc.). In some examples, the communication module 220-2 includes a wired or wireless interface (e.g., an auxiliary port, a Universal Serial Bus (USB) port, a Bluetooth^{®} wireless node, etc.) to communicatively couple with a mobile device (e.g., a smart phone, a wearable, a smart watch, a tablet, etc.). In such examples, the vehicle may communicate with the external network via the coupled mobile device. The external network(s) may be a public network, such as the Internet; a private network, such as an intranet; or combinations thereof, and may utilize a variety of networking protocols now available or later developed including, but not limited to, TCP/IP-based networking protocols.

In an embodiment of the system, the host vehicle updates the boundary for the impact zone in real-time as the target vehicle starts moving.

In an embodiment of the system, the communication between the host vehicle and the target vehicle is via Vehicle-to-Vehicle (V2V) communication. In an embodiment of the system, the Vehicle-to-Vehicle (V2V) communication is based on a wireless communication protocol using at least one of a Dedicated Short-Range Communications (DSRC), and a Cellular Vehicle-to-Everything (C-V2X) technology. In an embodiment of the system, the communication between the host vehicle and the target vehicle is via an internet connection.

In an embodiment, the communication module is enabled for an autonomous communication, wherein the autonomous communication comprises communication over a period with minimal supervision under different scenarios. The communication module comprises a hardware component comprising, a vehicle gateway system comprising a microcontroller, a transceiver, a power management integrated circuit, an Internet of Things device capable of transmitting one of an analog and a digital signal over one of a telephone, a communication, either wired or wirelessly.

The autonomy unit 208-1 of the illustrated example is configured to perform autonomous and/or semi-autonomous driving maneuvers, such as defensive driving maneuvers, for the vehicle. For example, the autonomy unit 208-1 performs the autonomous and/or semi-autonomous driving maneuvers based on data collected by the sensors 206. In some examples, the autonomy unit 208-1 is configured to operate a fully autonomous system, a park-assist system, an advanced driver-assistance system (ADAS), and/or other autonomous system(s) for the vehicle.

An ADAS is configured to assist a driver in safely operating the vehicle. For example, the ADAS is configured to perform adaptive cruise control, collision avoidance, lane-assist (e.g., lane centering), blind-spot detection, rear-collision warning(s), lane departure warnings and/or any other function(s) that assist the driver in operating the vehicle. To perform the driver-assistance features, the ADAS monitors objects (e.g., vehicles, pedestrians, traffic signals, etc.) and develops situational awareness around the vehicle. For example, the ADAS utilizes data collected by the sensors 206, the communication module 220-1 (e.g., from other vehicles, from roadside units, etc.), the communication module 220-2 from a remote server, and/or other sources to monitor the nearby objects and develop situational awareness.

Further, in the illustrated example, controller 212-1 is configured to monitor an ambient environment of the vehicle. For example, to enable the autonomy unit 208-1 to perform autonomous and/or semi-autonomous driving maneuvers, the controller 212-1 collects data that is collected by the sensors 206 of the vehicle. In some examples, the controller 212-1 collects location-based data via the communication module 220-1 and/or another module (e.g., a GPS receiver) to facilitate the autonomy unit 208-1 in performing autonomous and/or semi-autonomous driving maneuvers. Additionally, the controller 212-1 collects data from (i) adjacent vehicle(s) via the communication module 220-1 and V2V communication and/or (ii) roadside unit(s) via the communication module 220-1 and V2I communication to further facilitate the autonomy unit 208-1 in performing autonomous and/or semi-autonomous driving maneuvers.

In operation, according to an embodiment, the communication module 220-1 performs V2V communication with an adjacent vehicle. For example, the communication module 220-1 collects data from the adjacent vehicle that identifies (i) whether the adjacent vehicle includes an autonomous and/or semi-autonomous system (e.g., ADAS), (ii) whether the autonomous and/or semi-autonomous system is active, (iii) whether a manual takeover request of the autonomous and/or semi-autonomous system has been issued, (iv) lane-detection information of the adjacent vehicle, (v) a speed and/or acceleration of the adjacent vehicle, (vi) a (relative) position of the adjacent vehicle, (vii) a direction-of-travel of the adjacent vehicle, (viii) a steering angle rate-of-change of the adjacent vehicle, (ix) dimensions of the adjacent vehicle, (x) whether the adjacent vehicle is utilizing stability control system(s) (e.g., anti-lock braking, traction control, electronic stability control, etc.), and/or any other information that facilitates the controller 212-1 in monitoring the adjacent vehicle.

Based at least partially on the data that the communication module 220-1 collects from the adjacent vehicle via V2V communication, the controller 212-1 can determine a collision probability for the adjacent vehicle. For example, the controller 212-1 determines a collision probability for the adjacent vehicle in response to identifying a manual takeover request within the data collected by the communication module 220-1 from the adjacent vehicle. Additionally, or alternatively, the controller 212-1 determines a collision probability for the adjacent vehicle in response to identifying a discrepancy between (i) lane-marker locations determined by the controller 212-1 of the vehicle based on the sensors 206 and (ii) lane-marker location determined by the adjacent vehicle. Further, in some examples, the controller 212-1 determines the collision probability for the adjacent vehicle based on data collected from other sources, such as the sensors 206, e.g., range detector sensors 206-1 and/or other sensor(s) of the vehicle, roadside unit(s) in communication with the communication module 220-1 via V2I communication, and/or remote server(s) in communication with the communication module 220-1. For example, controller 212-1 determines the collision probability for the adjacent vehicle upon determining, based on data collected by the sensors of the vehicle and the adjacent vehicle, that the adjacent vehicle has not detected a nearby object.

In some examples, controller 212-1 determines the collision probability based on a takeover time for the adjacent vehicle and/or a time-to-collision of the adjacent vehicle. For example, the takeover time corresponds with a duration of time between (1) the adjacent vehicle emitting a request for a manual takeover to be performed and (2) an operator of the adjacent vehicle manually taking over control of the adjacent vehicle. The controller 212-1 is configured to determine the takeover time of the adjacent vehicle based on measured characteristics of the adjacent vehicle (e.g., velocity, acceleration, dimensions, etc.), the operator of the adjacent vehicle (e.g., a measured reaction time, etc.), and/or an environment of the adjacent vehicle (e.g., road conditions, weather conditions, etc.). Further, the time-to-collision corresponds with the time it would take for the adjacent vehicle to collide with another vehicle (e.g., a third vehicle) and/or object (e.g., a guardrail, a highway lane divider, etc.) if the current conditions were maintained.

Additionally, or alternatively, the controller 212-1 is configured to determine the time-to-collision of the adjacent vehicle based on a velocity, an acceleration, a direction-of-travel, a distance to the object, a required steering angle to avoid the object, a steering angle rate-of-change, and/or other measured characteristics of the adjacent vehicle that the communication module 220-1 collects from the adjacent vehicle via V2V communication. Further, controller 212-1 is configured to determine a collision probability for the vehicle based on the collision probability of the adjacent vehicle.

Upon determining the collision probability of the adjacent vehicle and determining that the collision probability is not as per threshold, the autonomy unit 208-1 autonomously performs (e.g., for the ADAS) a defensive driving maneuver to prevent the vehicle from being involved in a collision caused by the adjacent vehicle. For example, the autonomous defensive driving maneuver includes deceleration, emergency braking, changing of lanes, changing of position within a current lane of travel, etc. In some examples, the autonomy unit 208-1 is configured to initiate the defensive driving maneuver before the takeover time of the adjacent vehicle has been completed. That is, the controller 212-1 is configured to cause the autonomy unit 208-1 to perform the defensive driving maneuver before the operator of the adjacent vehicle manually takes over control of the adjacent vehicle. Further, in some examples, the controller 212-1 emits an audio, visual, haptic, and/or other alert (e.g., via an HMI unit 204) for the operator of the vehicle to request manual takeover in response to determining that the collision probability is less than the first threshold and greater than the second threshold. By emitting such an alert, controller 212-1 enables the operator of the vehicle to safely take control of the vehicle before the adjacent vehicle is potentially involved in a collision. Additionally, or alternatively, the controller 212-1 is configured to perform other defensive measures (e.g., prefilling brake fluid lines) in response to determining that the collision probability is greater than a threshold (e.g., the second threshold, a third threshold).

The communication module enables in-vehicle communication, communication with other vehicles, infrastructure communication, grid communication, etc., using Vehicle to network (V2N), Vehicle to infrastructure (V2I), Vehicle to vehicle (V2V), Vehicle to cloud (V2C), Vehicle to pedestrian (V2P), Vehicle to device (V2D), Vehicle to grid (V2G) communication systems. Then, the system notifies nearby or surrounding vehicles or vehicles communicating with the vehicle's communication module. The vehicle uses, for example, a message protocol, a message that goes to the other vehicles via a broadcast.

In an embodiment, a connection is established between a vehicle and a nearby vehicle, which is a surrounding car. A nearby vehicle is detected by the vehicle control system. The nearby vehicle is detected by exchanging handshaking signals. Handshaking is the automated process for negotiation of setting up a communication channel between entities. The processor sends a start signal through the communication channel in order to detect a nearby vehicle. If there is a nearby vehicle, the processor may receive an acknowledgement signal from the nearby vehicle. Upon receiving the acknowledgement signal, the processor establishes a secured connection with the nearby vehicle. The processor may receive a signal at the communication module from the nearby vehicle. The processor may further automatically determine the origin of the signal. The processor communicatively connects the communication module to the nearby vehicle. Then the processor is configured to send and/or receive a message to and/or from the nearby vehicle. The signals received by the communication module may be analyzed to identify the origin of the signal to determine the location of the nearby vehicle.

In an embodiment, the system is enabled for bidirectional communication. The system sends a signal and then receives a signal/communication. In an embodiment, the communication could be a permission for access to control the other vehicle. In another embodiment, the communication could be an incremental control communication, for example, an initial control of the speed up to 10 miles per hour, then further additional 10 miles per hour, and so on.

As a first step of the method according to the disclosure, a data link between the vehicle and nearby vehicle or any other external device is set up in order to permit data to be exchanged between the vehicle and the nearby vehicle or any other external device in the form of a bidirectional communication. This can take place, for example, via a radio link or a data cable. It is therefore possible for the nearby vehicle or any other external device to receive data from the vehicle or for the vehicle to request data from the nearby vehicle or any other external device.

In an embodiment, bidirectional communication comprises the means for data acquisition and are designed to exchange data bidirectionally with one another. In addition, at least the vehicle comprises the logical means for gathering the data and arranging it to a certain protocol based on the receiving entity's protocol.

Initially, a data link for bidirectional communication is set up. The vehicle and the nearby vehicle or any other external device can communicate with one another via this data link and therefore request or exchange data, wherein the data link can be implemented, for example, as a cable link or radio link.

Bidirectional communication has various advantages as described herein. In various embodiments, data is communicated and transferred at a suitable interval, including, for example, 200 millisecond (ms) intervals, 100 ms intervals, 50 ms intervals, 20 ms intervals, 10 ms intervals, or even more frequent and/or in real-time or near real-time, in order to allow a vehicle to respond to, or otherwise react to, data. Bidirectional IR communication may be used to facilitate data exchange.

The apparatus for the vehicle according to the embodiment that performs bidirectional communication may be by means of a personal area network (PAN) modem. Therefore, a user can have access to an external device using the vehicle information terminal, and can then store, move, and delete the user's desired data.

In an embodiment, the vehicle may transmit a message via a communication link. It can be using any combination of vehicle to vehicle (V2V), vehicle to everything (V2X) or vehicle to infrastructure (V2I) type of communication. In an embodiment, it uses vehicle-to-vehicle (V2V) communication that enables vehicles to wirelessly exchange information (communicate), for example, about their speed, location, and heading.

In an embodiment, messaging protocols comprise of at least one of Advanced Message Queuing Protocol (AMQP), Message Queuing Telemetry Transport (MQTT), Simple (or Streaming) Text Oriented Message Protocol (STOMP), MQTT-S (and is an extension of the open publish/subscribe MQTT), which are heavily used in IoT based technologies and edge networks.

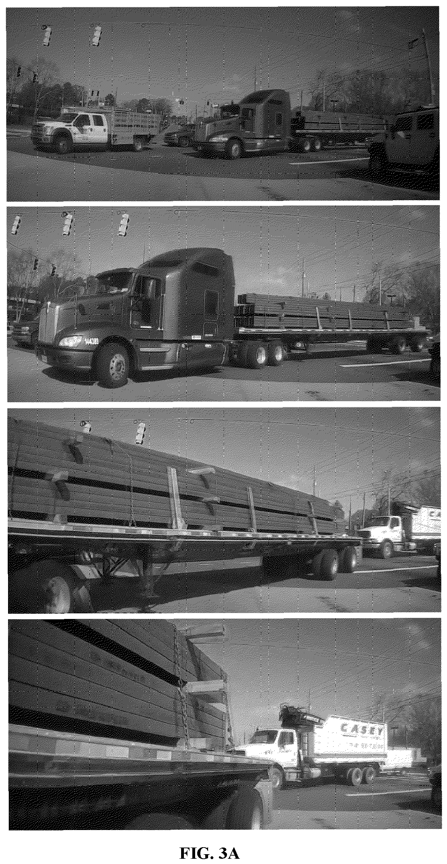

FIG. 3A shows large vehicles carrying loads and trying to maneuver, according to an embodiment. There are several problems that can arise when large vehicles, such as trucks, semitrailers, or buses need to make turns because of their limited maneuverability due to their larger turning radius versus the smaller vehicles. This can make it difficult for them to negotiate tight turns or to navigate narrow streets. Further, large vehicles have larger blind spots than smaller vehicles, which can make it difficult for drivers to see pedestrians, cyclists, or other vehicles in their vicinity, including behind them, when turning. Large vehicles may need to take up multiple lanes or even block traffic temporarily in order to make turns safely, which can cause congestion and delays for other drivers. The weight, dimensions (size and shape), and the speed of large vehicles can cause difficulty in maneuvering; the large vehicles may damage road surfaces, other vehicles, curbs, and other infrastructure when they turn. Therefore, when large vehicles try to make a turn, they pose a risk to other road users, especially if they are unable to see or anticipate the large vehicle trajectory requirements in their vicinity.

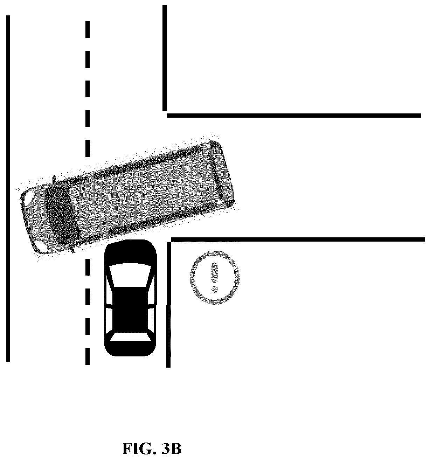

FIG. 3B shows a vehicle at an intersection getting hit when a large vehicle is taking a turn according to an embodiment. Large vehicles hitting another vehicle when turning is not new, however, there is a need for the other vehicle, which may or may not be an autonomous vehicle, to prevent such incidents. The other vehicle should be able to detect if a large vehicle's turn may affect it and to determine a collision avoidance maneuver to avoid any impact.

In an embodiment, the other vehicle may establish communication with the large vehicle, and the large vehicle may share with the other vehicle: expected turning radius in real time based on its steering angle and vehicle type. If the other vehicle is an autonomous vehicle, it may perform computer vision algorithms to conclude if the large vehicle may impact it or not. If it is likely that the autonomous vehicle gets hit, the autonomous vehicle will try to move (e.g., reverse or make a lane change). If the autonomous vehicle cannot move and the collision under the current circumstances is imminent, the autonomous vehicle will let the large vehicle's driver know to help prevent the collision. A type of vehicle or vehicle type may be referring to a broad category of vehicles such as cars, trucks, vans, motorcycles, etc., while a model of vehicle refers to a specific version of a particular vehicle type produced by a manufacturer with a unique name and features such as the Volvo S60, XC90, XC60, and V90.

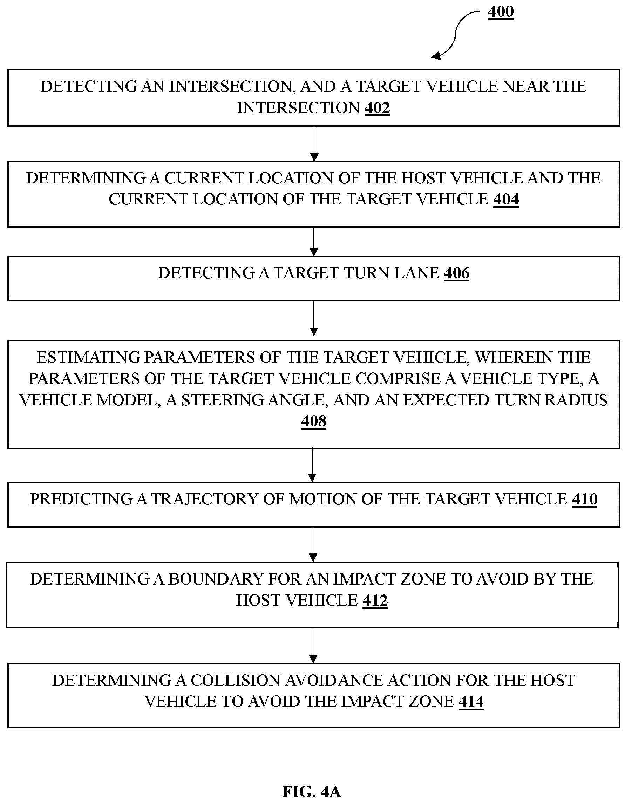

FIG. 4A shows a block diagram of a method to detect an effect of large vehicles turning into a lane according to an embodiment. According to an embodiment it is a method comprising: detecting, by the processor via the computer vision module, an intersection, and a target vehicle near the intersection as shown at 402; determining, by the processor, a current location of the host vehicle and the current location of the target vehicle as shown at 404; detecting, by the computer vision module, a target turn lane as shown at 406; estimating, by the processor, parameters of the target vehicle, wherein the parameters of the target vehicle comprise a vehicle type, a vehicle model, a steering angle, and an expected turn radius as shown at 408; predicting a trajectory of motion of the target vehicle, by the processor as shown at 410; determining, by the processor, a boundary for an impact zone to avoid by the host vehicle as shown at 412; and determining, by the processor, a collision avoidance action for the host vehicle to avoid the impact zone as shown at 414. In an embodiment, the method is further configured for autonomously executing the collision avoidance action by the control module of the host vehicle.

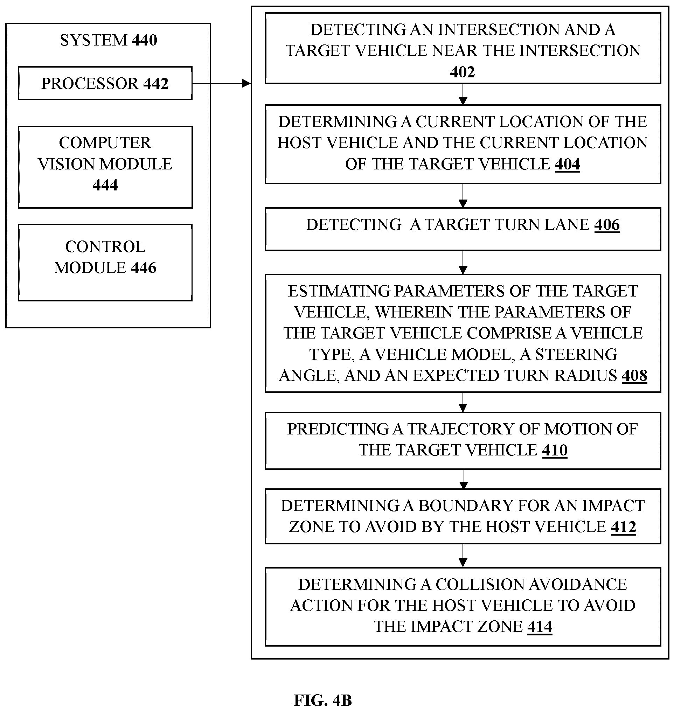

FIG. 4B shows a block diagram of a system to detect an effect of large vehicles turning into a lane according to an embodiment. According to an embodiment, it is a system 440, comprising: a processor 442, a computer vision module 444, and a control module 446; wherein the system is operable to: detect, by the processor via the computer vision module, an intersection, and a target vehicle near the intersection as shown at 402; determine, by the processor, a current location of the host vehicle and a current location of the target vehicle as shown at 404; detect, by the computer vision module, a target turn lane as shown at 406; estimate, by the processor via the computer vision module, parameters of the target vehicle, wherein the parameters of the target vehicle comprise a vehicle type, a vehicle model, a steering angle, and a turn radius as shown at 408; predict a trajectory of motion of the target vehicle, by the processor as shown at 410; determine, by the processor, a boundary for an impact zone by the host vehicle as shown at 412; determine, by the processor, a collision avoidance action for the host vehicle to avoid the impact zone as shown at 414. In an embodiment, the system is further configured to autonomously execute the collision avoidance action by the host vehicle to avoid the impact zone. In an embodiment, the host vehicle is an autonomous vehicle. According to an embodiment, the system is operable to be a component of the host vehicle and wherein the target vehicle is a large vehicle. According to an embodiment of the system, the current location of the host vehicle and the current location of the target vehicle are detected using a GPS of a global navigation satellite system. According to an embodiment of the system, the target turn lane is a left turn lane of the target vehicle.

According to an embodiment, the target vehicle comprises one of a semitrailer, a bus, a Sports Utility Vehicle (SUV), a tow vehicle, a truck, a recreation vehicle, a trailer, and a heavy construction equipment.

According to an embodiment, the system is further operable to detect neighboring vehicles and neighboring lanes. According to an embodiment, the neighboring vehicles and the neighboring lanes are detected via the computer vision module comprising a radar, a lidar, a camera, a GPS, and an artificial intelligence engine comprising a machine learning algorithm.

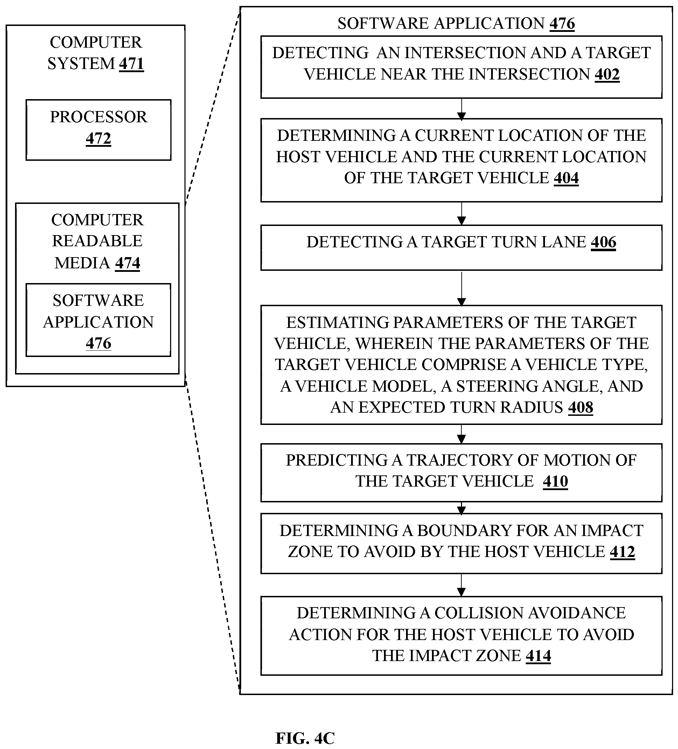

FIG. 4C shows a block diagram of a non-transitory computer-readable medium 474 to perform operations so as to detect an effect of large vehicles turning into a lane according to an embodiment. A non-transitory computer-readable medium 474 having stored thereon instructions executable by a computer system 471 to perform operations via a software application 476 comprising: detecting, by the computer vision module, an intersection, and a target vehicle near the intersection as shown at 402; determining, by the processor, a current location of the host vehicle and the current location of the target vehicle as shown at 404; detecting, by the computer vision module, a target turn lane as shown at 406; estimating, by the processor, parameters of the target vehicle, wherein the parameters of the target vehicle comprise a vehicle type, a vehicle model, a steering angle, and an expected turn radius as shown at 408; predicting a trajectory of motion of the target vehicle, by the processor, as shown at 410; determining, by the processor, a boundary for an impact zone to avoid by the host vehicle as shown at 412; and determining, by the processor, a collision avoidance action for the host vehicle to avoid the impact zone as shown at 414.The non-transitory computer-readable medium is further configured for autonomously executing the collision avoidance action by the host vehicle. A software application 476 may be stored on the computer readable media 474 and executed with the processor 472 of the computer system 471.

According to an embodiment it is a host vehicle, comprising: : a processor, a computer vision module, and a control module; wherein the processor is operable to: detect, by the control module of a host vehicle, an intersection, and a target vehicle near the intersection; determine, by the control module of the host vehicle, a current location of the host vehicle and a current location of the target vehicle; detect, by the control module of the host vehicle, a target turn lane; detecting, by the control module of the host vehicle, a licence plate number of the target vehicle; estimate, by the control module of the host vehicle via the computer vision module, parameters of the target vehicle, wherein the parameters of the target vehicle comprise a vehicle type, a vehicle model, a steering angle, and a turn radius; predict a trajectory of motion of the target vehicle, by the control module of the host vehicle; establish, by the control module of the host vehicle, a boundary for an impact zone by the host vehicle; determine, by the control module of the host vehicle, a collision avoidance action for the host vehicle to avoid the impact zone; and autonomously execute the collision avoidance action by the host vehicle to avoid the impact zone; and wherein the host vehicle is an autonomous vehicle.

According to an embodiment it is a system configured to: receive a software application installation package over a computer network; and install the software application onto a computing hardware associated with a host vehicle; wherein the software application comprises set of instructions executable by a computing hardware and stored in a non-transitory storage medium that, when executed, cause the computing hardware to implement operations comprising, detecting, by a control module of the host vehicle, an intersection, and a target vehicle near the intersection; determining, by the control module of the host vehicle, a current location of the host vehicle and the current location of the target vehicle; detecting, by the control module of the host vehicle, a target turn lane; detecting, by the control module of the host vehicle, a license plate number of the target vehicle; estimating, by the control module of the host vehicle, parameters of the target vehicle, wherein the parameters of the target vehicle comprise a vehicle type, a vehicle model, a steering angle, and an expected turn radius; predicting a trajectory of motion of the target vehicle, by the control module of the host vehicle; establishing, by the control module of the host vehicle, a boundary for an impact zone to avoid by the host vehicle; determining, by the control module of the host vehicle, a collision avoidance action for the host vehicle to avoid the impact zone; and autonomously executing the collision avoidance action by the host vehicle.

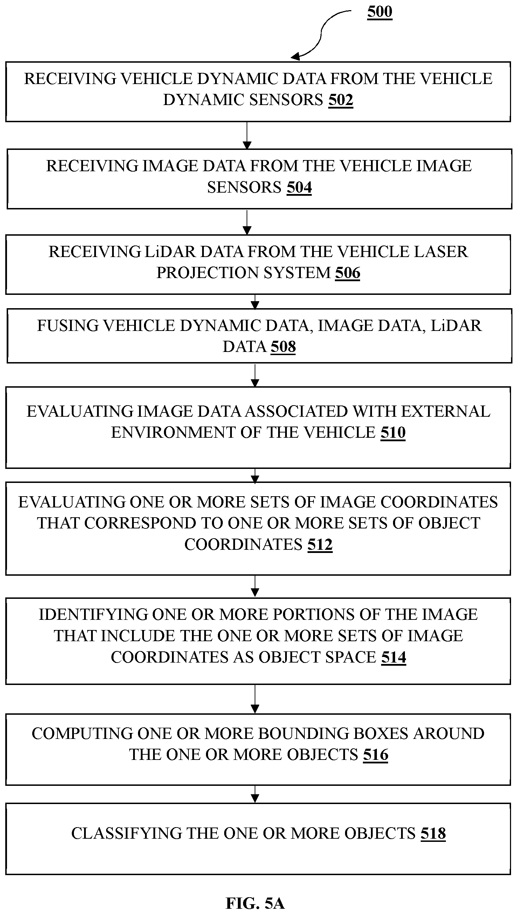

FIG. 5A is a process flow diagram of a method for identifying and classifying one or more objects according to an embodiment of the invention. Object detection is a computer technology related to computer vision and image processing that deals with detecting instances of semantic objects of a certain class, such as cars, bicycles, road signs, traffic signal lights, road infrastructure, boundary railings, etc., in digital images and videos. Object detection in autonomous vehicles also includes face detection, pedestrian detection, etc. The method may begin at block 502, wherein the method may include receiving vehicle dynamic data from the vehicle dynamic sensors. In an embodiment, a data reception module may communicate with the vehicle dynamic sensors of the vehicle to collect the vehicle dynamic data. In particular, the vehicle dynamic data may include, but may not be limited to, vehicle speed data, steering speed data, steering angle data, throttle angle data, vehicle acceleration data, brake force data, wheel speed data, wheel turning angle data, yaw rate data, transmission gear data, temperature data, Revolutions Per Minute (RPM) data, Global Positioning System (GPS)/ Differential Global Positioning System (DGPS) data, and the like. Vehicle dynamic data may be used to identify the current location of the vehicle, its steering angle, whether it is moving or at the intersection, etc. Vehicle trip dynamic data may be used to collect the data corresponding to the vehicle's capabilities while performing various maneuvers. Trip related data may also include data on the path such as number of lanes, intersection data such as if the intersection is wide, narrow, or accident prone, etc. In one embodiment, a data reception module may package and store vehicle dynamic data on the memory.

The method may proceed to block 504, wherein the method may include receiving image data from the vehicle camera system. In an embodiment, the data reception module may communicate with the vehicle camera system to collect untrimmed images/video of the surrounding environment of the vehicle and the internal portions of the vehicle. The untrimmed images/video may include 360-degree external and internal views of the vehicle and surrounding environment of the vehicle. In one embodiment, the data reception module may package and store the image data on the memory that is associated with the vehicle trip dynamic data (of block 502).

The method may proceed to block 506, wherein the method may include receiving LiDAR data from the vehicle laser projection system. In an exemplary embodiment, the data reception module may communicate with the vehicle laser projection system to collect LiDAR data that classifies set(s) of object coordinates (e.g., three-dimensional LiDAR object coordinate sets) from one or more traffic related objects located within the surrounding environment of the vehicle. The set(s) of object coordinates may indicate the location, range, and positions of the one or more objects which the reflected laser waves were reflected off of with respect to a location/position of the vehicle. In one embodiment, the data reception module may package and store the LiDAR data on the memory that is associated with the vehicle trip dynamic data (of block 502).

The method may proceed to block 508, wherein the method may include fusing the vehicle trip dynamic data, image data, and LiDAR data. In an exemplary embodiment, the data reception module may communicate with the neural network processing unit to provide artificial intelligence capabilities to conduct multimodal fusion. The data reception module may utilize one or more machine learning/deep learning fusion processes to aggregate the vehicle trip dynamic data, image data, and LiDAR data stored on the memory by the data reception module (at blocks 502, 504, 506). The fused data may be evaluated against stored vehicle dynamic parameters, image recognition parameters, and object recognition parameters that are associated with a plurality of vehicle motion patterns stored within the memory and utilized by the neural network.

In particular, the neural network processing unit may execute machine learning/deep learning to determine one or more motion patterns from the fused data based on the evaluation of the fused data against the stored dynamic parameters, image recognition parameters, and object recognition parameters. The determination of one or more motion patterns may occur during each trip of the vehicle in which the vehicle trip dynamic data, image data, and LiDAR data is received to determine the one or more driving maneuvers. In one embodiment, the one or more motion patterns and at least one of the locations, ranges, and positions of one or more traffic related objects, map data, and additional vehicle dynamic data (e.g., steering angle, throttle angle, speed, acceleration, etc.) are evaluated using machine/deep learning techniques, image logic, and LiDAR logic to determine the one or more driving maneuvers (e.g., braking, reverse, lane change, merging, etc.).

The method may proceed to block 510, wherein the method may include evaluating the image data associated with the external environment of the vehicle and determining one or more sets of image coordinates that correspond to the one or more sets of object coordinates. In an embodiment, the neural network processing unit utilizes one or more machine learning/deep learning fusion processes and image logic to determine one or more image coordinates associated with traffic related objects located within the surrounding environment of the vehicle. As discussed above, such traffic related objects may include, but may not be limited to, other vehicles, traffic participants, intersections, roadway attributes, and roadside objects. The sets of image coordinates may include two dimensional (x, y) coordinates that represent one or more pixels of the image(s)/video that correspond to the location of one or more objects within the image(s)/video as determined by the neural network processing unit. In one embodiment, the neural network processing unit may utilize one or more machine learning/deep learning fusion processes and LiDAR logic to determine one or more sets of object coordinates that may be associated with the one or more traffic related objects. As discussed above, the one or more sets of object coordinates may include one or more sets of three-dimensional coordinates or geocentric coordinates based on the reception of one or more reflected laser waves by the LiDAR transceiver(s).

The method may proceed to block 512, wherein the method may include evaluating the image data associated with the external environment of the vehicle and determining one or more sets of image coordinates that correspond to the one or more sets of object coordinates. In one embodiment, upon determining the one or more sets of object coordinates, the neural network processing unit may access the preprogrammed LiDAR coordinates map stored on the memory that may include one or more sets of image coordinates that correspond to one or more sets of object coordinates. The neural network processing unit may utilize the preprogrammed LiDAR coordinates map to determine one or more sets of image coordinates of one or more traffic related objects that correspond to one or more sets of object coordinates of one or more traffic related objects to pinpoint portions of the image(s)/video that may include the one or more traffic related objects as sensed by the vehicle camera system and the vehicle laser projection system. The utilization of the preprogrammed LiDAR coordinates map may ensure that one or more traffic related objects are accounted for that are located within the surrounding environment of the vehicle and that are present within the travel path of the vehicle such as obstructions on the path or a type of intersection which is difficult to maneuver due to its geometry, etc.

The method may proceed to block 514, wherein the method may include identifying one or more portions of the image(s) that include the one or more sets of image coordinates as object space. In one embodiment, one or more portions of the image(s)/video that represent the one or more sets of image coordinates that correspond to the one or more sets of object coordinates as object space are identified. In other words, the portions of the image(s)/video that correspond to one or more sets of object coordinates of objects that reflect laser beam waves back to the LiDAR transceivers of the vehicle laser projection system are identified as object space.

The method may proceed to block 516, wherein the method may include computing one or more bounding boxes around one or more traffic related objects. In one embodiment, the method may compute one or more bounding boxes around the one or more portions of the object space to distinguish the traffic related objects and other regions of interest within the object space from other portions of the image(s)/video that do not include the one or more traffic related objects or do not correspond to regions of interest. The method may additionally compute characteristic data associated with traffic related objects enclosed within the computed bounding boxes as determined by the neural network processing unit. The characteristic data, for example, of a vehicle object that is identified may include, its size and shape, a driver, its visual turn signals, whether it is an autonomous vehicle or not, etc.

Upon computing the one or more bounding boxes around the one or more traffic related objects, the method may proceed to block 518, wherein the method may include evaluating the one or more bounding boxes and classifying the one or more traffic related objects. In one embodiment, the method may utilize the neural network processing unit to evaluate the traffic related objects enclosed within the one or more computed bounding boxes. The neural network processing unit may scan the portions of image(s)/videos enclosed within the one or more bounding boxes and may compare the one or more traffic related objects found within the one or more bounding boxes against traffic related object models that may be stored within the memory of the vehicle and utilized by the neural network. The neural network processing unit may compare the traffic related object(s) found within the one or more bounding boxes and may determine one or more traffic related objects that may be located within an environment of the vehicle (e.g., a vehicle, an intersection, a traffic signal light, part of the roadway, on the roadway, on the side of the roadway, etc.).

In an embodiment, the neural network processing unit may compare the traffic related object(s) enclosed within the one or more computed bounding boxes against the traffic related object models to categorize one or more objects captured within the image(s) into various categories, groups, and subgroups. Using the categories, groups, and subgroups classification system, a large vehicle such as a commercial truck could be categorized as a commercial vehicle, with groups such as tractor-trailers, dump trucks, or box trucks, and subgroups such as flatbed trucks or refrigerated trucks. The classification system can be applied to vehicle identification, for example, passenger vehicles can be categorized as sedans, SUVs, or minivans, with further subgroups such as compact SUVs or full-size SUVs.

According to an embodiment, an intersection, a target vehicle near the intersection, vehicle type, traffic signal, lanes, lane markings, sign boards, etc., may be detected by the computer vision system aided by Artificial Intelligence/ Machine Learning (AI/ML) algorithms. In an embodiment, it may be utilizing the bounding box method. According to an embodiment, the intersection is detected by detecting a traffic light. According to an embodiment, the traffic light is detected by at least one of a video camera of the computer vision module of the host vehicle, and by Vehicle-to-Infrastructure (V2I) communication.

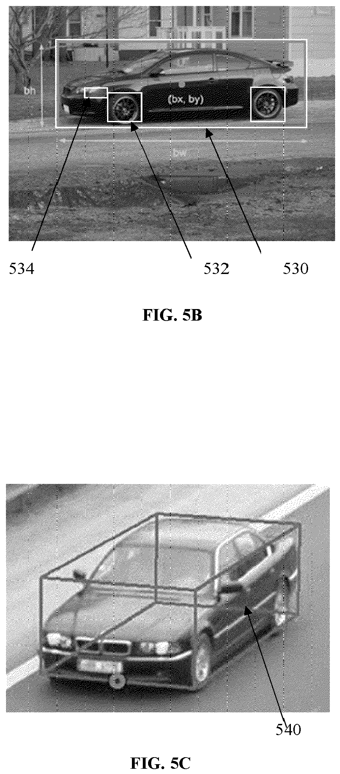

FIG. 5B shows an illustrated example of an image of a vehicle with bounding boxes around various regions of interest and identified objects, according to an embodiment. In this example, the computer vision system shows identified vehicle 530, tires 532, turn signal lights 534, and bounding boxes are drawn around the identified regions of interest. Regions of interest may be predefined or learnt over time. For example, when the interest is knowing about whether a vehicle would turn into a left lane or a right lane, it may have defined a region of interest as tires, driver looking direction, signal lights, lane markings to see if the vehicle is in a left only lane, etc.

FIG. 5C shows an illustrated example of an image of a vehicle with a 3D bounding box around various regions of interest of identified objects, according to an embodiment. In an embodiment, a 3D bounding box 540 may also be drawn to better understand, and more accurately estimate, the depth parameter and orientation of the object. In computer vision, 3D bounding boxes provide more information than 2D bounding boxes because 3D bounding boxes provide information about an object's size, location, and orientation in the 3D world, which is important for various applications in autonomous driving. With the use of 3D bounding boxes, computer vision systems can more accurately detect and track objects in the environment, enabling more informed decisions and better performance in real-world scenarios.

In an embodiment, the computer vision system may be utilizing both 2D and 3D methods in a hierarchical manner to first select regions of interest quickly, then it may try to gain more insight about the object with a 3D bounding box.

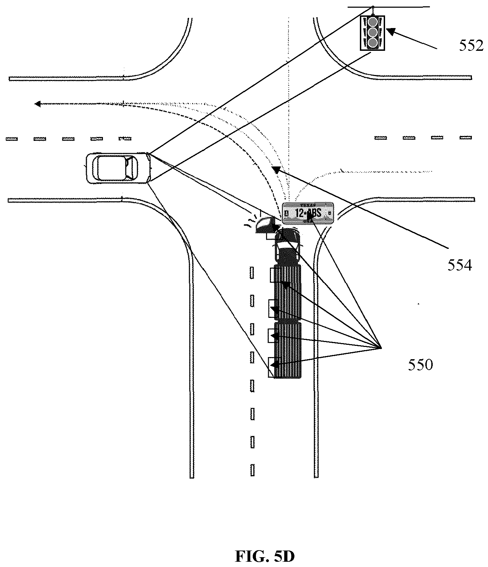

FIG. 5D shows an illustrated example of an image of the surrounding environment of the vehicle that includes bounding boxes, according to an embodiment. As shown, the images include traffic related objects such as vehicles and their specific regions of interest with bounding boxes 550, traffic lights 552, etc., that are identified based on one or more sets of image coordinates that correspond to one or more sets of object coordinates. As discussed, the bounding boxes may be utilized by the application to identify the objects in the environment and to extract specific details. In an embodiment, the extracted information may be utilized to predict the vehicle turning paths 554 under various scenarios to compute a safe zone and an impact zone.

According to an embodiment, the method or system may estimate, by the control module of the host vehicle via the computer vision module, parameters of the target vehicle, wherein the parameters of the target vehicle comprise a vehicle type, a vehicle model, a steering angle, and a turn radius.

According to an embodiment, the parameters of the target vehicle further comprise a dimension, a velocity, an acceleration, a yaw rate, and an orientation of the target vehicle.

According to an embodiment, the estimating of the parameters of the target vehicle is via the computer vision module comprising a camera, a lidar, a GPS, a radar, and an artificial intelligence engine comprising a machine learning algorithm.

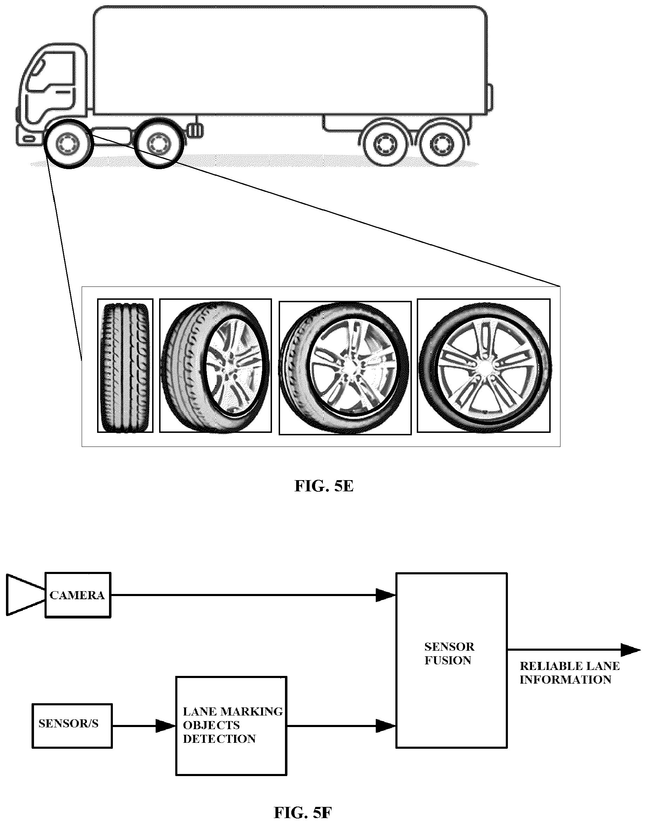

FIG. 5E shows an illustrated example of an image of a vehicle that includes bounding boxes around the region of interest in combination with edge detection according to an embodiment. Once the bounding box is focused on a region of interest, then the region of interest may further be analyzed for specific features to get more details of the object. For example, once a tire is identified, a bounding box size and extracted features using edge detection, such as tire spokes and rim, may be utilized to understand tire orientation. The rim and tire boundary may be elliptical in shape rather than circular when the wheels have orientation and thus can be used for estimating a steering angle.

For identifying an object in the image, the following steps may be executed. (i) Object detection: The first step is to detect objects in the image. In an embodiment, a deep learning-based object detection algorithm such as YOLO, Faster R-CNN, or SSD may be used to detect objects in the image. (ii) Object classification: once the object is detected, it is classified based on training or based on unsupervised learning, (iii) Bounding box generation: after classification, a bounding box is generated around the object to know its size, position, and orientation. The bounding box is usually represented as a rectangle with the object in the center. It may be a 2D or a 3D bounding box (iv) Refinement: in some cases, the bounding box may not accurately encompass the object. Refinement techniques are used to adjust the bounding box size and position to fit the object more precisely. Bounding box refinement techniques used in object detection algorithms may include non-maximum suppression, Intersection over Union (IoU) thresholding, anchor boxes, regression, and scale and aspect ratio refinement, which may improve the accuracy and robustness of the models. (v) Output: the final output is a set of bounding boxes around the detected object in the image.

According to an embodiment, the machine learning algorithm is at least one of a Region-based Convolutional Neural Networks (R-CNN), RetinaNet, You Only Look Once (YOLO), and Single Shot Multibox Detector (SSD).

In the object detection process, the recognition of an object and the generation of its corresponding bounding box may occur together in a single step and concurrently. To detect features of a vehicle using the bounding box method, a computer vision algorithm may identify the edges and contours of the object, e.g., a vehicle within an image or video frame. This can be done using techniques such as edge detection, feature extraction, or deep learning algorithms such as Convolutional Neural Networks (CNNs). Once the edges and contours of the vehicle are identified, the algorithm draws a bounding box around the vehicle to identify its location and size within the image. The bounding box can be refined and adjusted as needed to improve the accuracy of the detection. Once the bounding box is drawn, additional information about the vehicle may be extracted, such as its make and model, position, orientation, and velocity. This information may be used to track the vehicle over time, predict its future movements, and make decisions about how to safely interact with it on the road.

In an embodiment, determining, by the control module of the host vehicle, a current location of the host vehicle is determined by GPS, and the current location of the target vehicle is determined by at least one of a radar, LiDAR, Camera. Autonomous vehicles detect their position and neighboring vehicles position using a combination of GPS, LiDAR, cameras, inertial measurement units, and mapping data. According to an embodiment, the current location of the target vehicle is determined in real-time via the computer vision module of the host vehicle comprising a camera, a lidar, a GPS, and a radar.

FIG. 5F illustrates a block diagram of a lane detection system according to an embodiment. A lane detecting system for a vehicle includes a camera disposed of at the vehicle so as to have a field of view forward of the vehicle. The camera captures image data. A non-vision based sensor is disposed of at the vehicle so as to have a field of sensing forward of the vehicle. The non-vision based sensor captures sensor data. A control includes at least one processor operable to process image data captured by the camera and sensor data captured by the non-vision based sensor. The control, responsive to processing of captured image data, detects visible lane markers painted on the road along which the vehicle is traveling. The control, responsive to processing of captured sensor data, detects road-embedded elements disposed along the road. The control determines at least the lane along which the vehicle is traveling based on the detected lane markers or the detected road-embedded elements. FIG. 5F illustrates a block diagram of a lane detection system according to an embodiment. Lane marking data from the camera (vision based sensor/s) is fused in a sensor fusion module with the lane marking and object position data utilizing a non-vision sensor/s such as Lidar, radar, ultrasonic sensors, etc. When the lane markings are missing or snow covered or at nighttime with heavy rain, the system may still output reliable lane location infatuation utilizing the output of non-vision based sensors. Typically, an autonomous vehicle would be equipped with a suite of sensors, including multiple machine vision cameras deployed at the front, sides and rear of the vehicle, multiple radar sensors deployed at the front, sides, and rear of the vehicle, and/or multiple lidar sensors deployed at the front, sides, and rear of the vehicle. All of the sensors may be used to detect lanes based on a region of interest. In an embodiment, the system may utilize the image data captured by the camera as a way of detecting lane markers and determining the lanes of the road (when the lane markers are exposed and viewable by the camera) and may or may not utilize the non-vision based sensor data in such situations (when the camera is capable of detecting lane markers). When it is determined that the lane markers are worn or obscured or not viewable, the system may utilize the sensor data sensed by the non-vision based sensors to detect the lane objects or elements disposed on or in the road.

According to an embodiment of the system, a lane next to the host vehicle is detected via a computer vision module comprising a radar, a lidar, a camera, a GPS, and an artificial intelligence engine comprising a machine learning algorithm.

Sensor fusion is the process of combining data from multiple sensors to improve the accuracy, reliability, and efficiency of the information collected. It involves integrating information from different sources, such as cameras, radar, lidar, and other sensors, to obtain a more complete and more accurate picture of the environment. Sensor fusion may be able to reduce errors and uncertainties that may arise from using a single sensor and to obtain a more comprehensive understanding of the world around us. By combining data from multiple sensors, autonomous vehicle systems can make more informed decisions and respond to changing conditions in real-time. The process of sensor fusion typically involves several steps, including data acquisition, signal processing, feature extraction, data association, and estimation. Different algorithms and techniques may be used to integrate the information from multiple sensors, depending on the application and the specific sensors being used.

According to an embodiment, an AI-based lane detection/ object may be used in combination with sensor fusion techniques. Some of the algorithms that are suitable for lane detection include, but not limited to: (i) Hough Transform: the Hough Transform algorithm is a classic approach to lane detection that works by identifying straight lines in an image. The Hough Transform may be used to detect the edges of lane markings and to estimate the position and orientation of the lanes, (ii) Convolutional Neural Networks (CNNs): CNNs are deep learning algorithms that have been widely used for lane detection. A neural network is trained on lane data obtained from various sensors to recognize the features of lane markings, such as their color, shape, and texture. Once the network is trained, it may be used to detect and classify lanes in real-time. (iii) Support Vector Machines (SVMs): SVMs are machine learning algorithms that work by learning a boundary that separates the lane markings from the rest of the image. The SVM algorithm may be trained using labeled data to create a model. The model is then used to detect the position and orientation of the lanes, (iv) Markov Random Fields (MRFs): MRFs are a probabilistic graphical model that work by modeling the relationship between neighboring pixels in an image to identify the position and orientation of the lane markings. MRFs may be combined with other algorithms, such as CNNs or SVMs, to create a more robust and accurate lane detection system.

The system may provide an output indicative of the determined lane or lanes (as determined based on processing of the captured image data or processing of the captured sensor data). The output may be used to determine if the other vehicles are allowed to turn into the lanes, whether the lane is narrow or wide enough to make decisions on clearance for a turning vehicle. The output is provided to a driving assist system of the vehicle, so as to provide a warning or exercise caution while other vehicles turn into those identified lanes. Optionally, the output may be provided to an autonomous vehicle control system, whereby the vehicle is autonomously controlled to follow an action, either to maintain lane, change lane, or reverse, etc., to avoid any impact from the other vehicles. For autonomous vehicles, an occupant of the vehicle may, under particular circumstances, be desired or required to take over operation/control of the vehicle and drive the vehicle so as to avoid potential hazards for as long as the autonomous system relinquishes such control or driving. Such an occupant of the vehicle thus becomes the driver of the autonomous vehicle.

In an embodiment, detecting, by the control module of the host vehicle, a target turn lane via detecting a turn signal light. In an embodiment, the target turn lane may be detected via detecting a face of the driver and a looking direction of the driver.

In an embodiment, the method identifies the presence and location of human faces within an image or video via a face detection method using the computer vision system. In an embodiment, the face detection method may include at least one of a Haar Cascade Classifiers, Histogram of Oriented Gradients (HOG), Convolutional Neural Networks (CNNs), Viola-Jones algorithm, Deep Residual Networks (ResNets), and Multi-Task Cascaded Convolutional Networks (MTCNN). The choice of method depends on accuracy and speed of detection. Detecting a direction in which the driver may be looking is a subtask of face detection and requires additional processing beyond the standard face detection techniques. Some methods that may be used to detect which direction a person is looking based on face detection include eye tracking, head pose estimation, facial landmarks, and deep learning-based methods.

According to an embodiment of the system, the target turn lane into which the target vehicle is merging is detected by face detection and a gaze direction of a driver of the target vehicle using a face detection algorithm. According to an embodiment of the system, a camera is operable to capture an image of the driver of the target vehicle. According to an embodiment of the system, the image of the driver is analyzed using a computer vision algorithm comprising pattern recognition techniques to detect a human, facial features of the human for at least one of an eye, a nose, a mouth, and an outline of a face, an ear, a hair. According to an embodiment of the system, the target turn lane is detected by detecting a gaze direction of a driver of the target vehicle via the computer vision module. According to an embodiment of the system, the target turn lane is detected by the host vehicle via the computer vision module by tracking a position and a movement of the target vehicle over time. According to an embodiment of the system, the target turn lane is detected by the host vehicle via a sensor by detecting a speed and a direction of movement of the target vehicle, wherein the sensor is at least one of a radar and a lidar.

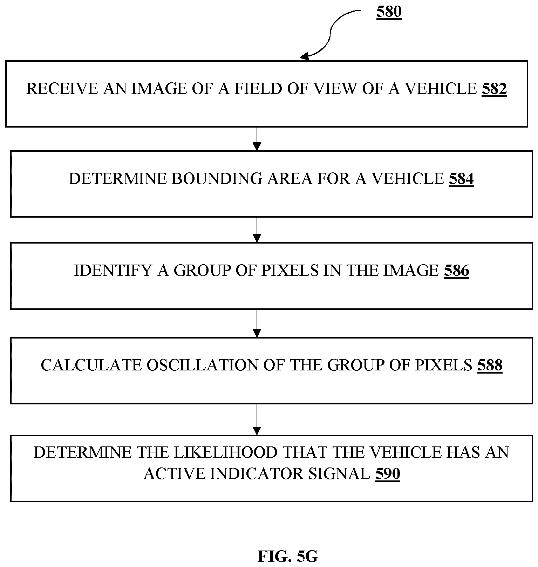

FIG. 5G illustrates an example method for real-time image-based turn signal detection. The method is applicable for detecting any blinking lights, such as traffic signal lights, parking lights, etc. A method is provided for real-time image-based turn signal detection for self-driving vehicles. The method could be performed to detect turn signals associated with vehicles. The method illustrates real-time image-based turn signal detection for self-driving vehicles. However, it is understood that in other embodiments, the blocks in FIG. 5G may appear in different order and blocks could be added, subtracted, or modified. Additionally, the blocks of the process or method may be performed in a linear manner (as shown) or may be performed in a parallel manner (not shown).

Block 582 includes receiving an image of a field of view of a vehicle via the autonomous vehicle including an imaging system. The imaging system is configured to capture either (i) still images or (ii) video of a field of view in front of the vehicle. The imaging system stores the captured image or data as data in a memory. If the data corresponds to a video, a single frame may be extracted from the video for analysis. Additionally, multiple frames of video may be analyzed either sequentially or in parallel.

The image received at block 584 may be an image that was captured with a short exposure time and a relatively fast shutter. When an image is captured with a short exposure time and a relatively fast shutter, the image appears quite dark. Only the brightest spots within the field of view of the camera will show up in an image captured in this way. For example, when a camera captures an image of the field of view of the vehicle using a short exposure time and a relatively fast shutter, the image will generally appear almost completely black with only illuminated objects showing up in the image. Thus, the image may only include illuminated tail lights, turn signal indicators, traffic signals, and other objects. Block 584 includes determining a bounding area for a vehicle in the image. A bounding area defines a region within an image where a vehicle is located. For example, when an image is captured by a still or video camera, the image may contain a vehicle that was within the field of view of the autonomous vehicle. A bounding area defines the region of the image in which that vehicle is located. Thus, the vehicle in the captured image fits within the bounding area. Each vehicle in the captured image may have its own respective bounding area. In some situations, the bounding area corresponding to one vehicle may overlap the bounding area corresponding to another vehicle. In these situations, the processing system will determine which vehicle is in the foreground and which vehicle is in the background. Because the vehicle in the foreground is fully within view, it will be completely contained within a bounding area. The vehicle in the background will be partially obscured by the foreground vehicle, thus its respective bounding area may be clipped so only the respective vehicle is contained within the bounding area. In one example, a vehicle with an active turn signal on may pass in front of another car. Due to the overlap in bounding boxes, the blinking lights of the vehicle that is further away appear within the bounding box of the vehicle nearer in the image. Therefore, the turn signal detection system will determine which vehicle the blinking turn signal is associated with. Because the turn signal detection template looks for blinking groups of pixels of a certain size relative to each car, it will not associate the blink with the near vehicle because the group of pixels has the wrong size for the near vehicle, the oscillating group of pixels is too small. In one embodiment, a processing system in the vehicle will analyze a captured image to determine if the captured image contains a depiction of a vehicle. However, in other embodiments, the processing system in the vehicle may already know the location of vehicles within an image based on other sensors of the autonomous vehicle. The other sensors of the autonomous vehicle may record the location of vehicles located near the autonomous vehicle to a memory. For example, the combination of a laser system and a radar system may detect the locations of vehicles near the autonomous vehicle. These vehicle locations may be stored in memory. The processing system may retrieve the data stored in the memory of the vehicle. Based on the stored data, the processing system may determine a bounding area for any respective vehicle located in the image. According to an embodiment of the system, the target turn lane is detected by detecting a turn signal on the target vehicle via the computer vision module.

Block 586 includes identifying a group of pixels in the image. The turn signal detection system may search the bounding area of the short exposure time image to determine at least one group of pixels in the image. Because the bounding area corresponds to the maximum extent of the vehicle in the image, any turn signal indicators corresponding to the vehicle will be located within the bounding area. Additionally, because the image has a short exposure time and a fast shutter, objects in the field of view of the vehicle that are bright show up in the image. The turn signals of a vehicle in the image will show up as a group of pixels within the bounding area of the captured image. In some instances, the bounding area may contain groups of pixels corresponding to objects other than the turn signals. For example, the vehicle may reflect sunlight toward the camera, or the vehicle may have a rear brake light. Each of these objects may also appear as a group of pixels within the bounding area. The turn signal detection system will analyze each group of pixels to determine if it is an active turn signal indicator. To determine if each group of pixels corresponds to an active turn signal indicator, a determination of the color of the pixels in each group of pixels may be used. As previously discussed, because turn signals are typically either red or amber (yellow) in color, each group of pixels may be analyzed based on the individual color components of the group of pixels. For example, the captured image may be divided into separate images for each color channel. In order to determine whether the group of pixels indicates a turn signal or whether the group of pixels indicates a different light source, such as sun glare, a target color channel may be compared to an undesirable color channel.

In one example, if each group of pixels indicates the presence of either red or amber, the group of pixels may be a turn signal indicator. However, if the group of pixels indicates the presence of an undesired color as well (such as blue), then the group of pixels likely does not indicate a turn signal (as blue is not a color component of a turn signal). The presence of both the desired color (red or amber) and the undesired color indicate the group of pixels is caused by a light source with a fuller color spectrum than that of a turn signal, often this fuller color spectrum light source is glare from the sun or other light source. Thus, block 586 determines at least one group of pixels that may correspond to a turn signal.

At block 588, an oscillation of the group of pixels is calculated. A turn signal indicator has three different modes of signaling. In the first two modes of operation the turn signal indicator has a steady intensity that is either high or low. However, having a relatively steading intensity indicates that the turn signal is not currently active because an active turn signal blinks. The third signaling mode is an oscillation from high intensity to low intensity. An oscillation from high intensity to low intensity indicates the vehicle within the bounding area may have an active turn signal. Typically, a turn signal will have an oscillation between about 0.75 and about 2.5 Hertz. Thus, at block 588, groups of pixels are considered to possibly be turn signal indicators if the group of pixels has an intensity with an oscillation between about 0.75 and about 2.5 Hertz.

At block 590, the likelihood that a vehicle has an active turn signal indicator is calculated. In order for a group of pixels to likely be a turn signal, a three-part test may be used. First, the pixels should have a color corresponding to the color of turn signal (as identified at block 586), the pixels should have an oscillation between about 0.75 and about 2.5 (as calculated at block 588), and the group of pixels should have a shape that fits within a template shape. An oscillation from high intensity to low intensity on a group of pixels indicates the possibility of an active turn signal; however, if a single bounding area has two (or more) groups of pixels that are the correct color and oscillation, the groups of pixels may indicate either emergency flashers on the vehicle or a tapping of the brake indication on the vehicle. Additionally, the template shape may be configured to detect groups of pixels that form a shape generally similar to a rectangle or circle, while possibly rejecting a group of pixels that form a thin line. Pixels that form a thin line are likely not a turn signal, but are indicative of a different light source, such as a glare. Another common occurrence besides sun glare is that vehicles passing under tree or bridge shadows appear to have their signals blink, but the combination of the above checks rejects such cases (as the oscillation my not have a strong enough variation in intensity, the oscillation may not have the correct frequency, etc.).

Thus, to detect a likely turn signal indicator, the processing system determines if there is a group of pixels with a given bounding area that has both the correct color for the pixels and an oscillating intensity. In some embodiments, the processing system looks for the brightest group of pixels in each half of the bounding area. Further, the image may contain a second group of oscillating pixels that correspond to a different bounding area. If only the group on one side has an oscillation over time, it is deemed a turn signal. If both sides oscillate, it may be deemed to be an emergency flasher. Brake taps are detected though they do not oscillate with the right frequency, and they rarely oscillate more than once. The processing system increases its confidence in turn signal prediction as it observes multiple blinks. When the second group of oscillating pixels that correspond to a different bounding area is detected, this may indicate there is a likelihood of a second vehicle having an active turn signal indicator as well. In response to determining that there is a likelihood that there is at least one other vehicle with an active turn signal indicator, a control strategy of the autonomous vehicle may be modified.

In an embodiment, detecting, by the control module of the host vehicle, a license plate number of the target vehicle. License plate detection: license plate detection is one of the features of an autonomous vehicle, where it enables the vehicle to recognize and identify other vehicles on the road. License plate detection may be achieved using a combination of cameras, sensors, and software algorithms. According to an embodiment of the system, the vehicle type is determined from the license plate number of the target vehicle by referencing a database.

In an embodiment, the autonomous vehicle, equipped with cameras, captures images of the surrounding environment, including other vehicles on the road. The images captured by the cameras are processed using a computer vision system using image processing algorithms to identify license plates. This involves analyzing the image for the distinctive shape and pattern of a license plate. Once the license plate has been identified, Optical character recognition (OCR) software is used to extract the alphanumeric characters from the plate. This involves analyzing the image for the specific shapes and patterns of the characters, and then translating those patterns into text or numbers. The extracted license plate number may then be used to look up information about the vehicle in a database via database lookup. In an embodiment, the details may include, but are not limited to, the make and model of the vehicle, the registered owner, turning radius, maximum weight, maximum speed. The information obtained from the license plate detection may then be used by the autonomous vehicle to make computations and predictions of turn radius and turn trajectories. In an embodiment, license plate detection may also be used to track the movements of individual vehicles.

Estimating, by the control module of the host vehicle, parameters of the target vehicle, wherein the parameters of the target vehicle comprise a vehicle type, a vehicle model, a steering angle, and an expected turn radius. In an embodiment, vehicle type and vehicle model may be retrieved from the database based on the license plate number. In another embodiment, an image processing module may detect a vehicle type and vehicle model based on the image from a camera, vehicle dimensions, vehicle color, vehicle features, vehicle size and shape. According to an embodiment of the system, the vehicle type and the vehicle model are detected by the computer vision module comprising an artificial intelligence engine comprising a machine learning algorithm.

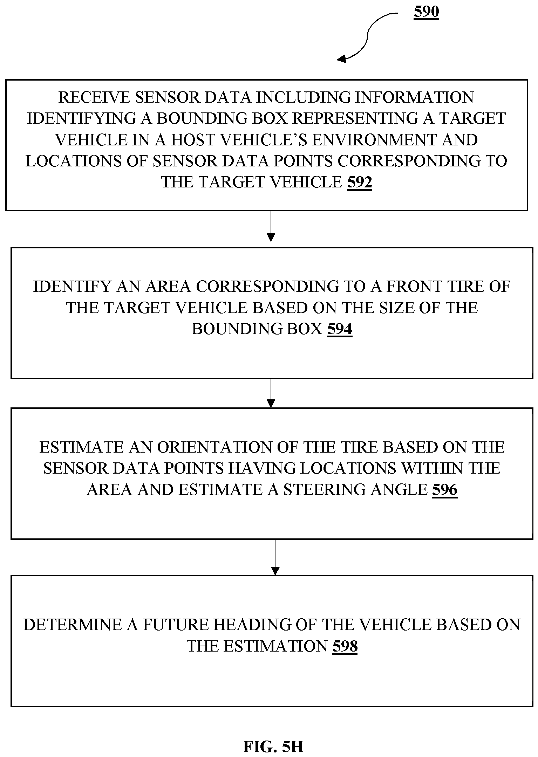

In an embodiment, the method comprises establishing, by the control module of the host vehicle, a boundary for an impact zone to avoid for the host vehicle. In an embodiment, a steering angle is detected or estimated via image processing. FIG. 5H shows a method to estimate the future heading of a vehicle based on estimated steering angle. The method comprises receiving sensor data including information identifying a bounding box representing a target vehicle in a host vehicle's environment and locations of sensor data points corresponding to the target vehicle as shown at 592. Identify an area corresponding to a front tire of the target vehicle based on the size of the bounding box as shown at 594. Estimate an orientation of the tire based on the sensor data points having locations within the area and estimate a steering angle corresponding to the tire orientation as shown at 596. The detection of tire features such as rim, spokes, shape, etc., as discussed in FIG. 5E may be helpful in detecting the orientation of the tire and estimating the steering angle. Determine a future heading of the vehicle based on the estimation of steering angle as shown at 598. Future heading may give rise to a trajectory of the turn of the target vehicle.

In an embodiment, the trajectory of a turn is based on a computational model or a simulation model. There are many computational models such as BusWIN^{®}, TrailerWIN^{®}, CornerWIN^{®} or the like to compute the trajectory of the vehicle for expected steering angle. According to an embodiment of the system, a trajectory of trajectory of motion of the target vehicle is predicted with a deterministic motion model.

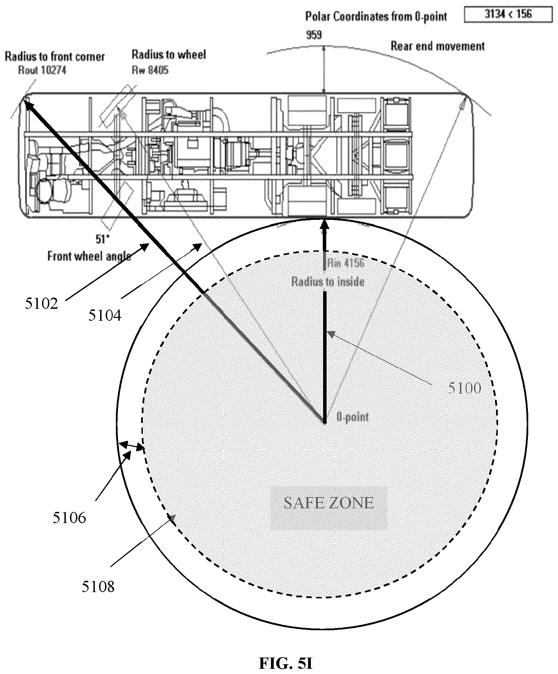

FIG. 5I shows a method to estimate the turn trajectory and computing the impact zone according to an embodiment using one the computational models listed herein or otherwise. In an embodiment, these models may be either installed locally, or accessed via a cloud server in real-time. Radius to inside as shown in FIG. 5I from the pivot point or 0-point is used to compute the turn radius trajectory in a turn scenario. The pivot point or 0-point is the point where the perpendiculars of the wheel centerline 5100 (common for the back tires) and 5102 (left front tire) and 5104 (right front tire) where the two front tires meet. It signifies the point around which the wheels turn and traces a path. If the steering wheel angle is held at the same angle based on which pivot point is computed, the vehicle will make a circular path with minimum turning radius as shown in 5100 and the maximum as shown at 5102. It may not be necessary that the perpendicular of the wheel may pass through the outermost corner of the vehicle body. In such cases, the extreme point of the vehicle which would trace maximum radius should be considered. Any area falling in between the two circles with radius as shown at 5100 and 5102 will be in the impact zone. Any area not in between the two concentric circles will be in the safe zone. In an embodiment, there will be a margin 5106 that may be added to the minimum turning radius to determine the boundary 5108 of the safe zone, shown as a gray-filled area.

However, while the vehicle is turning, the steering angle and vehicle speed are subject to change. Thus, the safe zone may also be changed per the steering angle and speed that are changing. In an embodiment, the safe zone is computed using predicted maximum and minimum steering angles for the target vehicle. In an embodiment, the safe zone is dynamically changed based on the changes in the steering angle that are observed while the target vehicle is turning. In an embodiment, more than one trajectory would be computed based on the expected turning radius variations; and the minimum encompassing safe area would be considered. In an embodiment, once the large vehicle starts the turn, it is in communication with the other vehicles which may be impacted.

According to an embodiment, the host vehicle computes the turn radius using a computational model based on the expected or predicted steering angle. According to an embodiment, the host vehicle is operable to obtain the turn radius using a simulation model based on the expected or predicted steering angle.

According to an embodiment, the turn radius may be calculated using (i) Geometric methods: The turn radius may be calculated using basic geometric formulas that consider the wheelbase, track width, and steering angle of the vehicle. This method requires accurate measurements and assumes that the vehicle follows a circular path when turning. (ii) Simulation: the turn radius may be calculated using computer simulation software that models the vehicle dynamics and vehicle behavior during turning. This method allows for more complex and realistic scenarios to be considered, such as different road conditions, vehicle speeds, and driver behavior. (iii) Test track measurements: the turn radius may be measured directly by driving the vehicle through a controlled test track that is designed to simulate different turning scenarios. The data for the vehicle may be retrieved and used, or the data may be used by the AI/MI, models during training to predict the turn behavior. (iv) Field observations: the turn radius may be estimated based on empirical observations of the vehicle's turning behavior in the field. Such data may be collected by the autonomous vehicle over a period of time and may be used to train the AI/ML model and predict using the trained AI/MI, model.

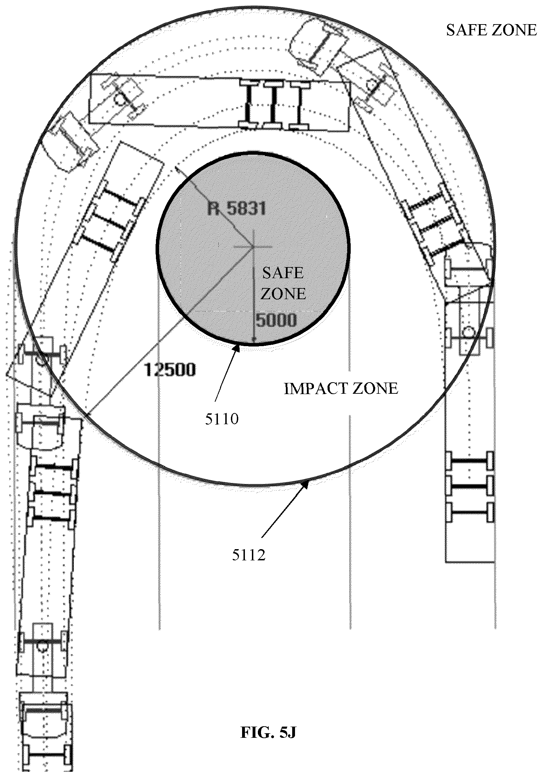

FIG. 5J shows a method to estimate the turn trajectory of a vehicle with a pivot joint and computing the impact zone, according to an embodiment. According to the embodiment, when there is a pivot joint, or any flexible joint due to the trailer tracks having two different trajectories, the minimum radius 5110 and the maximum radius 5112 of all the trajectories traced by the vehicle points, are considered to compute the impact zone and the safe zone. The area between the two circles of the minimum radius 5110, and the maximum radius 5112 is the impact zone. In an embodiment, the boundary separating the impact zone and safe zone may be an open trajectory.

In an embodiment, predicting a trajectory of motion of the target vehicle by the control module of the host vehicle is based on vehicle parameters comprising a vehicle type, a vehicle model, a steering angle, a speed, and an expected turn radius.

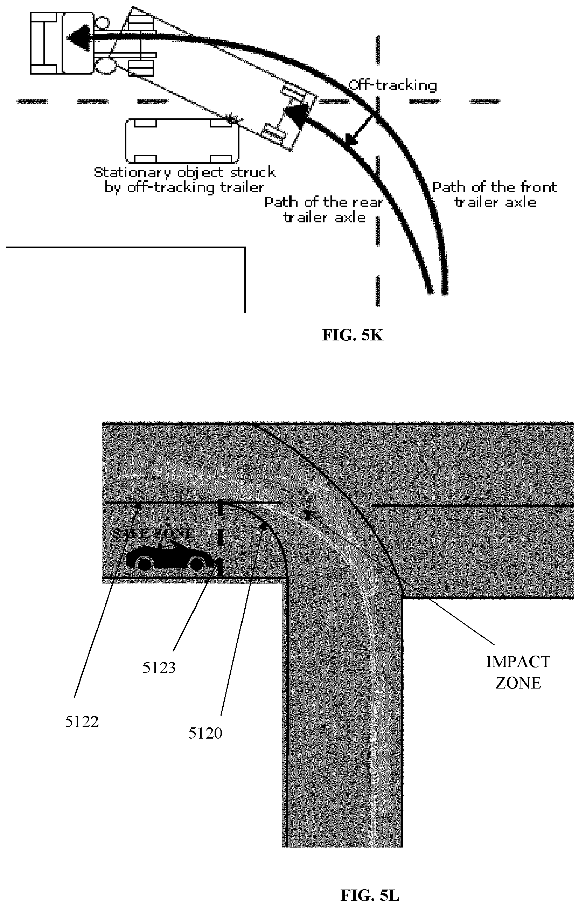

FIG. 5K shows a trajectory of a semitrailer impacting a stationary vehicle in the path of its rear trailer axle, according to an embodiment. Therefore, while planning the safe zone, both parts of the semitrailer (cab and attachment in this example) should be analyzed by tracing trajectories of each of the trailer attachments. If more than one, the innermost and the outermost trajectories form the impact zone. Once the impact zone and its boundary is known, the area other than the impact zone may be considered as a safe zone. In an embodiment, a safe margin may be added from the innermost trajectory and the outermost trajectory to compute a better safe zone by accommodating the variations that may take place during actual turning of the large vehicle. This safe margin may be a predetermined value based on identified dimensions and model of the vehicle. The safe margin may also be determined from past data by learning observed by the autonomous vehicle over a period of time for a vehicle based on its experience. In an embodiment, once either the safe zone or the impact zone is computed, the other may be derived with or without a safety margin in place.

FIG. 5L shows a trajectory of a semitrailer, impact zone and safe zone, according to an embodiment. According to an embodiment, the lane data may be used to come up with the boundary to determine a safe zone. The boundary 5120 which is determined from inside radius or minimum radius of the turn, with a safe margin, is combined with the lane separator 5122. The boundary that separates the impact zone and the safe zone is formed from boundary 5120 and the lane separator 5122. In an embodiment, the boundary may be an open trajectory. The boundary 5120 combined with the lane separator 5122 separates safe zone and impact zone. In an embodiment, the boundary dividing safe zone could be a straight line boundary 5123, at a certain distance from the intersection. The straight line 5123 combined with the lane separator 5122 may form the safe zone. The Impact zone is the zone that needs to be avoided by the host vehicle.

According to an embodiment, the host vehicle continuously updates the boundary for the impact zone as the target vehicle starts moving. According to an embodiment, the boundary traces at least one of an open region and a closed region, wherein the boundary separates a region around the host vehicle into a safe zone and the impact zone.

According to an embodiment, the collision avoidance action comprises determining, by the control module of the host vehicle, a collision avoidance action for the host vehicle to avoid the impact zone, and autonomously executing the collision avoidance action by the host vehicle or any other vehicle while the large vehicle is turning. Once the impact zone and the safe zone are computed, the host vehicle maps its current location to find out if the host vehicle is in the impact zone. If the host vehicle is in the impact zone, it may perform a collision avoidance action. According to an embodiment, the collision avoidance action comprises generating an alert in the host vehicle, wherein the alert is at least one of a text message, a visual cue, a sound alert, a tactile cue, and a vibration. According to an embodiment, the collision avoidance action comprises at least one of initiating a reverse movement by the host vehicle and initiating a lane change by the host vehicle.

According to an embodiment, the collision avoidance action comprises broadcasting a message to a neighboring vehicle, wherein the message comprises an instruction of a maneuver for the neighboring vehicle for clearing the impact zone using a collective and coordinated action.

According to an embodiment, the collision avoidance action comprises alerting the target vehicle about an impending collision.

According to an embodiment, the collision avoidance action comprises at least one of generating an alert in the host vehicle and initiating a reverse movement by the host vehicle. Before performing such an action, the host vehicle will detect vehicles behind the host vehicle.

According to an embodiment, the collision avoidance action comprises initiating a lane change by the host vehicle. Before performing such an action, the host vehicle will detect if there is a lane available next to it to perform such an action. It will also make sure that in doing so it will not be colliding with vehicles in other lanes.

According to an embodiment, the collision avoidance action is determined and executed in real-time until the target vehicle safely incorporates into the target turn lane. According to an embodiment, the collision avoidance action is determined via the computer vision module comprising an artificial intelligence engine comprising a machine learning algorithm.

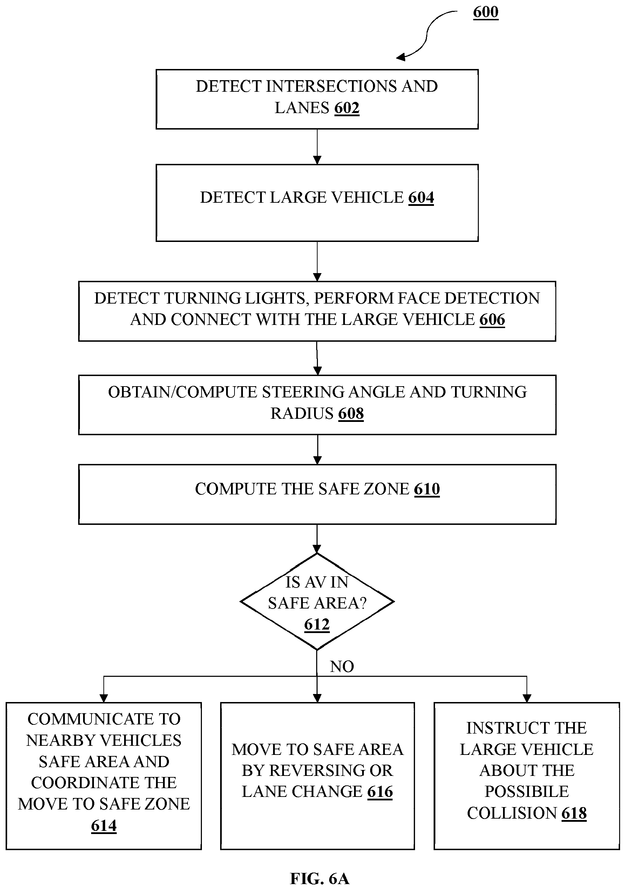

FIG. 6A shows a method for detecting if a large vehicle taking a turn will impact the vehicle and taking an action by the autonomous vehicle. The method detects intersections and lanes as step 602, detects large vehicles at step 604, detects turning signal lights, face detection to predict which way the large vehicle will turn at step 606, this information may be obtained by connecting with the large vehicle at step 606. The large vehicle may communicate with the autonomous vehicle, and information on steering angle and turning radius may be obtained by the host vehicle via V2V communication at step 608. Additionally, the autonomous vehicle may compute these on its own using a camera vision system. Based on the steering angle, weight of the large vehicle, vehicle type, vehicle model, the autonomous vehicle determines the safe zone at step 610. At step 612, the autonomous vehicle determines if the autonomous vehicle is in the safe zone. If the autonomous vehicle is not in the safe zone, meaning it is in an impact zone, the autonomous vehicle may detect nearby vehicles and communicate with them for a coordinated action at step 614. If the autonomous vehicle finds space to move to the next lane or to reverse, it will do so to avoid the impact zone at step 616. If neither step 614 nor step 616 gets the autonomous vehicle out of impact zone, or it is not possible to execute steps 614 and 616, then the autonomous vehicle may let the large vehicle know about the possible collision at step 618 so that the large vehicle will stop attempting to turn or it may adjust its parameters such that there is no impact to any of the other vehicles.

According to an embodiment, it is a method comprising: detecting, by a control module of an autonomous vehicle, a large vehicle nearing an intersection; establishing, by the control module of the autonomous vehicle, a communication with the large vehicle; receiving, by the control module of the autonomous vehicle, a model number, a vehicle type, and a turning radius of the large vehicle in real-time; computing, by the control module of the autonomous vehicle, using a computer vision algorithm and based on the turning radius, an impact zone of the large vehicle while navigating a turn; determining, by the control module of the autonomous vehicle, a current location of the autonomous vehicle; mapping, by the control module of the autonomous vehicle, the current location of the autonomous vehicle and the impact zone to determine a probability of collision; and performing an action, by the control module of the autonomous vehicle, wherein the action comprises at least one of: generating an alert in the autonomous vehicle; initiating a first reverse movement by the autonomous vehicle; initiating a first lane change by the autonomous vehicle; maintaining the current location of the autonomous vehicle; alerting the large vehicle, the impact zone, the current location of the autonomous vehicle and the probability of collision; and broadcasting, a message to a neighboring vehicle, wherein the message comprises the impact zone, the probability of collision, and an instruction for the neighboring vehicle to at least one of a second lane change, maintaining lane, and a second reverse movement to clear the impact zone for a collective and coordinated action; and wherein the method is operable for predicting the impact zone for the large vehicle taking the turn and performing the action for avoiding a collision.

According to an embodiment of the system, the host vehicle is operable to compute a minimum turning radius of the intersection. According to an embodiment of the system, the minimum turning radius of the intersection is communicated by the host vehicle to the target vehicle. According to an embodiment of the system, the host vehicle via the computer vision module extracts a lower edge along a length of the target vehicle using a bounding box algorithm; and the boundary of the impact zone is computed based on the turn radius mapped from the lower edge along the length of the target vehicle on a side that is facing the host vehicle, the steering angle, a velocity, and an acceleration of the target vehicle, wherein the velocity and the acceleration are estimated by the host vehicle.

According to an embodiment of the system, the host vehicle is operable to detect a change in velocity, acceleration, and the steering angle of the target vehicle and update in real-time the boundary of the impact zone. According to an embodiment of the system, the host vehicle is operable to establish a communication with the target vehicle to obtain the steering angle, a velocity, an acceleration, and update in real-time the boundary of the impact zone as the target vehicle is moving.

According to an embodiment of the system, the host vehicle is operable to establish a communication with the target vehicle and continuously update the boundary for the impact zone as the target vehicle is moving to incorporate into the target turn lane. According to an embodiment of the system, the host vehicle establishes communication with the target vehicle and requests an adjustment in a motion trajectory while incorporating into the target turn lane. According to an embodiment of the system, the adjustment comprises at least one of the steering angle, the steering rate, velocity, and acceleration.

According to an embodiment of the system, the host vehicle establishes communication with a neighboring vehicle and provides the boundary of the impact zone of the target vehicle incorporating into the target turn lane.

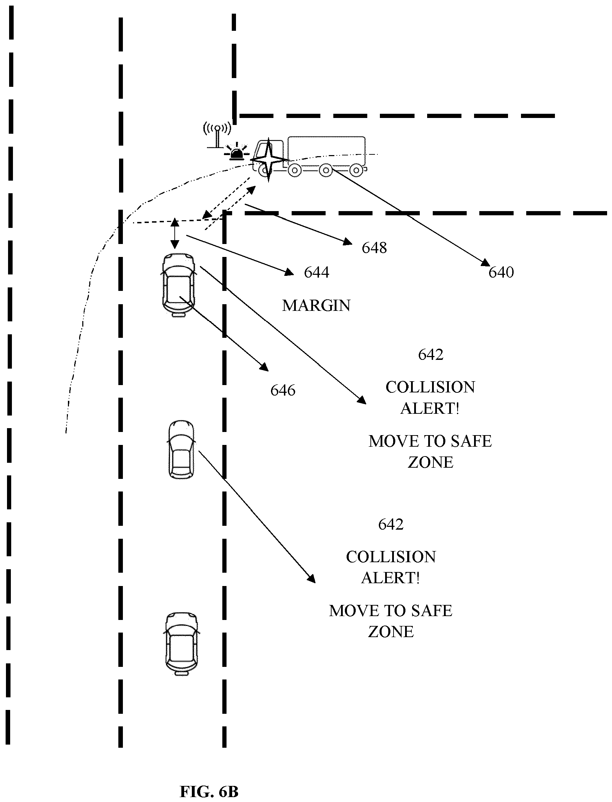

FIG. 6B shows the large vehicle 640, which is a large vehicle, broadcasting a message 642 to the vehicles that may get impacted during a turn. The communication may be V2V communication or network based communication. The communication message may comprise specific turn parameters and/or a safe margin as shown at 644 required for the vehicle to turn safely. Safe margin value may depend on the vehicle type. In an embodiment, the host vehicle 646 may calculate the safe parameter based on the information received via communication message 648 from the large vehicle 640.

According to an embodiment of the system, the communication module is enabled for at least one of a vehicle-to-vehicle (V2V) communication, a vehicle-to-infrastructure (V2I) communication, a vehicle-to-everything (V2X) communication, and a Vehicle-to-Network communication. According to an embodiment of the system, the vehicle-to-vehicle(V2V) communication is based on a wireless communication protocol using at least one of a Dedicated Short-Range Communications (DSRC), and a Cellular Vehicle-to-Everything (C-V2X) technology. According to another embodiment of the system, the V2X communication includes at least one of a Vehicle-to-Network (V2N), Vehicle-to-Grid (V2G), Vehicle-to-Device (V2D), and Vehicle-to-Pedestrian (V2P). According to an embodiment of the system, the communication comprises transmitting at least one of a data, an instruction, a message, and an information, wherein the communication module supports a communication protocol. The communication protocol comprises at least one of an Advanced Message Queuing Protocol (AMQP), Message Queuing Telemetry Transport (MQTT) protocol, Simple (or Streaming) Text Oriented Message Protocol (STOMP), Zigbee protocol, Unified Diagnostic Services (UDS) protocol, Open Diagnostic exchange format (ODX) protocol, Diagnostics Over Internet Protocol (DoIP), On-Board Diagnostics (OBD) protocol, and a predefined protocol standard.

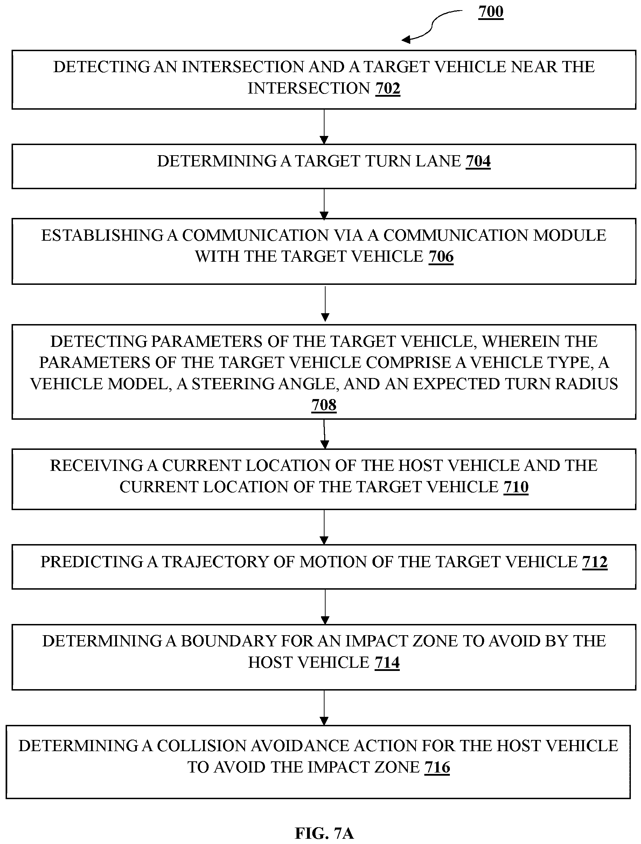

FIG. 7A shows a block diagram of a method to detect an effect of large vehicles turning into a lane, according to an embodiment.

According to an embodiment, it is a method comprising: detecting, by a processor of a host vehicle, a target vehicle nearing an intersection at step 702; detecting, by a computer vision module, a target turn lane at step 704; establishing, by the processor, a communication via a communication module with the target vehicle at step 706; receiving, by the processor, parameters of the target vehicle, wherein the parameters of the target vehicle comprise a vehicle type, a vehicle model, a steering angle, and an expected turn radius at step 708; determining, by the processor, a current location of the host vehicle and the current location of the target vehicle at step 710; predicting a trajectory of motion of the target vehicle, by the processor of the host vehicle at step 712; determining, by the processor, a boundary for an impact zone by the host vehicle at step 714; and determining, by the processor, a collision avoidance action for the host vehicle to avoid the impact zone at step 716. In an embodiment, the system is configured to autonomously executing the collision avoidance action to avoid the impact zone by the host vehicle.

In an embodiment, the parameters of the target vehicle comprise a vehicle type, a vehicle model, a steering angle may be estimated by the host vehicle and turn radius may be received via communication from the target vehicle. In an embodiment, weight of the target vehicle, additional attachments as trailers may also be received from the target vehicle.

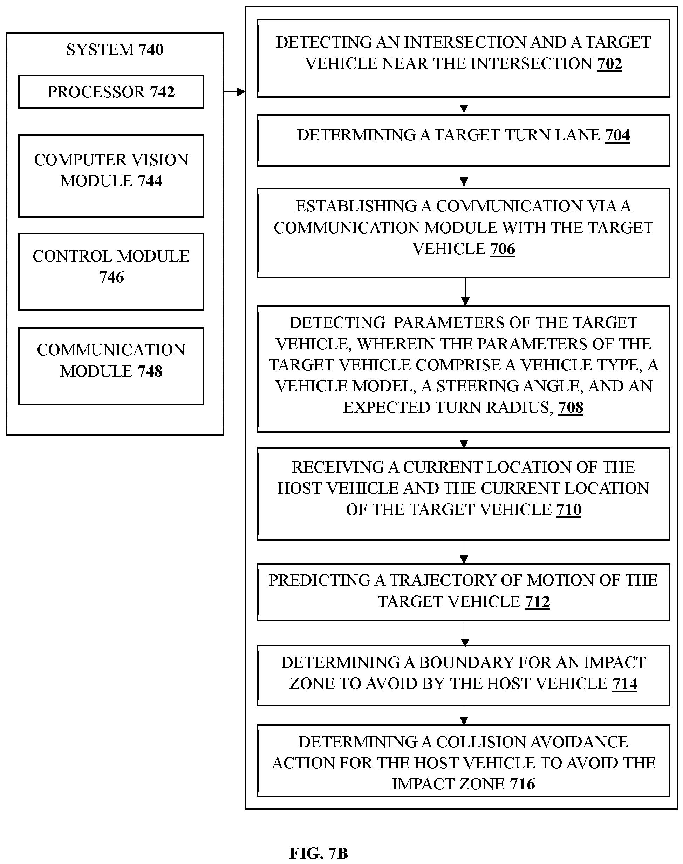

FIG. 7B shows a block diagram of a system to detect an effect of large vehicles turning into a lane, according to an embodiment.

According to an embodiment, it is a system 740, comprising: a processor 742, a computer vision module 744, a control module 746, and a communication module 748; wherein the processor is operable to: detect, by computer vision module, a target vehicle nearing an intersection at step 702; detect, by the computer vision module, a target turn lane at step 704; establish, by the processor, a communication via the communication module with the target vehicle at step 706; receive, by the processor, parameters of the target vehicle, wherein the parameters of the target vehicle comprise a vehicle type, a vehicle model, a steering angle, and an expected turn radius at step 708; determine, by the processor, a current location of the host vehicle and the current location of the target vehicle at step 710; predict a trajectory of motion of the target vehicle, by the processor at step 712; determine, by the processor, a boundary for an impact zone to avoid by the host vehicle at step 714; determine, by the processor, a collision avoidance action for the host vehicle to avoid the impact zone at step 716. In an embodiment, the system is configured to autonomously execute the collision avoidance action by the host vehicle, wherein the host vehicle is an autonomous vehicle.

In an embodiment of the system, the host vehicle establishes a communication via a communication module with the target vehicle to obtain the steering angle, a weight, and the turn radius of the target vehicle. In an embodiment of the system, the system is operable to be a component of the host vehicle.

In an embodiment of the system, the collision avoidance action comprises generating an alert in the host vehicle, wherein the alert is at least one of a text message, a visual cue, a sound alert, a tactile cue, and a vibration. In an embodiment of the system, the collision avoidance action comprises at least one of initiating a reverse movement by the host vehicle and initiating a lane change by the host vehicle. In an embodiment of the system, the collision avoidance action comprises broadcasting a message to a neighboring vehicle, wherein the message comprises an instruction of a maneuver for the neighboring vehicle for clearing the impact zone using a collective and coordinated action. In an embodiment of the system, the collision avoidance action comprises alerting the target vehicle about an impending collision.

In an embodiment of the system, the collision avoidance action comprises at least one of: generating an alert in the host vehicle, initiating a reverse movement by the host vehicle, initiating a lane change by the host vehicle, alerting the target vehicle, determining the boundary for the impact zone, and broadcasting a message to a neighboring vehicle, wherein the message comprises an instruction of a maneuver for the neighboring vehicle to clear the impact zone using a collective and coordinated action.

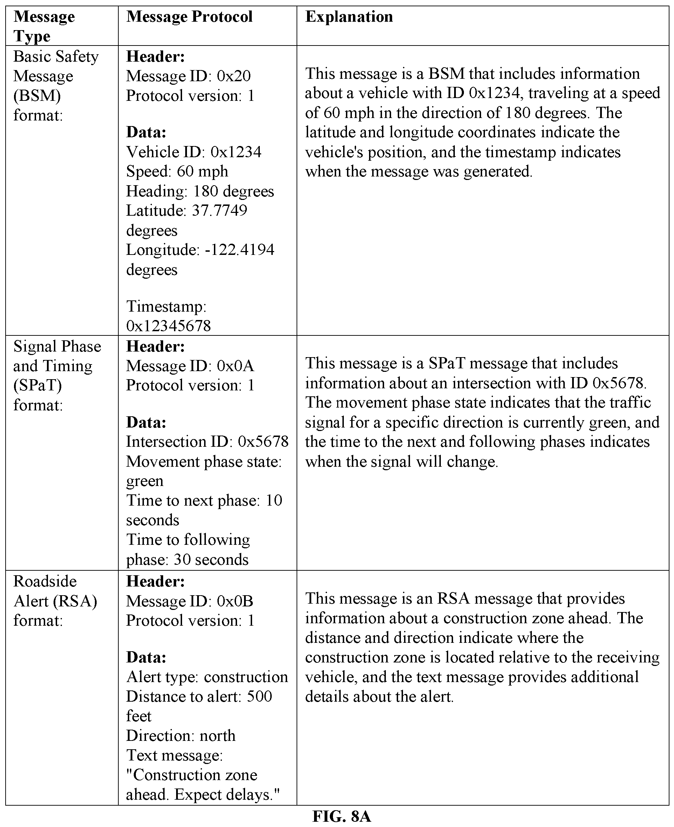

FIG. 8A shows example messages in Dedicated Short-Range Communications (DSRC) message format. FIG. 8A shows: (i) Basic Safety Message (BSM) format: BSM is a fundamental message type in DSRC, used for transmitting information about a vehicle's status, location, and movement to other vehicles in the area. In the example message, the header contains the message ID and protocol version, while the data section contains specific information about the vehicle, such as its ID, speed, heading, and position. The timestamp indicates when the message was generated and may be used by other vehicles to determine the current status of the transmitting vehicle; (ii) Signal Phase and Timing (SPaT) format: the SPaT message provides information about the current state of traffic signals at an intersection, including which phase is currently active and when the signal will change. This information may be used by vehicles to optimize their driving behavior and avoid collisions. In the example message, the header contains the message ID and protocol version, while the data section includes the ID of the intersection, the state of the movement phase, and the time remaining until the next and following phases; (iii) Roadside Alert (RSA) format: the RSA message is used to notify vehicles about hazards or other important information on the road ahead, such as construction zones, accidents, or detours. In the example message, the header contains the message ID and protocol version, while the data section includes the type of alert (construction), the distance to the alert, the direction of the alert, and a text message providing additional details about the alert.

According to an embodiment, there are other possible elements that may be included in each message format, for example, the BSM format may also include information on: acceleration, size and weight, vehicle safety extensions including Brakes, Lights, Wipers, Transmission and powertrain, Vehicle dimensions and Vehicle identification information including identification number and vehicle type.

There are several other message formats available in DSRC protocol besides the three examples provided earlier. Some of these message formats include MAP (Message Assistance for Path Provisioning) format: this message provides a map of the road network, including information about the road layout, speed limits, and other relevant details; CAM (Cooperative Awareness Message) format: similar to the BSM message format, this message provides information about a vehicle's current status, such as speed, position, and heading. CAM messages are typically sent at a higher frequency than BSM messages to support more accurate situational awareness; DENM (Decentralized Environmental Notification Message) format: this message provides information about environmental conditions that may affect driving, such as weather conditions, visibility, and road surface conditions; EV (Emergency Vehicle) format: this message provides information about emergency vehicles, such as their location and direction of travel, to help other drivers safely navigate around them; TCI (Traffic Control Information) format: this message provides information about traffic conditions, such as congestion, accidents, and construction zones, to help drivers make informed decisions about their routes.

Overall, the various message formats available in DSRC protocol support a wide range of use cases, from basic vehicle-to-vehicle communication to more complex applications such as real-time traffic management and emergency response.

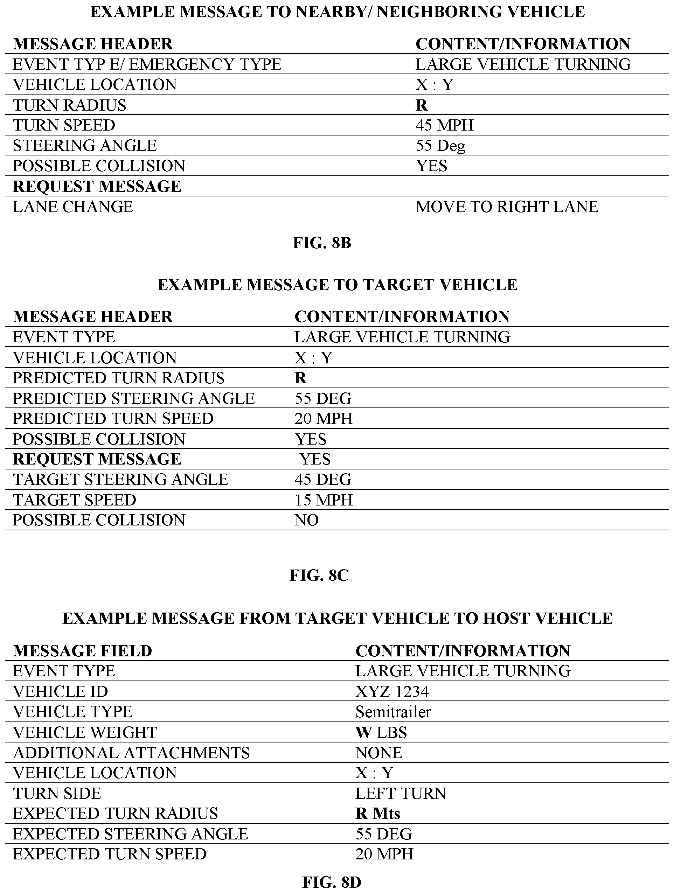

FIG. 8B shows an example message from the host vehicle to neighboring vehicles. It may comprise elements that relate to large vehicle turning alerts and a request message where it may request for a lane change or reverse so that a coordinated action may be performed. Such a message may be a broadcast message, or a message sent to an individual neighboring vehicle or a group of selected vehicles that need to execute the request.

FIG. 8C shows an example message from the host vehicle to the target vehicle. In an embodiment, it may comprise the information related to the predicted turn radius, steering angle, and a request message to adjust them to a target value so as to avoid a collision.

FIG. 8D shows an example message from the target vehicle to host vehicles. In an embodiment, it may comprise of target vehicle information and target vehicle expected steering angle, turn radius, etc. based on which a safe zone may be computed by the host vehicle.

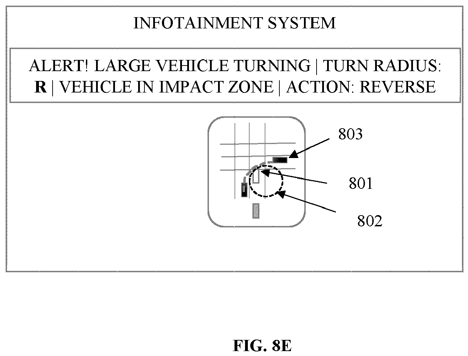

FIG. 8E shows an example alert message displayed in the host vehicle. In an embodiment, it may comprise of an alert message along with a graphical representation to show whether the host vehicle 801 is in safe zone or not, where the safe zone is shown as 802 based on the turn radius of the target vehicle 803. It may continuously update as the host vehicle tries to move into the safe zone. In an embodiment, the host vehicle may have a display at its rear end for alerting other vehicles via a visual cue.

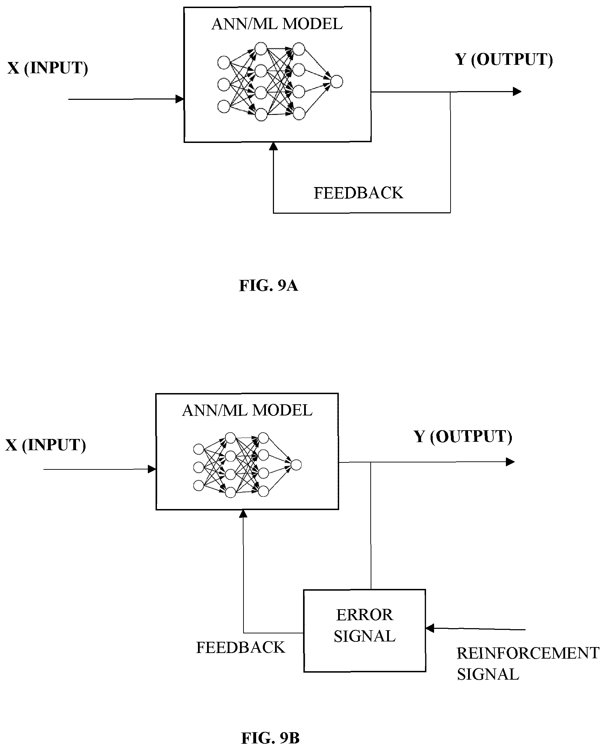

FIG. 9A shows a structure of the neural network / machine learning model with a feedback loop. Artificial neural networks (ANNs) model comprises an input layer, one or more hidden layers, and an output layer. Each node, or artificial neuron, connects to another and has an associated weight and threshold. If the output of any individual node is above the specified threshold value, that node is activated, sending data to the next layer of the network. Otherwise, no data is passed to the next layer of the network. A machine learning model or an ANN model may be trained on a set of data to take a request in the form of input data, make a prediction on that input data, and then provide a response. The model may learn from the data. Learning may be supervised learning and/or unsupervised learning and may be based on different scenarios and with different datasets. Supervised learning comprises logic using at least one of a decision tree, logistic regression, and support vector machines. Unsupervised learning comprises logic using at least one of a k-means clustering, a hierarchical clustering, a hidden Markov model, and an apriori algorithm. The output layer may predict or detect a collision and the severity of the collision based on the input data, such as target vehicle parameters, host vehicle and target vehicle locations and orientations.

In an embodiment, ANN's may be a Deep-Neural Network (DNN), which is a multilayer tandem neural network comprising Artificial Neural Networks (ANN), Convolution Neural Networks (CNN) and Recurrent Neural Networks (RNN) that may recognize features from inputs, do an expert review, and perform actions that require predictions, creative thinking, and analytics. In an embodiment, ANNs may be Recurrent Neural Network (RNN), which is a type of Artificial Neural Networks (ANN), which uses sequential data or time series data. Deep learning algorithms are commonly used for ordinal or temporal problems, such as language translation, Natural Language Processing (NLP), speech recognition, and image recognition, etc. Like feedforward and convolutional neural networks (CNNs), recurrent neural networks utilize training data to learn. They are distinguished by their "memory" as they take information from prior input via a feedback loop to influence the current input and output. An output from the output layer in a neural network model is fed back to the model through the feedback. The variations of weights in the hidden layer(s) will be adjusted to fit the expected outputs better while training the model. This will allow the model to provide results with far fewer mistakes.

The neural network is featured with the feedback loop to adjust the system output dynamically as it learns from the new data. In machine learning, backpropagation and feedback loops are used to train an AI model and continuously improve it upon usage. As the incoming data that the model receives increases, there are more opportunities for the model to learn from the data. The feedback loops, or backpropagation algorithms, identify inconsistencies and feed the corrected information back into the model as an input.

Even though the AI/ML model is trained well, with large sets of labeled data and concepts, after a while the models' performance may decline while adding new, unlabeled input due to many reasons which include, but not limited to, concept drift, recall precision degradation due to drifting away from true positives, and data drift over time. A feedback loop to the model keeps the AI results accurate and ensures that the model maintains its performance and improvement, even when new unlabeled data is assimilated. A feedback loop refers to the process by which an AI model's predicted output is reused to train new versions of the model.

Initially, when the AI/ML model is trained, a few labeled samples comprising both positive and negative examples of the concepts (e.g., vehicle, tire orientation) are used that are meant for the model to learn. Afterward, the model is tested using unlabeled data. By using, for example, deep learning and neural networks, the model may then make predictions on whether the desired concept/s (for e.g., steering angle for a tire orientation detected, a turn prediction based on face position in an image, etc.) are in unlabeled images. Each image is given a probability score where higher scores represent a higher level of confidence in the models' predictions. Where a model gives an image a high probability score, it is auto-labeled with the predicted concept. However, in the cases where the model returns a low probability score, this input may be sent to a controller (maybe a human moderator) which verifies and, as necessary, corrects the result. The human moderator may be used only in exception cases. The feedback loop feeds labeled data, auto-labeled or controller-verified, back to the model dynamically and is used as training data so that the system may improve its predictions in real-time and dynamically.

FIG. 9B shows a structure of the neural network / machine learning model with reinforcement learning. The network receives feedback from authorized networked environments. Though the system is similar to supervised learning, the feedback obtained in this case is evaluative, not instructive, which means there is no teacher as in supervised learning. After receiving the feedback, the network performs adjustments of the weights to get better predictions in the future. Machine learning techniques, like deep learning, allow models to take labeled training data and learn to recognize those concepts in subsequent data and images. The model may be fed with new data for testing, hence by feeding the model with data it has already predicted over, the training gets reinforced. If the machine learning model has a feedback loop, the learning is further reinforced with a reward for each true positive of the output of the system. Feedback loops ensure that AI results do not stagnate. By incorporating a feedback loop, the model output keeps improving dynamically and over usage/time.

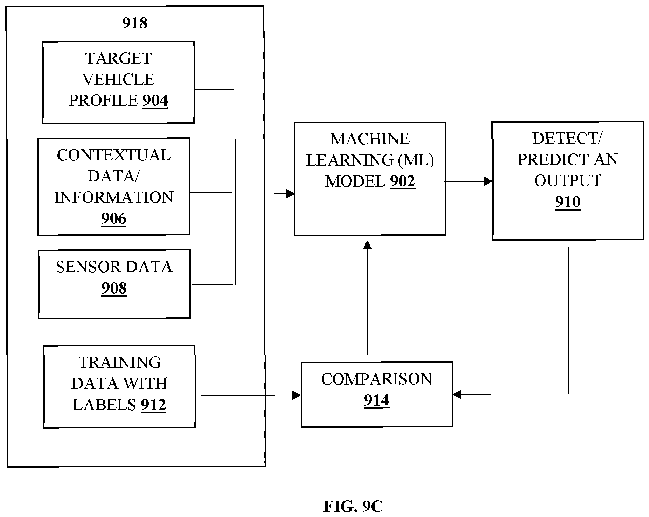

FIG. 9C shows an example block diagram for detecting an impact zone using a machine learning model. The machine learning model 902 may take as input any data associated with the host vehicle and the target vehicle and learn to identify features within the data that are predictive of turning path/ trajectory. The training data sample may include, for example, the target vehicle information/data/profile 904, such as the size, dimensions, vehicle type, vehicle model, weight, length, etc. In an embodiment, it relates to systems and methods that identify a target vehicle and its features in real time using an on-board camera and/or other sensors. This vehicle identification and feature information are transmitted to the cloud, where the vehicle identification is coupled with available turning radius and trajectory predictions in the case of a previously identified vehicle of a similar class and built having similar characteristics. Subsequently, the information is used to compute/ estimate a turning trajectory. The systems and methods of the present disclosure may also provide data analytics information that may be used later to improve vehicle safety. When a host vehicle is near an intersection, sensors and cameras of the host vehicle and a facial recognition algorithm or the like may be used to detect the vehicle characteristics and estimate a turn profile.

In an embodiment, the training data sample may also include current contextual information 906 relating to the surrounding environment. This may include, for example, location of the vehicle, current weather conditions, temperature, time of day, traffic conditions in the region, curb radius, other obstacles, etc. The system may also garner contextual information 906 from a device associated with the vehicle. For example, through an application installed on the device, such as Google^{®} maps and location services, the system may know the vehicle details.

Real-time sensor data 908 may include, for example, video, image, audio, infrared, temperature, 3D modeling, and any other suitable types of data that capture the current state around the host vehicle. In an embodiment, the real-time sensor data may be processed using one or more machine learning models 902 trained and based on similar types of data to predict real-time features of the target vehicle. The real-time features may include, for example, the target vehicle size, shape, dimensions, signal lights, etc. Current information about the target may be used for the estimation of turn radius trajectories and detection of safe and impact zones. For example, currently detected sensor data and/or previously known information about the target vehicle class and / or intersection dimensions may be used to predict a safe zone and an impact zone.

Any of the aforementioned types of data (e.g., target vehicle information/data/profile 904, contextual information 906, sensor data 908, or any other data) may correlate with the impact zone and the safe zone computations, and such correlation may be automatically learned by the machine learning model 902. In an embodiment, during training, the machine learning model 902 may process the training data sample (e.g., target vehicle information/data/profile 904 and/or contextual information 906) and, based on the current parameters of the machine learning model 902, detect or predict an output 910 which may be a probability of collision i.e., a collision probability and / or safe zone and collision zone. The detection or prediction of a collision probability and / or safe zone and collision zone may depend on the training data with labels 912 associated with the training data sample 918. Predicting a collision probability and / or safe zone and collision zone refers to predicting a future event based on past and present data and most commonly by analysis, estimation of trends or data patterns. Prediction or predictive analysis employs probability based on the data analyses and processing. Detection of collision probability and / or safe zone and collision zone refers to an onset of the event and the system detecting the same. Predicted events may or may not turn into a collision based on how the turn of events occur. In an embodiment, during training, the detected event at 910 and the training data with labels 912 may be compared at 914. For example, comparison 914 may be based on a loss function that measures a difference between the detected event 910 and the training data with labels 912. Based on the comparison at 914 or the corresponding output of the loss function, a training algorithm may update the parameters of the machine learning model 902, with the objective of minimizing the differences or loss between subsequent predictions or detections of the event 910 and the corresponding labels 912. By iteratively training in this manner, the machine learning model 902 may "learn" from the different training data samples and become better at detecting various collision events at 910 that are similar to the ones represented by the training labels at 912. In an embodiment, the machine learning model 902 is trained using data which is specific to a type of target for which the model is used for detecting a collision to estimate safe zone and impact zone. In an embodiment, the machine learning model 902 is trained using data which is general to the vehicle types and is used for detecting a collision probability and thus determining a safe and an impact zone.

Using the training data, a machine learning model 902 may be trained so that it recognizes features of input data that signify or correlate to certain event types. For example, a trained machine learning model 902 may recognize data features that signify the likelihood of an emergency situation, as an actionable event. Through training, the machine learning model 902 may learn to identify predictive and non-predictive features and apply the appropriate weights to the features to optimize the machine learning model's 902 predictive accuracy. In embodiments where supervised learning is used and each training data sample 918 has a label 912, the training algorithm may iteratively process each training data sample 918 (including target vehicle information/data/profile 904, contextual information 906, and/or sensor data 908), and generate a prediction of collision event 910 based on the model's 902 current parameters. Based on the comparison 914 results, the training algorithm may adjust the model's 902 parameters/configurations (e.g., weights) accordingly to minimize the differences between the generated prediction of collision event 910 and the corresponding labels 912. Any suitable machine learning model and training algorithm may be used, including, e.g., neural networks, decision trees, clustering algorithms, and any other suitable machine learning techniques. Once trained, the machine learning model 902 may take input data associated with a target vehicle and output one or more predictions that indicate a collision probability based on the host vehicle location and may suggest a safe location to the host vehicle.

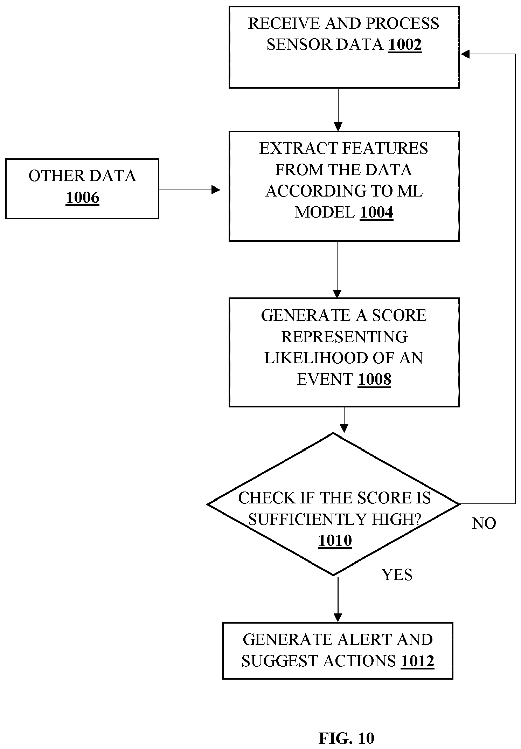

FIG. 10 shows an example flow chart for detecting a collision with the host vehicle's current location using a machine learning model. The system may receive data associated with sensor output(s) from one or more sensors in the host vehicle as shown at 1002. Any type of sensor may be used to gather data pertaining to the target vehicle. A sensor output may be, for example, images, videos, audios, LiDAR measures, infrared measures, temperature measures, GPS data, or any other information measured or detected by sensors. In an embodiment, a sensor output may be the result of one or more sensors capturing environmental information associated with the surroundings of the host vehicle, which may include traffic at the location, curb margins, intersection details, etc. For example, sensor output may be associated with a passenger in the vehicle including the driver. In an embodiment, data associated with sensor output may include the raw sensor output (e.g., the images, videos, audios, etc.) and/or data derived from processing the sensor output. As an example, derivative data from image, video or LiDAR data may include data representing identified objects, motion, gestures, facial expressions, posture, eye position, etc. The system may receive any data associated with the sensor output from sensors, including raw sensory output and/or any derivative data. In an embodiment, the system may process the received data and identify any actionable event of interest using a machine learning model, trained using a set of training data. The system may also receive any other data as shown at 1006, wherein other data could be weather data, manual input, a broadcast message from other traffic related objects such as vehicle and infrastructure etc.

As shown at 1004, the system may extract features from the received data according to a machine learning model. The machine learning model is able to automatically do so based on what it learned during the training process. In an embodiment, appropriate weights that were learned during the training process may be applied to the features.

At step 1008, the machine learning model, based on the features of the received data, may generate a score representing a likelihood or confidence that the received data is associated with a particular event type, e.g., a collision due to a particular vehicle type at an intersection, etc.

As shown at 1010, the system may determine whether the score is sufficiently high relative to a threshold or criteria to warrant certain action. If the score is not sufficiently high, thus indicating a false-positive, the system may return to step 1002 and continue to monitor subsequent incoming data. On the other hand, if the score is sufficiently high, then at step 1012 the system may generate an appropriate alert and/or determine an appropriate action/response. In an embodiment, the system may send alerts to appropriate recipients based on the detected event types. For instance, an alert is generated in the host vehicle, and a message is sent to nearby vehicles.

In an embodiment, the system may repeat one or more steps of the method of FIG. 10, where appropriate. In an embodiment, the steps 1002 to 1012 may be performed by the system, any combination of those steps may be performed by any other computing system, for example a remote network or a cloud network. In an embodiment, where machine learning models are used for making such determination, the system may transmit a trained machine learning model to the computing system in the vehicle to allow event-detection to occur locally. This may be desirable since sensor data may be overly large to transmit to the remote system in a timely fashion.

In an embodiment, the system is provided, wherein the facial expression recognition module utilizes a Convolutional Neural Networks (CNN) pre-training process; and/or wherein the machine learning (ML) algorithm contains a bounding box procedure around the subject's face; and/or wherein the bounding box procedure utilizes a Viola-Jones detection algorithm; and/or wherein the face recognition module utilizes Facial Expression Recognition (FER) algorithms. In an embodiment, one or more currently obtained facial expressions from the camera are compared to thresholds for pre-trained emergency classifications to determine when a current classification is an emergency. The use of a recurrent neural network architecture comes from its ability to use past, temporal information for inference on current inputs. Long short term memories (LSTMs) offer a computationally efficient way to train these networks. For example, video sequences of different vehicle types with their trajectory information at a turn may be used to train the LSTMs. By virtue of this training mechanism, the model may predict given real time video input when a collision is imminent given a host vehicle location. According to an embodiment of the system, the bounding box algorithm is used in conjunction with a machine learning algorithm for object detection, wherein the machine learning algorithm is a convolutional neural network (CNN).

In an embodiment, the system may comprise a cyber security module. In one aspect, a secure communication management (SCM) computer device for providing secure data connections is provided. The SCM computer device includes a processor in communication with memory. The processor is programmed to receive, from a first device, a first data message. The first data message is in a standardized data format. The processor is also programmed to analyze the first data message for potential cyber security threats. If the determination is that the first data message does not contain a cyber security threat, the processor is further programmed to convert the first data message into a first data format associated with the vehicle environment and transmit the converted first data message into a first data format associated with the vehicle environment and transmit the converted first data message to the communication module using a first communication protocol associated with the negotiated protocol.

According to an embodiment, secure authentication for data transmissions comprises, provisioning a hardware-based security engine (HSE) located in the cyber security module, said HSE having been manufactured in a secure environment and certified in said secure environment as part of an approved network; performing asynchronous authentication, validation and encryption of data using said HSE, storing user permissions data and connection status data in an access control list used to define allowable data communications paths of said approved network, enabling communications of the cyber security module with other computing system subjects (e.g., communication module) to said access control list, performing asynchronous validation and encryption of data using security engine including identifying a user device (UD) that incorporates credentials embodied in hardware using a hardware-based module provisioned with one or more security aspects for securing the system, wherein security aspects comprising said hardware-based module communicating with a user of said user device and said HSE.

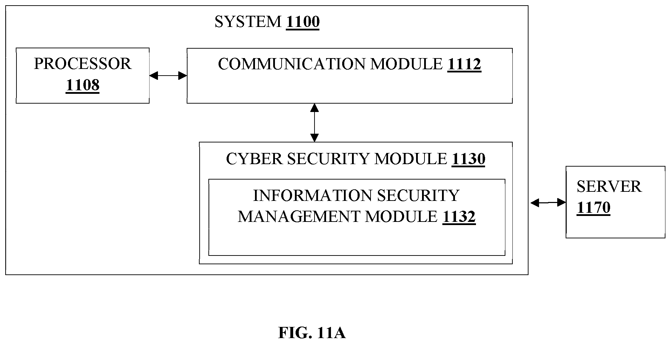

FIG. 11A shows the block diagram of the cyber security module according to an embodiment. In an embodiment, FIG. 11A shows the block diagram of the cyber security module. The communication of data between the system 1100 and the server 1170 through the communication module 1112 is first verified by the information security management module 1132 of cybersecurity module 1130 before being transmitted from the system to the server or from the server to the system. The information security management module is operable to analyze the data for potential cyber security threats, to encrypt the data when no cyber security threat is detected, and to transmit the data encrypted to the system or the server. System 1100 comprises a processor 1108.

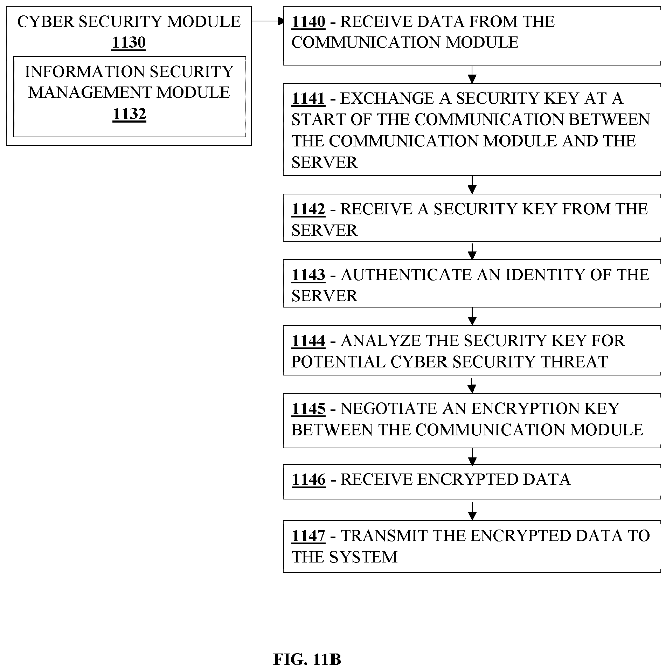

In an embodiment, the cyber security module further comprises an information security management module providing isolation between the system and the server. FIG. 11B shows the flowchart of securing the data through the cyber security module 1130. At step 1140, the information security management module is operable to receive data from the communication module. At step 1141, the information security management module exchanges a security key at the start of the communication between the communication module and the server. At step 1142, the information security management module receives a security key from the server. At step 1143, the information security management module authenticates an identity of the server by verifying the security key. At step 1144, the information security management module analyzes the security key for potential cyber security threats. At step 1145, the information security management module negotiates an encryption key between the communication module and the server. At step 1146, the information security management module receives the encrypted data. At step 1147, the information security management module transmits the encrypted data to the server when no cyber security threat is detected.

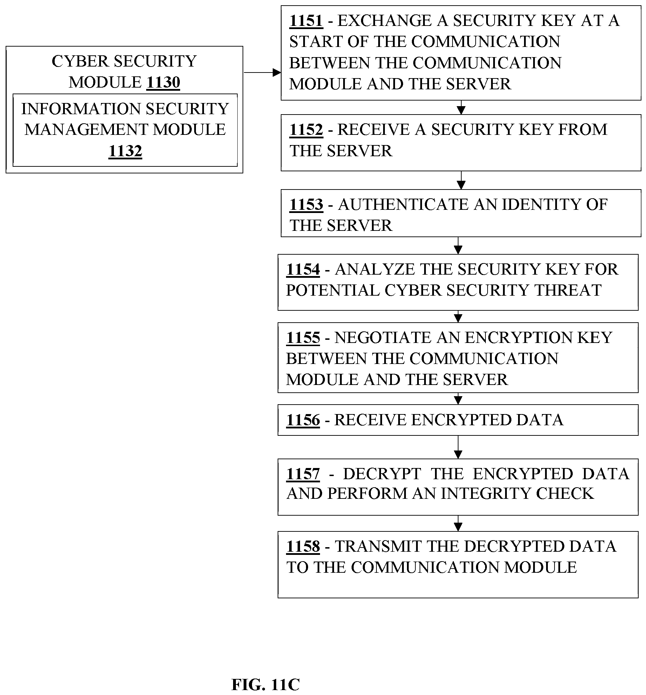

In an embodiment, FIG. 11C shows the flowchart of securing the data through the cyber security module 1130. At step 1151, the information security management module is operable to: exchange a security key at the start of the communication between the communication module and the server. At step 1152, the information security management module receives a security key from the server. At step 1153, the information security management module authenticates an identity of the server by verifying the security key. At step 1154, the information security management module analyzes the security key for potential cyber security threats. At step 1155, the information security management module negotiates an encryption key between the communication module and the server. At step 1156, the information security management module receives encrypted data. At step 1157, the information security management module decrypts the encrypted data, and performs an integrity check of the decrypted data. At step 1158, the information security management module transmits the decrypted data to the communication module when no cyber security threat is detected.

In an embodiment, the integrity check is a hash-signature verification using a Secure Hash Algorithm 256 (SHA256) or a similar method. In an embodiment, the information security management module is configured to perform asynchronous authentication and validation of the communication between the communication module and the server.

In an embodiment, the information security management module is configured to raise an alarm if a cyber security threat is detected. In an embodiment, the information security management module is configured to discard the encrypted data received if the integrity check of the encrypted data fails.

In an embodiment, the information security management module is configured to check the integrity of the decrypted data by checking accuracy, consistency, and any possible data loss during the communication through the communication module.

In an embodiment, the server is physically isolated from the system through the information security management module. When the system communicates with the server as shown in FIG. 11A, identity authentication is first carried out on the system and the server. The system is responsible for communicating/exchanging a public key of the system and a signature of the public key with the server. The public key of the system and the signature of the public key are sent to the information security management module. The information security management module decrypts the signature and verifies whether the decrypted public key is consistent with the received original public key or not. If the decrypted public key is verified, the identity authentication is passed. Similarly, the system and the server carry out identity authentication on the information security management module. After the identity authentication is passed on to the information security management module, the two communication parties, the system, and the server, negotiate an encryption key and an integrity check key for data communication of the two communication parties through the authenticated asymmetric key. A session ID number is transmitted in the identity authentication process, so that the key needs to be bound with the session ID number; when the system sends data to the outside, the information security gateway receives the data through the communication module, performs integrity authentication on the data, then encrypts the data through a negotiated secret key, and finally transmits the data to the server through the communication module. When the information security management module receives data through the communication module, the data is decrypted first, integrity verification is carried out on the data after decryption, and if verification is passed, the data is sent out through the communication module; otherwise, the data is discarded. In an embodiment, the identity authentication is realized by adopting an asymmetric key with a signature.

In an embodiment, the signature is realized by a pair of asymmetric keys which are trusted by the information security management module and the system, wherein the private key is used for signing the identities of the two communication parties, and the public key is used for verifying that the identities of the two communication parties are signed. Signing identity comprises a public and a private key pair. In other words, signing identity is referred to as the common name of the certificates which are installed in the user's machine.

In an embodiment, both communication parties need to authenticate their own identities through a pair of asymmetric keys, and a task in charge of communication with the information security management module of the system is identified by a unique pair of asymmetric keys.

In an embodiment, the dynamic negotiation key is encrypted by adopting an Rivest-Shamir-Adleman (RSA) encryption algorithm. RSA is a public-key cryptosystem that is widely used for secure data transmission. The negotiated keys include a data encryption key and a data integrity check key.

In an embodiment, the data encryption method is a Triple Data Encryption Algorithm (3DES) encryption algorithm. The integrity check algorithm is a Hash-based Message Authentication Code (HMAC-MD5-128) algorithm. When data is output, the integrity check calculation is carried out on the data, the calculated Message Authentication Code (MAC) value is added with the header of the value data message, then the data (including the MAC of the header) is encrypted by using a 3DES algorithm, the header information of a security layer is added after the data is encrypted, and then the data is sent to the next layer for processing. In an embodiment the next layer refers to a transport layer in the Transmission Control Protocol / Internet Protocol (TCP/IP) model.

The information security management module ensures the safety, reliability, and confidentiality of the communication between the system and the server through the identity authentication when the communication between the two communication parties starts the data encryption and the data integrity authentication. The method is particularly suitable for an embedded platform which has less resources and is not connected with a Public Key Infrastructure (PKI) system and may ensure that the safety of the data on the server cannot be compromised by a hacker attack under the condition of the Internet by ensuring the safety and reliability of the communication between the system and the server.

### Example implementation:

By performing computer vision algorithms, the autonomous vehicle will conclude if the large vehicle may impact the autonomous vehicle or not. In an embodiment, it is a method to detect and manage situations where a large vehicle may hit another vehicle when performing a turn.

In some embodiments, the disclosed methods may be implemented as computer program instructions encoded on a computer-readable storage media in a machine-readable format, or on other non-transitory media or articles of manufacture.

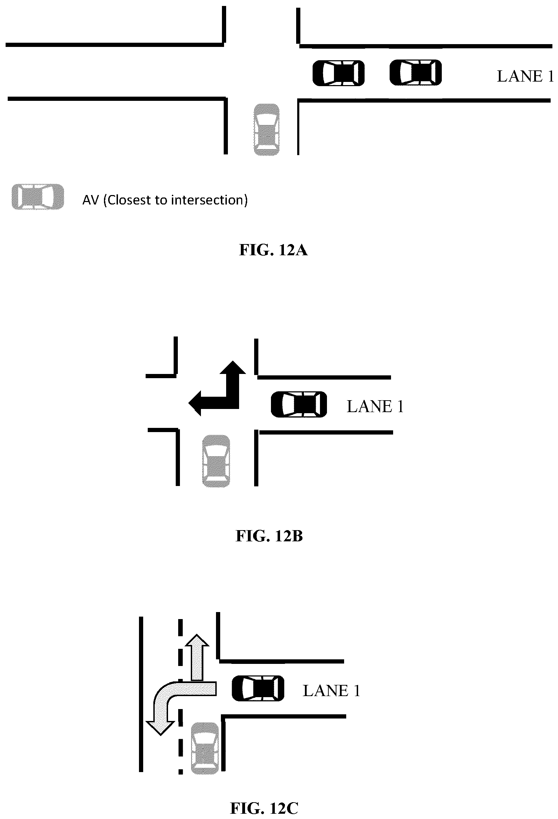

FIG. 12A shows an autonomous vehicle stopping at an intersection and detecting whether it is the closest vehicle to the intersection, according to an embodiment. An autonomous vehicle driving to its destination will detect other vehicles nearing intersections, will use lane detection for other vehicles traveling or stopping at the intersection, and/or will use GPS information to detect vehicles nearing the intersection. If the autonomous vehicle stops at an intersection, the autonomous vehicle will detect if the autonomous vehicle is the closest vehicle to the intersection by vehicle detection, intersection detection and signal detections. If the autonomous vehicle is not the closest vehicle to the intersection, the process may end.

FIG. 12B and FIG. 12C shows an autonomous vehicle stopping at an intersection and detecting whether vehicles in other lanes are incorporated in the opposite or perpendicular direction to the lane in which the autonomous vehicle is present, according to an embodiment. The autonomous vehicle will detect if the vehicles in lane 1 may incorporate in the opposite direction the autonomous vehicle is driving (via Lane detection or GPS info). An example lane configuration and direction of incorporation are shown in FIG. 12B and FIG. 12C. More lane configurations are possible and are easily accommodated by the system and the methods. If, the vehicles in lane 1 are detected to continue straight or turn right as shown in FIG. 12B, the process may end. If the vehicles in lane 1 may incorporate in the opposite direction autonomous vehicle is driving as shown in FIG. 12C, the process will continue further.

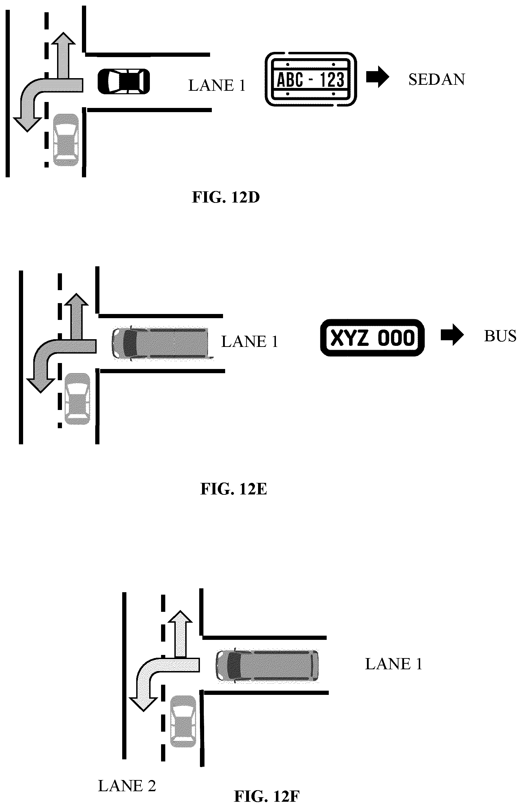

FIG. 12D and FIG. 12E shows an autonomous vehicle stopping at an intersection and detecting the vehicle's sign board in other lanes, according to an embodiment. The autonomous vehicle will detect the license plate number of the vehicle in lane 1 to detect the vehicle type with the help of a database. The vehicle detected by the autonomous vehicle may be a regular sized vehicle as shown in FIG. 12D or a large vehicle as shown in FIG. 12E. If a large vehicle is detected, the process will continue to find other details from the large vehicle.

FIG. 12F shows an autonomous vehicle stopping at an intersection and detecting the vehicle's signal lights in other lanes present, according to an embodiment. The autonomous vehicle will detect turning lights on the large vehicle in lane 1 to detect if the large vehicle will turn left or right. If the autonomous vehicle does not detect the turning light, the autonomous vehicle will perform other detections to conclude what the driver is going to do.

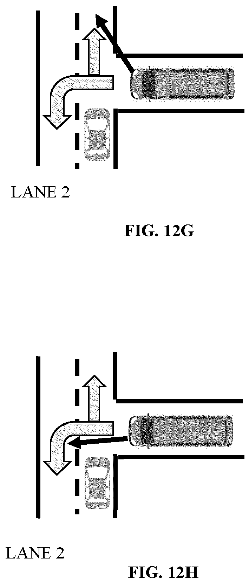

FIG. 12G and FIG. 12H shows an autonomous vehicle stopping at an intersection and performing face detection to predict a turning direction according to an embodiment. The autonomous vehicle will perform face detection and side-view face detection to determine where the driver is looking to predict a direction in which the large vehicle may turn. For example, if the autonomous vehicle detects that the driver is looking in the right direction, though a face is not detected as shown in FIG. 12G, the autonomous vehicle will conclude that the large vehicle is turning right. However, if the driver's face is looking straight or left as shown in FIG. 12H, then the autonomous vehicle may conclude the driver may turn left. In case the directions are inconclusive, then the autonomous vehicle will perform additional detections to continue and confirm the direction of turn of the large vehicle.

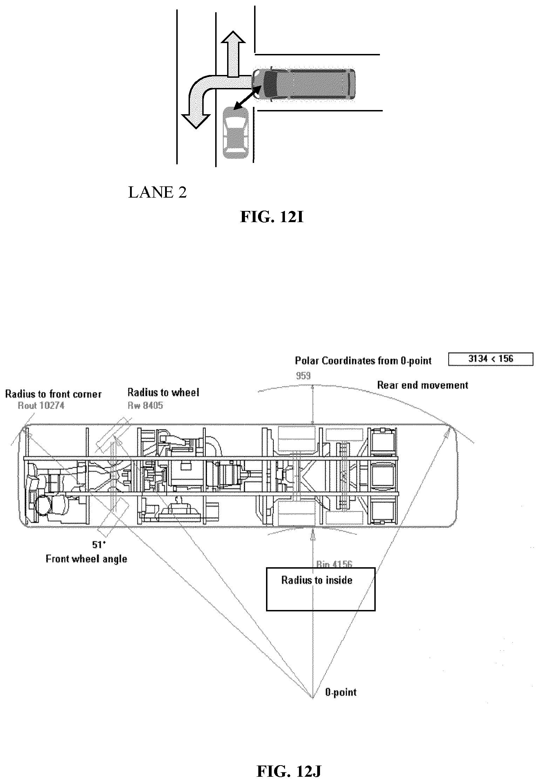

FIG. 12I shows an autonomous vehicle stopping at an intersection and establishing communication with the large vehicle to predict a turning direction according to an embodiment. If the autonomous vehicle detects that the large vehicle is incorporating into lane 2, the autonomous vehicle will establish a communication link with the large vehicle. The communication may be V2V or with internet connection, i.e., cloud server. With the license plate number already detected, the autonomous vehicle may obtain the large vehicle's steering wheel angle. In an embodiment, the large vehicle, in this example a Bus, will also share with the autonomous vehicle the turn radius needed by the bus depending on the steering wheel angle.

FIG. 12J shows an autonomous vehicle computing a turning direction, according to an embodiment. In an embodiment, this information may be obtained empirically or with a simulator that is either available on the local computer of the vehicle or on a server with which the autonomous vehicle may establish connection. An example of a bus turning radius simulator is BusWIN^{®}. The turning radius that the autonomous vehicle will obtain may be "Radius to inside", which will vary based on the vehicle type and the steering wheel angle.

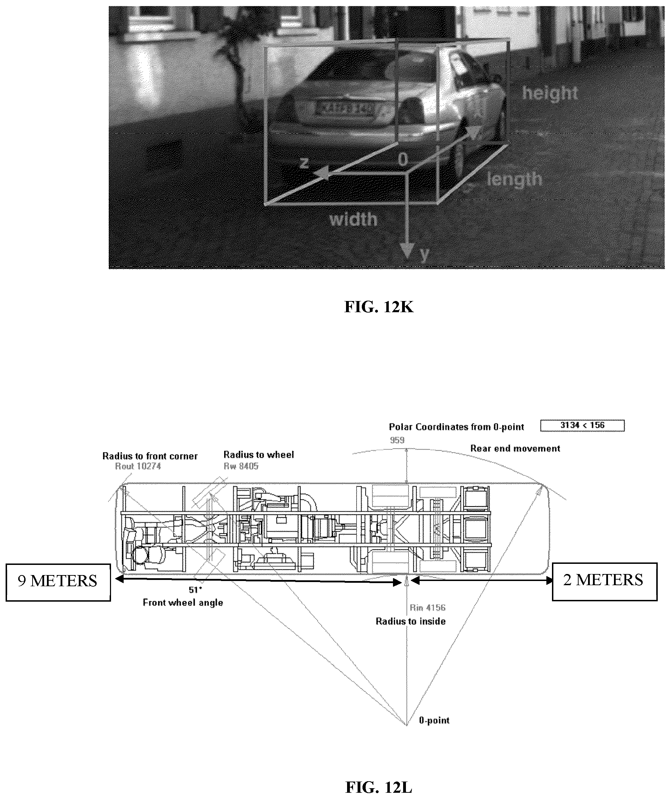

FIG. 12K shows an autonomous vehicle using the bounding box method to extract a lower edge of the large vehicle to predict a turning direction according to an embodiment. The autonomous vehicle will detect a bounding box of the vehicle in lane 1 and will extract the lower edge of the box (Length).

FIG. 12L shows an autonomous vehicle extracting a point along the lower edge of the large vehicle to map a turn radius, according to an embodiment. The autonomous vehicle may obtain from vehicle in lane 1, a point along the lower edge to map the turn radius.

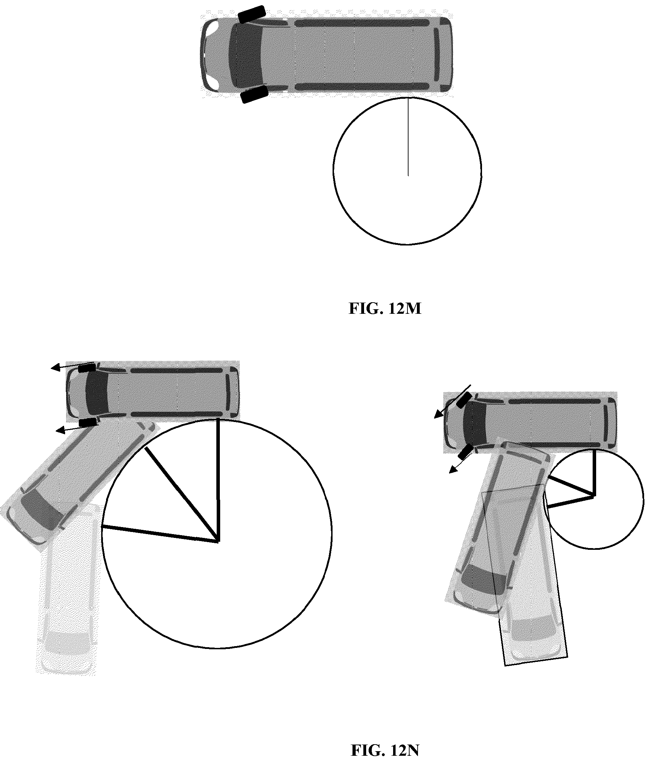

FIG. 12M shows an imaginary turn radius mapped, according to an embodiment. The autonomous vehicle will create an imaginary line, perpendicular to the lower edge of the box and with a length of radius obtained either by computation or from communicating with the large vehicle. For this step, the autonomous vehicle may use a virtual map or GPS information.

FIG. 12N shows turn radius variations according to the steering angle of the large vehicle, according to an embodiment. The larger the angle of the wheels the smaller the radius.

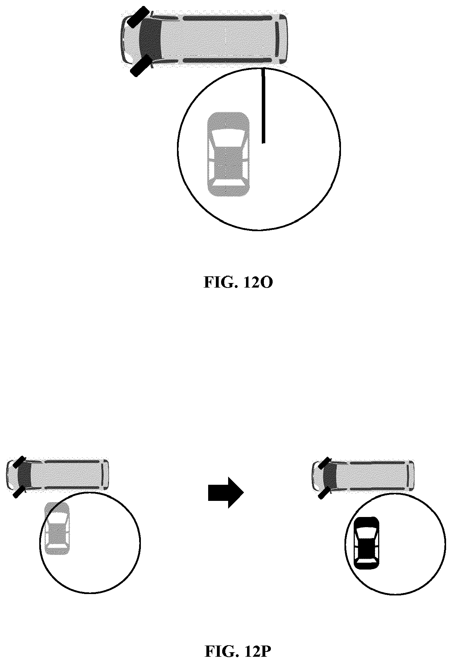

FIG. 12O shows mapping of the current location of the autonomous vehicle along with the turn radius according to the steering angle of the large vehicle to detect safe areas, according to an embodiment. Since the autonomous vehicle knows its location in the GPS, the location of vehicle in lane 1 and the radius, the autonomous vehicle may detect in real time if the bus has enough room to turn safely (without hitting the AV). If vehicle 1 has enough room to turn, the process will end.

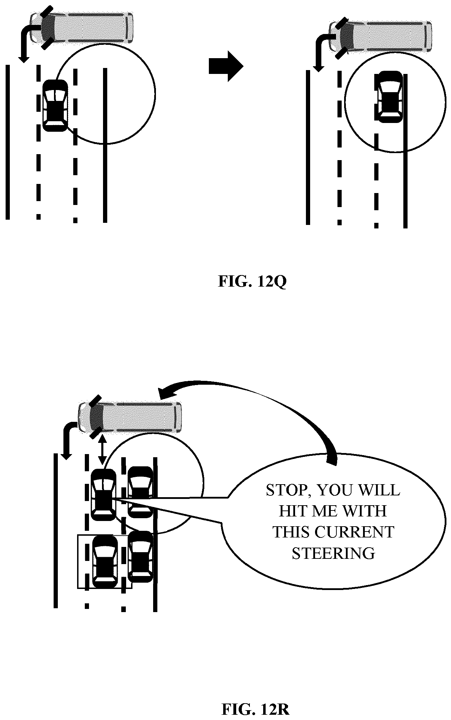

FIG. 12P and FIG. 12Q shows the autonomous vehicle moving inside the safe area, according to an embodiment. If the autonomous vehicle detects that the autonomous vehicle is in the Impact Zone, the autonomous vehicle will try to enter the safe area. For example, the autonomous vehicle will reverse, if possible. Autonomous vehicles may also perform a lane change, if possible.

FIG. 12R shows the autonomous vehicle communicating with the large vehicle about the impending collision due to the turning radius of the large vehicle, according to an embodiment. If the autonomous vehicle detects that the large vehicle will hit the autonomous vehicle because the autonomous vehicle cannot move out of the impact area or impact zone to safe area due to, for example, the density of vehicles, the autonomous vehicle will send a notification to the large vehicle driver.

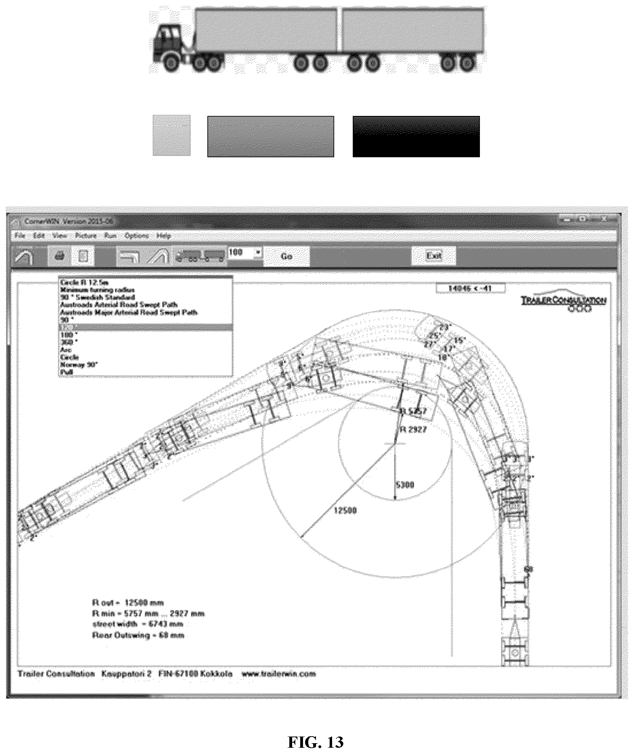

FIG. 13 shows a computation of the turn radius of a trailer truck, according to an embodiment. In an embodiment, the large vehicle class includes, but is not limited to, a bus, a semitruck, a tractor-trailer, a dump truck, a fire truck, a construction vehicle, a military vehicle, an emergency response vehicle, an agricultural vehicle, etc. The turn radius of a trailer truck may be different for each of the attached trailers. The changes in radius due to the steering angle and distance from the center of rotation are considered to determine the overall safe area.

In an embodiment, while computing the "Safe area", road conditions, weight of the heavy vehicle, variations in the steering angle while the vehicle is taking a turn, distance from the intersection to autonomous vehicle, autonomous vehicle's location with respect to the large vehicle are considered. While computing the "safe area", the autonomous vehicle may give some extra distance from the circle to assure that the autonomous vehicle will not be hit by the large vehicle.

### Example implementation:

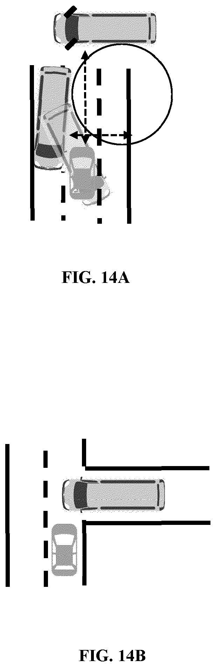

FIG. 14A shows the safe area for the autonomous vehicle while the large vehicle is taking a turn, according to an embodiment. Although the autonomous vehicle is outside the circle, the autonomous vehicle would detect it as a "safe area" since the Bus is expected to continue straight and not continue turning.

FIG. 14B shows the safe area for the autonomous vehicle for zero steering angle while the large vehicle is taking a turn according to an embodiment. When the steering angle is close to zero, the turning radius tends to be infinite.

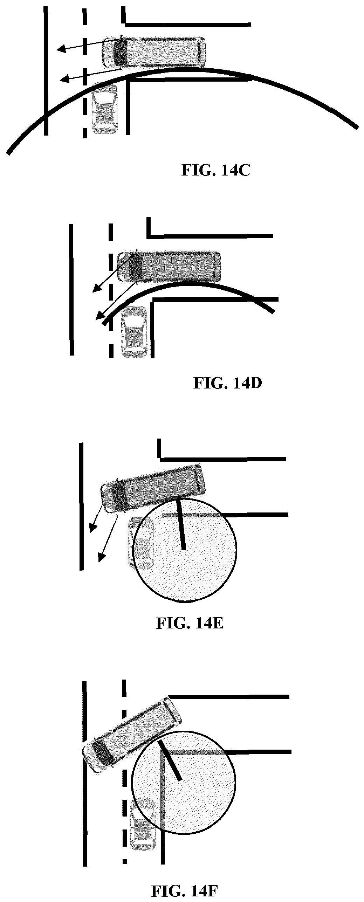

FIG. 14C shows the safe area for the autonomous vehicle for a steering angle while the large vehicle is taking a turn according to an embodiment. As the bus approaches the lane, the steering wheel angle increases, therefore the radius/circle starts decreasing.

FIG. 14D shows the safe area for the autonomous vehicle for a steering angle while the large vehicle is taking a turn according to an embodiment. As the bus further approaches the lane, the steering wheel angle further increases, therefore the radius/circle starts decreasing further.

FIG. 14E shows the safe area for the autonomous vehicle for maximum steering angle while the large vehicle is taking a turn according to an embodiment. When steering angle is maxed, turning radius is the smallest possible.

FIG. 14F shows the autonomous vehicle moving to the safe area according to an embodiment. The autonomous vehicle will move a bit in reverse to keep in the safe area.

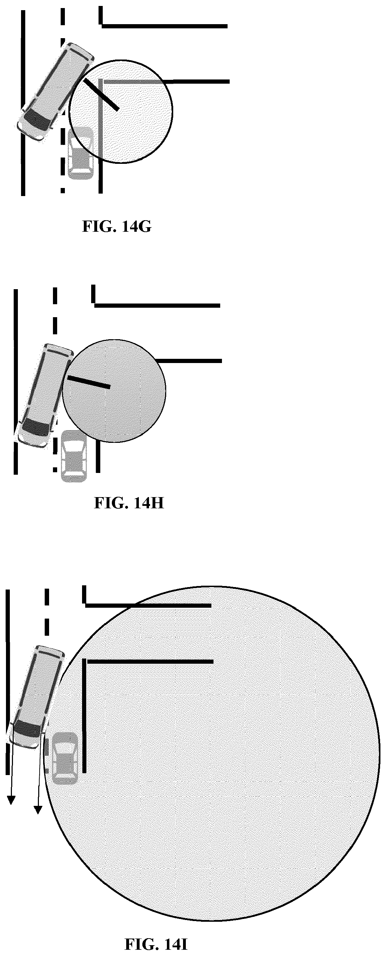

FIG. 14G and FIG. 14H shows the safe area for the autonomous vehicle for maximum steering angle while the large vehicle is taking a turn according to an embodiment. The bus keeps turning, and the radius and steering wheel angle are approximately constant, therefore the bus is turning tangent to the circle. The center point of the circle is not moving; however, the line is moving because the starting point is the rear wheel. The bus keeps turning until it is well into the lane.

FIG. 14I shows the safe area for the autonomous vehicle for decreasing steering angle while the large vehicle is incorporated into the lane according to an embodiment. The large vehicle decreases its steering angle. The radius increases again until the bus is completely incorporated into the lane.

autonomous vehicle sensors and communication modules include RADAR, LiDAR, ultrasonic sensors, global navigation satellite system (GNSS), and camera. The vehicle may be an autonomous vehicle. In an embodiment, the vehicle does not have to be with other autonomous vehicles, however, the vehicles may need to have vehicle to vehicle communication.

The invention addresses challenges faced when very large, long vehicles make a left turn. In such a scenario, the turning vehicle may not be aware of oncoming traffic, and if a vehicle approaches the intersection from the right (as shown in FIG. 3B), the large vehicle may obstruct the vehicle and there may be a risk of the large vehicle colliding with the car, scraping the car, or getting stuck while trying to avoid the car. There may also be a risk of hitting other vehicles in adjacent lanes. There are many possible impact zones when a large vehicle is making a left turn, or even a right turn. In an embodiment, the large vehicle will, while making a left turn, jam up the traffic behind it. In an embodiment, the sensors in the vehicle predict whether this vehicle is going to impact while turning. According to an embodiment, if it may cause an impact or may cause an obstruction, the autonomous vehicle is going to start adjusting its location. It may start communicating to the other neighboring vehicles that either the autonomous vehicle may go forward or backward within the lane based on the presence of the other vehicles in the lane. If the autonomous vehicle may move forward or backward it will execute the maneuver. But if the autonomous vehicle cannot, because there is a vehicle in front of it or vehicle behind it on the side, then the autonomous vehicle lets the larger vehicle know. In such a scenario, the larger vehicle may not try to turn because it may hit a vehicle while turning. According to an embodiment, the large vehicle may be a bus, a semitrailer, etc.

In an embodiment, the autonomous vehicle may be monitoring all of the vehicle's communication that it is communicating with. The autonomous vehicle may predict that the large vehicle may come in contact with any of the vehicles neighboring the autonomous vehicle. The autonomous vehicle may adjust its position in coordination with nearby vehicles such that the large vehicle will go through without hitting either the autonomous vehicle or any other car/vehicle that might be nearby the autonomous vehicle.

As the autonomous vehicle approaches the intersection, it starts monitoring other vehicles within the vicinity, within an area that other vehicles could end up in that intersection, that may come into contact with it, because of the size of the vehicles or because of the congestion at the intersection. And once it makes the decision that there is a possibility of a vehicle external to it that could come into its contact or impact zone, the autonomous vehicle will adjust its location.

In another embodiment, the autonomous vehicle monitors the traffic around it to determine whether, based on its location, the traffic around the autonomous vehicle, the geometry of the intersection, and the predicted trajectory of the large vehicle, the autonomous vehicle predicts a collision with the large vehicle. The autonomous vehicle will warn the larger vehicle by communicating that the large vehicle needs to make an adjustment, because the autonomous vehicle cannot adjust its location due to the vehicles around it. The autonomous vehicle may also contact the vehicles next to it or the larger vehicle itself depending on the traffic scenario around.

In another embodiment, the larger vehicle is going to broadcast to vehicles around it indicating that it is approaching the intersection and it is going to make a turn. In an embodiment, the large vehicle may broadcast its expected turn radius to the vehicles approaching the intersection. It may further instruct the vehicles approaching the intersection to stop at a predetermined distance, say 10 feet, before the intersection area so as to provide enough room for the large vehicle to turn and not come in contact with any vehicle while turning.

In an embodiment, the autonomous vehicle will make the decision on what it needs to do. In another embodiment, the autonomous vehicle broadcasts to other vehicles to avoid the contact of a large vehicle by letting the nearby vehicles know that they are close to, or within, the impact zone. In an embodiment, the autonomous vehicle will communicate with a larger vehicle to let it know that it may impact the vehicle or vehicles when it takes a turn.

In another embodiment, the larger vehicle, when it approaches an intersection, it starts broadcasting that it will make a left turn, and it needs a clear area of a predetermined distance, say 20 feet. Information that may be transmitted or is accepted by the autonomous vehicle is going to be used to determine what the turning radius is going to be, what is the impact zone, and what the autonomous vehicle needs to do to stay clear based on its current location. In order to remain clear or to avoid the impact zone, the autonomous vehicle starts to make adjustments to make sure the impact zone area is cleared.

In an embodiment, the target vehicle may be a normal passenger vehicle or a normal sized vehicle with additional attachments. In an embodiment the large vehicle may be a vehicle with V2V communication. In another embodiment, the large vehicle may be an autonomous vehicle.

In an embodiment, the target vehicle may transmit its length, any attachments, and their sizes it is carrying. The target vehicle may then communicate with all the vehicles around it. In an embodiment, the length of the vehicle is determined via scanning sensors, cameras, and radars.

In an embodiment, the large vehicle may be a normal vehicle carrying items behind it. Though it is a normal size vehicle, towing a vehicle or a boat classifies the vehicle as a large vehicle.

The descriptions of the one or more embodiments are for purposes of illustration but are not exhaustive or limiting to the embodiments described herein. Many modifications and variations will be apparent to those of ordinary skill in the art without departing from the scope and spirit of the described embodiments. The terminology used herein best explains the principles of the embodiments, the practical application and/or technical improvement over technologies found in the marketplace, and/or to enable others of ordinary skill in the art to understand the embodiments described herein.

Various non-limiting aspects of various embodiments described herein are presented in the following clauses.
1. A system, comprising:
   a processor, a computer vision module, and a control module;
   wherein the system is operable to:
   detect, by the processor, an intersection, and a target vehicle near the intersection;
   determine, by the processor, a current location of a host vehicle and a current location of the target vehicle;
   detect, by the computer vision module, a target turn lane;
   estimate, by the processor via the computer vision module, parameters of the target vehicle, wherein the parameters of the target vehicle comprise a vehicle type, a vehicle model, a steering angle, and a turn radius;
   predict, by the processor, a trajectory of motion of the target vehicle;
   determine, by the processor, a boundary for an impact zone by the host vehicle; and
   determine, by the processor, a collision avoidance action to avoid the impact zone.
2. The system of clause 1, wherein the system is operable to be a component of the host vehicle, and wherein the host vehicle is an autonomous vehicle.
3. The system of clause 1, wherein the target vehicle is a large vehicle.
4. The system of clause 1, wherein the target vehicle comprises one of a semitrailer, a bus, an SUV, a tow vehicle, a truck, a recreation vehicle, a trailer, and a heavy construction equipment.
5. The system of clause 1, wherein the system is configured to detect, via the computer vision module, a license plate number of the target vehicle.
6. The system of clause 1, wherein the system is configured to autonomously execute, by the control module, the collision avoidance action.
7. The system of clause 1, wherein the intersection is detected by detecting a traffic light.
8. The system of clause 7, wherein the traffic light is detected by at least one of a video camera of the computer vision module of the host vehicle, and by Vehicle-to-Infrastructure (V2I) communication.
9. The system of clause 1, wherein the current location of the target vehicle is determined in real-time via the computer vision module comprising a camera, a lidar, a GPS, a radar, of the host vehicle.
10. The system of clause 1, wherein the system is further operable to detect neighboring vehicles and neighboring lanes.
11. The system of clause 10, wherein the neighboring vehicles and the neighboring lanes are detected via the computer vision module comprising a radar, a lidar, a camera, a GPS, and an artificial intelligence engine comprising a machine learning algorithm.
12. The system of clause 1, wherein a lane next to the host vehicle is detected via the computer vision module comprising a radar, a lidar, a camera, a GPS, and an artificial intelligence engine comprising a machine learning algorithm.
13. The system of clause 1, wherein the current location of the host vehicle and the current location of the target vehicle are detected using a GPS of global navigation satellite system.
14. The system of clause 1, wherein the target turn lane is a left turn lane of the target vehicle.
15. The system of clause 1, wherein the target turn lane is detected by detecting a turn signal on the target vehicle via the computer vision module.
16. The system of clause 1, wherein the target turn lane into which the target vehicle is merging is detected by face detection and a gaze direction of a driver of the target vehicle using a face detection algorithm.
17. The system of clause 16, wherein a camera is operable to capture an image of the driver of the target vehicle.
18. The system of clause 17, wherein the image of the driver is analyzed using a computer vision algorithm comprising pattern recognition techniques to detect a human, and facial features of the human for at least one of an eye, a nose, a mouth, and an outline of a face, an ear, a hair.
19. The system of clause 1, wherein the target turn lane is detected by detecting a gaze direction of a driver of the target vehicle via the computer vision module.
20. The system of clause 1, wherein the target turn lane is detected by the host vehicle via the computer vision module by tracking a position and a movement of the target vehicle over time.
21. The system of clause 1, wherein the target turn lane is detected by the host vehicle via a sensor by detecting a speed and a direction of movement of the target vehicle, wherein the sensor is at least one of a radar and a lidar.
22. The system of clause 1, wherein the trajectory of motion of the target vehicle is predicted with a deterministic motion model.
23. The system of clause 1, wherein the vehicle type is determined from a license plate number of the target vehicle by referencing a database.
24. The system of clause 1, wherein the vehicle type and the vehicle model are detected by the computer vision module comprising an artificial intelligence engine comprising a machine learning algorithm.
25. The system of clause 24, wherein the machine learning algorithm is at least one of a Region-based Convolutional Neural Networks (R-CNN), RetinaNet, You Only Look Once (YOLO), and Single Shot Multibox Detector (SSD).
26. The system of clause 1, wherein the parameters of the target vehicle further comprise a dimension, a velocity, an acceleration, a yaw rate, and an orientation of the target vehicle.
27. The system of clause 1, wherein estimating the parameters of the target vehicle is via the computer vision module comprising a camera, a lidar, a GPS, a radar, and an artificial intelligence engine comprising a machine learning algorithm.
28. The system of clause 1, wherein the host vehicle is configured to continuously update the boundary for the impact zone as the target vehicle starts moving.
29. The system of clause 1, wherein the boundary traces at least one of an open region and a closed region, wherein the boundary separates a region around the host vehicle into a safe zone and the impact zone.
30. The system of clause 1, wherein the host vehicle establishes a communication via a communication module with the target vehicle to obtain the steering angle, a weight, and the turn radius of the target vehicle.
31. The system of clause 30, wherein the communication between the host vehicle and the target vehicle is via a Vehicle-to-Vehicle (V2V) communication.
32. The system of clause 31, wherein the V2V communication is based on a wireless communication protocol using at least one of a Dedicated Short-Range Communications (DSRC), and a Cellular Vehicle-to-Everything (C-V2X) technology.
33. The system of clause 30, wherein the communication between the host vehicle and the target vehicle is via an internet connection.
34. The system of clause 1, wherein the host vehicle computes the turn radius using a computational model based on the steering angle.
35. The system of clause 1, wherein the host vehicle is operable to obtain the turn radius using a simulation model based on the steering angle.
36. The system of clause 1, wherein the host vehicle is operable to compute a minimum turning radius of the intersection.
37. The system of clause 36, wherein the minimum turning radius of the intersection is communicated by the host vehicle to the target vehicle.
38. The system of clause 1, wherein the host vehicle via the computer vision module extracts a lower edge along a length of the target vehicle using a bounding box algorithm; and the boundary of the impact zone is computed based on the turn radius mapped from the lower edge along the length of the target vehicle on a side that is facing the host vehicle, the steering angle, a velocity, and an acceleration of the target vehicle, wherein the velocity and the acceleration are estimated by the host vehicle.
39. The system of clause 38, wherein the bounding box algorithm is used in conjunction with a machine learning algorithm for object detection, wherein the machine learning algorithm is a convolutional neural network (CNN).
40. The system of clause 1, wherein the host vehicle is operable to detect a change in a velocity, an acceleration, and the steering angle of the target vehicle and updates in real-time the boundary of the impact zone.
41. The system of clause 1, wherein the host vehicle is operable to establish a communication with the target vehicle to obtain the steering angle, a velocity, an acceleration, and updates in real-time the boundary of the impact zone as the target vehicle is moving.
42. The system of clause 1, wherein the host vehicle is operable to establish a communication with the target vehicle and continuously updates the boundary for the impact zone as the target vehicle is moving to incorporate into the target turn lane.
43. The system of clause 1, wherein the host vehicle establishes a communication with the target vehicle and requests an adjustment in a motion trajectory while incorporating into the target turn lane.
44. The system of clause 43, wherein the adjustment comprises at least one of the steering angle, a steering rate, a velocity, and an acceleration.
45. The system of clause 1, wherein the host vehicle establishes a communication with a neighboring vehicle and provides the boundary of the impact zone of the target vehicle incorporating into the target turn lane.
46. The system of clause 1, wherein the collision avoidance action comprises generating an alert in the host vehicle, wherein the alert is at least one of a text message, a visual cue, a sound alert, a tactile cue, and a vibration.
47. The system of clause 1, wherein the collision avoidance action comprises at least one of initiating a reverse movement by the host vehicle; and initiating a lane change by the host vehicle.
48. The system of clause 1, wherein the collision avoidance action comprises broadcasting, a message to a neighboring vehicle, wherein the message comprises an instruction of a maneuver for the neighboring vehicle for clearing the impact zone using a collective and coordinated action.
49. The system of clause 1, wherein the collision avoidance action comprises alerting the target vehicle about an impending collision.
50. The system of clause 1, wherein the collision avoidance action comprises at least one of:
   generating an alert in the host vehicle;
   initiating a reverse movement by the host vehicle;
   initiating a lane change by the host vehicle;
   alerting the target vehicle, the boundary of the impact zone; and
   broadcasting, a message to a neighboring vehicle, wherein the message comprises an instruction of a maneuver for the neighboring vehicle for clearing the impact zone using a collective and coordinated action.
51. The system of clause 1, wherein the collision avoidance action is determined and executed in real-time until the target vehicle safely turns into the target turn lane.
52. The system of clause 1, wherein the collision avoidance action is determined via the computer vision module comprising an artificial intelligence engine comprising a machine learning algorithm.
53. A method comprising:
   detecting, by a processor of a host vehicle, an intersection, and a target vehicle near the intersection;
   determining, by the processor, a current location of the host vehicle and the current location of the target vehicle;
   detecting, by a computer vision module, a target turn lane;
   estimating, by the processor, parameters of the target vehicle, wherein the parameters of the target vehicle comprise a vehicle type, a vehicle model, a steering angle, and a turn radius;
   predicting, by the processor, a trajectory of motion of the target vehicle;
   determining, by the processor, a boundary for an impact zone to avoid; and
   determining, by the processor, a collision avoidance action to avoid the impact zone.
54. The method of clause 53, wherein the method is operable to be a component of the host vehicle, and wherein the host vehicle is an autonomous vehicle.
55. The method of clause 53, wherein the method is further configured to detect, via the computer vision module, a license plate number of the target vehicle.
56. The method of clause 53, wherein the method is further configured to autonomously execute, by a control module, the collision avoidance action by the host vehicle.
57. A non-transitory computer-readable medium having stored thereon instructions executable by a computer system to perform operations comprising:
   detecting, by a processor of a host vehicle, an intersection, and a target vehicle near the intersection;
   determining, by the processor, a current location of the host vehicle and the current location of the target vehicle;
   detecting, by a computer vision module, a target turn lane;
   estimating, by the processor, parameters of the target vehicle, wherein the parameters of the target vehicle comprise a vehicle type, a vehicle model, a steering angle, and a turn radius;
   predicting, by the processor, a trajectory of motion of the target vehicle;
   determining, by the processor, a boundary for an impact zone to avoid; and
   determining, by the processor, a collision avoidance action to avoid the impact zone.
58. The non-transitory computer-readable medium of clause 57, wherein the host vehicle is an autonomous vehicle.
59. The non-transitory computer-readable medium of clause 57, wherein the non-transitory computer-readable medium is further configured to detect, via the computer vision module, a license plate number of the target vehicle.
60. The non-transitory computer-readable medium of clause 57, wherein the non-transitory computer-readable medium is further configured to autonomously execute, by a control module, the collision avoidance action by the host vehicle.
61. A system, comprising:
   a processor, a computer vision module, a control module, and a communication module;
   wherein the system is operable to:
      detect, by the processor, a target vehicle nearing an intersection;
      detect, by a computer vision system, a target turn lane;
      establish, by the processor, a communication via the communication module with the target vehicle;
      receive, by the processor, parameters of the target vehicle, wherein the parameters of the target vehicle comprise a vehicle type, a vehicle model, a steering angle, and a turn radius;
      determine, by the processor, a current location of a host vehicle and the current location of the target vehicle;
      predict, by the processor, a trajectory of motion of the target vehicle;
      determine, by the processor, a boundary for an impact zone to avoid by the host vehicle; and
      determine, by the processor, a collision avoidance action for the host vehicle to avoid the impact zone.
62. The system of clause 61, wherein the system is operable to be a component of the host vehicle, and wherein the host vehicle is an autonomous vehicle.
63. The system of clause 61, wherein the system is further configured to autonomously execute, by the control module, the collision avoidance action.
64. The system of clause 61, wherein the system is operable to be a component of the host vehicle.
65. The system of clause 61, wherein the host vehicle updates the boundary for the impact zone in real-time as the target vehicle starts moving.
66. The system of clause 61, wherein the communication between the host vehicle and the target vehicle is via a Vehicle-to-Vehicle (V2V) communication.
67. The system of clause 66, wherein the Vehicle-to-Vehicle (V2V) communication is based on a wireless communication protocol using at least one of a Dedicated Short-Range Communications (DSRC), and a Cellular Vehicle-to-Everything (C-V2X) technology.
68. The system of clause 61, wherein the collision avoidance action comprises generating an alert in the host vehicle, wherein the alert is at least one of a text message, a visual cue, a sound alert, a tactile cue, and a vibration.
69. The system of clause 61, wherein the collision avoidance action comprises at least one of initiating a reverse movement by the host vehicle; and initiating a lane change by the host vehicle.
70. The system of clause 61, wherein the collision avoidance action comprises broadcasting, a message to a neighboring vehicle, wherein the message comprises an instruction of a maneuver for the neighboring vehicle for clearing the impact zone using a collective and coordinated action.
71. The system of clause 61, wherein the collision avoidance action comprises alerting the target vehicle about an impending collision.
72. The system of clause 61, wherein the collision avoidance action comprises at least one of:
   generating an alert in the host vehicle;
   initiating a reverse movement by the host vehicle;
   initiating a lane change by the host vehicle;
   alerting the target vehicle, the boundary for the impact zone; and
   broadcasting, a message to a neighboring vehicle, wherein the message comprises an instruction of a maneuver for the neighboring vehicle for clearing the impact zone using a collective and coordinated action.
73. A method comprising:
   detecting, by a processor, a target vehicle nearing an intersection;
   detecting, by a computer vision module, a target turn lane;
   establishing, by the processor, a communication via a communication module with the target vehicle;
   receiving, by the processor, parameters of the target vehicle, wherein the parameters of the target vehicle comprise a vehicle type, a vehicle model, a steering angle, and a turn radius;
   determining, by the processor, a current location of a host vehicle and the current location of the target vehicle;
   predicting a trajectory of motion of the target vehicle, by the processor;
   determining, by the processor, a boundary for an impact zone by the host vehicle; and
   determining, by the processor, a collision avoidance action for the host vehicle to avoid the impact zone.
74. The method of clause 73, wherein the method is operable to be a component of the host vehicle, and wherein the host vehicle is an autonomous vehicle.
75. The method of clause 73, wherein the method is further configured to autonomously execute, by a control module, the collision avoidance action.
76. A method comprising:
   detecting, by a processor of an autonomous vehicle, a large vehicle nearing an intersection;
   establishing, by the processor of the autonomous vehicle, a communication with the large vehicle;
   receiving, by the processor of the autonomous vehicle, a model number, a vehicle type, and a turning radius of the large vehicle in real-time;
   computing, by the processor of the autonomous vehicle, using a computer vision algorithm and based on the turning radius, an impact zone of the large vehicle while navigating a turn;
   determining, by the processor of the autonomous vehicle, a current location of the autonomous vehicle;
   mapping, by the processor of the autonomous vehicle, the current location of the autonomous vehicle and the impact zone to determine a probability of collision; and performing an action, by the processor of the autonomous vehicle, wherein the action comprises at least one of:
      generating an alert in the autonomous vehicle;
      initiating a first reverse movement by the autonomous vehicle;
      initiating a first lane change by the autonomous vehicle;
      maintaining the current location of the autonomous vehicle;
      alerting the large vehicle, the impact zone, the current location of the autonomous vehicle and the probability of collision; and
      broadcasting, a message to a neighboring vehicle, wherein the message comprises the impact zone, the probability of collision, and an instruction for the neighboring vehicle to at least one of a second lane change, maintaining lane, and a second reverse movement to clear the impact zone for a collective and coordinated action; and
   wherein the method is operable for predicting the impact zone for the large vehicle taking the turn and performing the action for avoiding a collision.

## Claims

1. A system (440), comprising:
a processor (442), a computer vision module (444), and a control module (446);
wherein the system (440) is operable to:
detect, by the processor (442), an intersection, and a target vehicle near the intersection (402);
determine, by the processor (442), a current location of a host vehicle and a current location of the target vehicle (404);
detect, by the computer vision module (444), a target turn lane (406);
estimate, by the processor (442) via the computer vision module(444), parameters of the target vehicle, wherein the parameters of the target vehicle comprise a vehicle type, a vehicle model, a steering angle, and a turn radius (408);
predict, by the processor (442), a trajectory of motion of the target vehicle (410);
determine, by the processor (442), a boundary for an impact zone by the host vehicle (412); and
determine, by the processor (442), a collision avoidance action to avoid the impact zone (414).

2. The system (440) of claim 1, wherein the system (440) is operable to be a component of the host vehicle and wherein the host vehicle is an autonomous vehicle configured to autonomously execute, by the control module (446), the collision avoidance action to avoid the impact zone.

3. The system (440) of claim 1, wherein the current location of the target vehicle is determined in real-time via the computer vision module comprising one or more of a camera, a lidar, a global positioning system, a radar, of the host vehicle.

4. The system (440) of claim 1, wherein the system (440) is further operable to detect neighboring vehicles and neighboring lanes.

5. The system (440) of claim 1, wherein the current location of the host vehicle and the current location of the target vehicle are detected using a global positioning system of global navigation satellite system.

6. The system (440) of claim 1, wherein the system (440) is further configured to detect, by the computer vision module, a license plate number of the target vehicle, and wherein the computer vision module comprises an artificial intelligence engine comprising a machine learning algorithm.

7. The system (440) of claim 1, wherein the trajectory of motion of the target vehicle is predicted with at least one of a deterministic motion model, a computational model, and a simulation model based on the steering angle and the turn radius.

8. The system (440) of claim 1, wherein the host vehicle is operable to establish a communication with the target vehicle to obtain one or more of the steering angle, a velocity, an acceleration, and updates in real-time about the boundary of the impact zone as the target vehicle is moving.

9. The system (440) of claim 1, wherein the collision avoidance action comprises at least one of initiating a reverse movement by the host vehicle; and initiating a lane change by the host vehicle.

10. The system (440) of claim 1, wherein the collision avoidance action comprises broadcasting, a message to a neighboring vehicle, wherein the message comprises an instruction of a maneuver for the neighboring vehicle for clearing the impact zone using a collective and coordinated action.

11. The system (440) of claim 1, wherein the collision avoidance action is determined via the computer vision module (444) comprising an artificial intelligence engine comprising a machine learning algorithm.

12. A method (700) comprising:
detecting, by a processor of a host vehicle, a target vehicle nearing an intersection (702);
detecting, by a computer vision module, a target turn lane (704);
establishing, by the processor, a communication via a communication module with the target vehicle (706);
receiving, by the processor, parameters of the target vehicle, wherein the parameters of the target vehicle comprise a vehicle type, a vehicle model, a steering angle, and a turn radius (708);
determining, by the processor, a current location of the host vehicle and the current location of the target vehicle (710);
predicting, by the processor, a trajectory of motion of the target vehicle (712);
determining, by the processor, a boundary for an impact zone (714); and
determining, by the processor, a collision avoidance action for the host vehicle to avoid the impact zone (714).

13. The method (700) of claim 12, wherein the host vehicle updates the boundary for the impact zone in real-time as the target vehicle starts moving.

14. The method (700) of claim 12, wherein the communication between the host vehicle and the target vehicle is via at least one of a Vehicle-to-Vehicle (V2V) communication and a network based communication, and wherein the Vehicle-to-Vehicle (V2V) communication is based on a wireless communication protocol using at least one of a Dedicated Short-Range Communications (DSRC), and a Cellular Vehicle-to-Everything (C-V2X) technology.

15. A non-transitory computer-readable medium (474) having stored thereon instructions executable by a computer system (471) to perform operations comprising:
detecting, by a processor (472) of a host vehicle, an intersection, and a target vehicle near the intersection (402);
determining, by the processor (472), a current location of the host vehicle and the current location of the target vehicle (404);
detecting, by a computer vision module, a target turn lane (406);
estimating, by the processor (472), parameters of the target vehicle, wherein the parameters of the target vehicle comprise a vehicle type, a vehicle model, a steering angle, and a turn radius (408);
predicting, by the processor (472), a trajectory of motion of the target vehicle (410);
determining, by the processor (472), a boundary for an impact zone (412); and
determining, by a control module, a collision avoidance action to avoid the impact zone (414).
